# EUROPEAN PATENT APPLICATION

(11) **EP 4 566 490 A1**
(43) Date of publication of application: **11.06.2025**
(21) Application number: 23850031.8
(22) Date of filing: 31.07.2023
(51) Int. Cl.: A47F 5/00, B65D 25/20, B65G 1/137, G06K 19/077, B65D 51/24, G06K 7/10, G06Q 10/087

(54) **ARTICLE MANAGEMENT SYSTEM, ARTICLE MANAGEMENT METHOD, AND ARTICLE DETECTION INSTRUMENT**

(30) Priority: 05.08.2022 JP 2022125201; 02.09.2022 JP 2022139623; 14.09.2022 JP 2022145977; 29.09.2022 JP 2022156634
(71) Applicant: Sato Holdings Kabushiki Kaisha, Tokyo 108-0023 (JP)
(72) Inventor: UEDA, Yoshiyuki, Tokyo 108-0023 (JP); SAKAGAMI, Mitsutoshi, Tokyo 108-0023 (JP); HIRATA, Kazuya, Tokyo 108-0023 (JP)
(74) Representative: Grünecker Patent- und Rechtsanwälte PartG mbB
(86) International application number: PCT/JP2023/027895
(87) International publication number: WO 2024/029476

(57) **Abstract**

An aspect of the present invention provides an item management system that detects presence or absence of an item and includes a swing member swingable between first and second positions, a torque generation member generating torque of swinging the swing member from the second position toward the first position, a communication device, a sheet-shaped radio wave shield member shielding a radio wave from the communication device when close to the communication device, a wireless device wirelessly communicating with the communication device, and a control device acquiring a result of whether the wireless device is able to communicate with the communication device, and determining, based on the result, whether the item is present on a reference surface. The communication device or the radio wave shield member is attached to the swing member. The communication device is not close to the radio wave shield member when the swing member is at the first position, and is close to the radio wave shield member when the swing member is at the second position.

## Description

### FIELD

The present invention relates to an item management system, an item management method, and an item detection instrument.

### BACKGROUND

A conventionally proposed item management system is one in which items are associated with wireless tags to manage stock of the items.

For example, Japanese Patent Application Laid-Open Publication No. 2009-242058 describes a stock management system that is constituted by IC tags, a reading device, and a movement device. The reading device reads signals from the IC tags attached to items placed on a shelf. Thereby, based on the read signals, the stock management system recognizes what items are placed on the shelf.

### BRIEF SUMMARY

### TECHNICAL PROBLEM

Incidentally, in a case of stock management and product supply at a store front in a retail store such as a supermarket, conventionally, a retail store staff in charge visually checks the number of displayed products, and supplies products, depending on necessity. This work has disadvantage of needing a staff and lacking accuracy. In a case of attempting stock management in a retail store by attaching an IC tag to each product as in the conventional stock management system, an IC tag needs to be attached to every product. As a result, the cost is undesirably increased.

In view of the above, an object of the present invention is to enable presence or absence of an item to be recognized without attaching a communication device to the item.

### SOLUTION TO PROBLEM

An aspect of the present invention provides an item management system that detects presence or absence of an item, including:
a swing member that is swingable, around a predetermined axis, between a first position and a second position, the swing member being located at the first position when the item is absent on a reference surface, the swing member being located at the second position when the item is present on the reference surface;
a torque generation member that generates torque of swinging the swing member from the second position toward the first position;
a communication device;
a sheet-shaped radio wave shield member configured to shield a radio wave emitted from the communication device when the radio wave shield member is close to the communication device;
a wireless device that wirelessly communicates with the communication device; and
a control device that acquires a result of whether the wireless device is able to communicate with the communication device, and determines, based on the result, whether the item is present on the reference surface.

One of the communication device and the radio wave shield member is attached to the swing member.

When the swing member is located at the first position, the communication device and the radio wave shield member are not close to each other. When the swing member is located at the second position, the communication device and the radio wave shield member are close to each other.

### ADVANTAGEOUS EFFECTS

According to an aspect of the present invention, presence or absence of an item can be recognized without attaching a communication device to the item.

### BRIEF DESCRIPTION OF DRAWINGS

FIG. 1 illustrates an arrangement example of product detection instruments according to one embodiment.
FIG. 2 includes perspective views of the product detection instrument illustrated in FIG. 1 with a cover and without the cover
FIG. 3 is a sectional view of the product detection instrument illustrated in FIG. 2.
FIG. 4 is a block diagram illustrating an internal configuration of each device in a product management system according to one embodiment.
FIG. 5 illustrates an example of a data configuration of a tag database.
FIG. 6 illustrates one example of an image displayed on a store terminal.
FIG. 7 is a sectional view of a product detection instrument according to one embodiment.
FIG. 8 is a sectional view of a product detection instrument according to one embodiment.
FIG. 9 is a sectional view of a product detection instrument according to one embodiment.
FIG. 10 is an exploded perspective view of a product detection instrument according to one embodiment.
FIG. 11 includes a plan view and a sectional view of the product detection instrument illustrated in FIG. 10.
FIG. 12 illustrates an arrangement example of a product detection instrument according to one embodiment.
FIG. 13 includes a side view and an arrow view of the product detection instrument illustrated in FIG. 12.
FIG. 14 is a side view of the product detection instrument illustrated in FIG. 12.
FIG. 15 is a side view of the product detection instrument according to the one embodiment.
FIG. 16 is a perspective view of a product detection tool illustrated in FIG. 15.
FIG. 17 illustrates an application example of a product management system according to one embodiment.
FIG. 18 is a side view of a product illustrated in FIG. 17.
FIG. 19 is an exploded perspective view of a reverse detection tool incorporated in a cover.
FIG. 20 includes sectional views of the reverse detection tool illustrated in FIG. 19 in a normal state and an reversed state.
FIG. 21 is a block diagram illustrating an internal configuration of each device in the product management system according to the one embodiment.
FIG. 22 illustrates an example of a data configuration of a tag database.
FIG. 23 illustrates an application example of a product management system according to one embodiment.
FIG. 24 is an exploded perspective view of an item according to one embodiment.
FIG. 25 is a block diagram illustrating an internal configuration of each device in the product management system according to the one embodiment.
FIG. 26 illustrates an application example of a product management system according to one embodiment.
FIG. 27 is an exploded perspective view of a detection tool according to one embodiment.
FIG. 28 includes a plan view, a front view, and an A-A sectional view of a movable member of the detection tool according to the one embodiment.
FIG. 29 illustrates states depending on the number of stacked items in the detection tool.
FIG. 30 illustrates an example of a data configuration of a remaining number table.
FIG. 31 is a block diagram illustrating an internal configuration of each device in the product management system according to the one embodiment.
FIG. 32 illustrates an example of a data configuration of a tag database.
FIG. 33 is a perspective view of a detection tool according to another embodiment.
FIG. 34 is a perspective view of a detection tool including an accommodation case.
FIG. 35 illustrates an application example of a product management system including a detection tool that does not have a pillar-shaped member.
FIG. 36 includes a side view and a rear view of the detection tool illustrated in FIG. 35.

### DETAILED DESCRIPTION

The following will describe one embodiment of an item management system, an item management method, and an item detection instrument according to the present invention.

A first aspect of the present invention provides an item management system that detects presence or absence of an item. In the present disclosure, "item" means a tangible object such as a product, a manufactured item, a semi-manufactured item (an item at an intermediate stage in course of being manufactured), or a mock-up.

The item management system includes the following elements (E1) to (E6).
(E1) A swing member that is swingable, around a predetermined axis, between a first position and a second position. The swing member is located at the first position when the item is absent on a reference surface. The swing member is located at the second position when the item is present on the reference surface.
(E2) A torque generation member that generates torque of swinging the swing member from the second position toward the first position.
(E3) A communication device.
(E4) A sheet-shaped radio wave shield member configured to shield a radio wave emitted from the communication device when the radio wave shield member is close to the communication device.
(E5) A wireless device that wirelessly communicates with the communication device.
(E6) A control device that acquires a result of whether the wireless device is able to communicate with the communication device, and determines, based on the result, whether the item is present on the reference surface.

Here, one of the communication device and the radio wave shield member is attached to the swing member. When the swing member is located at the first position, the communication device and the radio wave shield member are not close to each other. When the swing member is located at the second position, the communication device and the radio wave shield member are close to each other. Thereby, presence or absence of the item can be recognized without attaching a communication device to the item.

The radio wave shield member may be a member that changes a frequency of a radio wave emitted from the communication device to an unintended frequency at which the communication with the wireless device is impossible. The radio wave shield member may be a member that superimposes noise on a radio wave emitted from the communication device, in such a way as to inhibit communication with the wireless device.

According to a second aspect of the present invention, in the first aspect, the swing member includes an elongated main body to which the axis is coupled, and a protrusion. The protrusion is attached to the main body. The protrusion protrudes from the reference surface upward in the vertical direction when the swing member is located at the first position.

When the item is placed on the reference surface, the protrusion is pushed down to the reference surface. Thereby, the swing member swings up to the second position.

According to this aspect, an own weight of the item arranged on the reference surface pushes down the swing member as far as the reference surface. Thereby, communication between the communication device and the wireless device is blocked. Thus, the use in an item shelf in a store or the like can be widely made.

According to a third aspect of the present invention, in the second aspect, one of the communication device and the radio wave shield member is attached to the main body of the swing member.

According to a fourth aspect of the present invention, in the second aspect, one of the communication device and the radio wave shield member is attached to the protrusion of the swing member. Thereby, the swing member can be made smaller in size.

According to a fifth aspect of the present invention, in any one of the second to fourth aspects, the protrusion includes a curved surface that is convex upward in the vertical direction. Providing the curved surface allows the protrusion to be smoothly pushed down when the item is placed on an item detection instrument by sliding the item on the item detection instrument. Thus, the protrusion is not easily broken.

According to a sixth aspect of the present invention, in the first aspect, an item placement member is provided. The item placement member is formed so that the reference surface is inclined relative to a horizontal plane or a vertical plane.

The item placement member includes a restriction plate standing and extending from the reference surface. The restriction plate restricts the item from moving due to an own weight of the item when the item is present on the reference surface. The other of the communication device and the radio wave shield member is attached to the restriction plate. When the item is present on the reference surface, the swing member swings up to the second position, with movement of the item toward the restriction plate, so that a part of the swing member becomes close to the restriction plate.

According to this aspect, for example, when a store or the like uses, as the item placement member, an item shelf that is inclined from a horizontal plane, it can be determined whether an item remains on the item shelf. Thus, the store can supply an item to the item shelf at an appropriate timing.

According to a seventh aspect of the present invention, in any one of the first to sixth aspects, the torque generation member includes a weight provided at the swing member. Using the weight enables necessary torque to be generated with a simple structure.

According to an eighth aspect of the present invention, in any one of the first to sixth aspects, the torque generation member includes a torsion spring provided between the axis and the swing member. Using the torsion spring enables necessary torque to be generated without significantly increasing the weight.

According to a ninth aspect of the present invention, in any one of the first to eighth aspects, a reference communication device is further provided. The reference communication device is arranged at a position where a radio wave is not shielded by the radio wave shield member regardless of whether the item is present on the reference surface. The wireless device communicates with the reference communication device. The control device acquires a result of whether the wireless device is able to communicate with the reference communication device. It can be determined whether the system is operating normally, by providing the reference communication device that can communicate with the wireless device regardless of whether the item is present on the item detection instrument.

According to a tenth aspect of the present invention, in any one of the first to ninth aspects, the communication device is a wireless tag. The wireless tag collects surrounding radio waves and converts the collected radio waves into electric power. The wireless tag includes a capacitor storing the electric power. Such a wireless tag is preferable from a standpoint of being usable for a long term without maintenance.

According to an eleventh aspect of the present invention, in any one of the first to ninth aspects, the communication device is a UHF-band wireless tag. Such a wireless tag is preferable from a standpoint of being widely available.

According to a twelfth aspect of the present invention, in any one of the first to ninth aspects, the communication device is an HF-band wireless tag. Such a wireless tag is preferable from a standpoint of being widely available.

According to a thirteenth aspect of the present invention, in any one of the first to ninth aspects, the communication device is a microwave-band wireless tag. Such a wireless tag is preferable from a standpoint of being widely available.

According to a fourteenth aspect of the present invention, in any one of the first to thirteenth aspects, an item detection instrument includes the swing member, the torque generation member, the communication device, and the radio wave shield member. A plurality of the item detection instruments are arranged in a matrix. Thereby, presence or absence of the item for each of a plurality of the item detection instruments arranged in a matrix can be detected simultaneously.

According to a fifteenth aspect of the present invention, in the fourteenth aspect, the control device acquires a result of whether the wireless device is able to communicate with the communication device, for each of a plurality of the item detection instruments. Based on the result, the control device determines whether the item is present on the reference surface at each of a plurality of the item detection instruments. Thus, by referring to position information of arrangement of each of a plurality of the item detection instruments, the control device causes a display device to display information of whether the item is present on the reference surface at each of a plurality of the item detection instrument, in a matrix to be associated with the position information of a plurality of the item detection instruments. Thereby, it can be visually recognized whether the item is present at each of a plurality of the item detection instruments arranged in a matrix.

The following will describe embodiments with reference to the drawings.

One example of an item cited in the following description is a selling-target product in a store. The product is not particularly limited. Examples of the applicable product widely include a box-shaped product such as a powder detergent, and a bottle-shaped product such as a laundry softener, a liquid detergent, a shampoo, or a conditioner. The applicable product may be also a container containing a beverage.

### (1) First Embodiment

A product management system according to one embodiment is configured in such a way that when products are arranged at a store front, a store staff in charge can recognize how many products remain unsold and where these unsold products are present, even though the store staff in charge is not at the site.

A product detection instrument (one example of the item detection instrument) is used in order to detect whether the product is present (remains). In one embodiment, the one product detection instrument is used for the single product. The product is set for sale in a state where the product is placed on this product detection instrument. When a customer acquires (purchases) the product, the product is removed from the product detection instrument. Whether the product is placed on the product detection instrument is detected by each of the product detection instruments. Thereby, an unsold state of the products at the store front can be determined. Thus, the system can be configured to notify, at an appropriate timing, the store staff in charge of whether products need to be supplied.

The product detection instrument according to the one embodiment includes a communication device. A wireless device for communicating with the communication device is arranged within a communicable range of the communication device.

The product detection instrument is configured as follows. When the product is placed on the product detection instrument, a position of the communication device is displaced in response to a weight of the product. Thereby, the product detection instrument prevents the communication device from emitting a radio wave, or enables communication of the communication device. Thus, it can be determined whether the product is present on the product detection instrument, based on whether the wireless device can receive a signal from the communication device provided at the product detection instrument.

In the product management system according to the one embodiment, when the wireless device can communicate with the communication device, the wireless device receives identification information (e.g., a tag ID described below) identifying the communication device, and notifies a server of the received identification information via a network. Thereby, the server can determine that the product is not placed on the product detection instrument provided with the communication device associated with the identification information. Even when a plurality of the products of the same product code are arranged in a matrix, the server can individually recognize whether the product is present, for each of the products. Thus, the server can provide, to a store staff in charge, visually recognizable information of positions of the already-sold products and the unsold products.

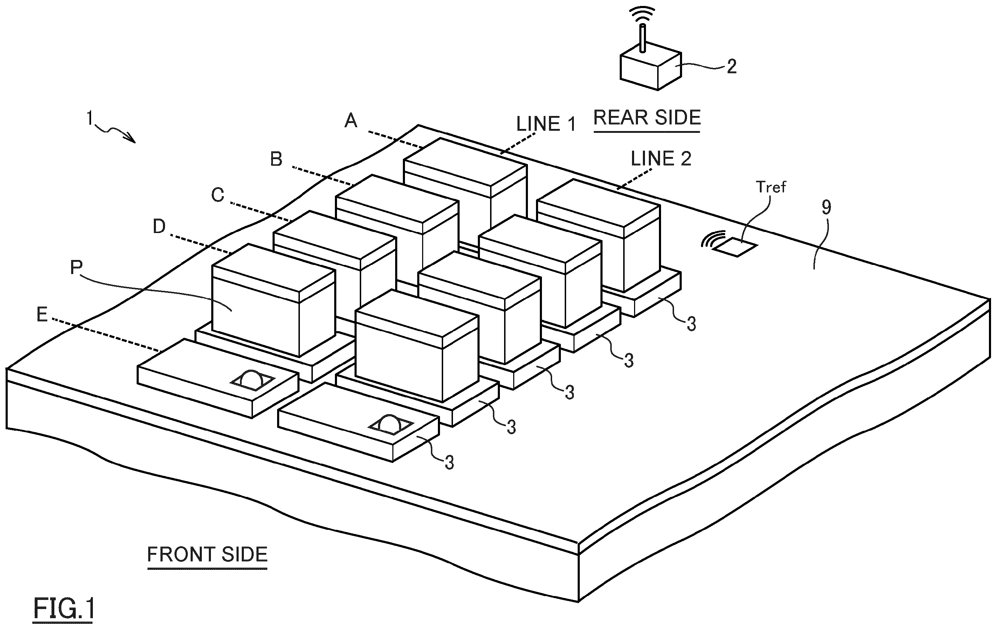

FIG. 1 illustrates one example of the products P and a plurality of the product detection instruments 3 in a state where the products P are arranged in a matrix in the store.

In the example illustrated in FIG. 1, a plurality of the products P is arranged on a product shelf located between a front passage and a rear passage. In a configuration of this example, the ten products P can be arranged in two lines and in five rows. When the lines are represented by 1 and 2, and the rows are represented by A to E, the products P can be placed at ten positions A1, A2, B1, B2, C1, C2, D1, D2, E1, and E2. In the example illustrated in FIG. 1, the ten product detection instruments 3 are provided in 2×5 arrangement, in association with the arrangement of the products P.

In a state of the example illustrated in FIG. 1, the products P at the positions E1 and E2 have been sold and is absent, and the other eight products P remain unsold and is still present.

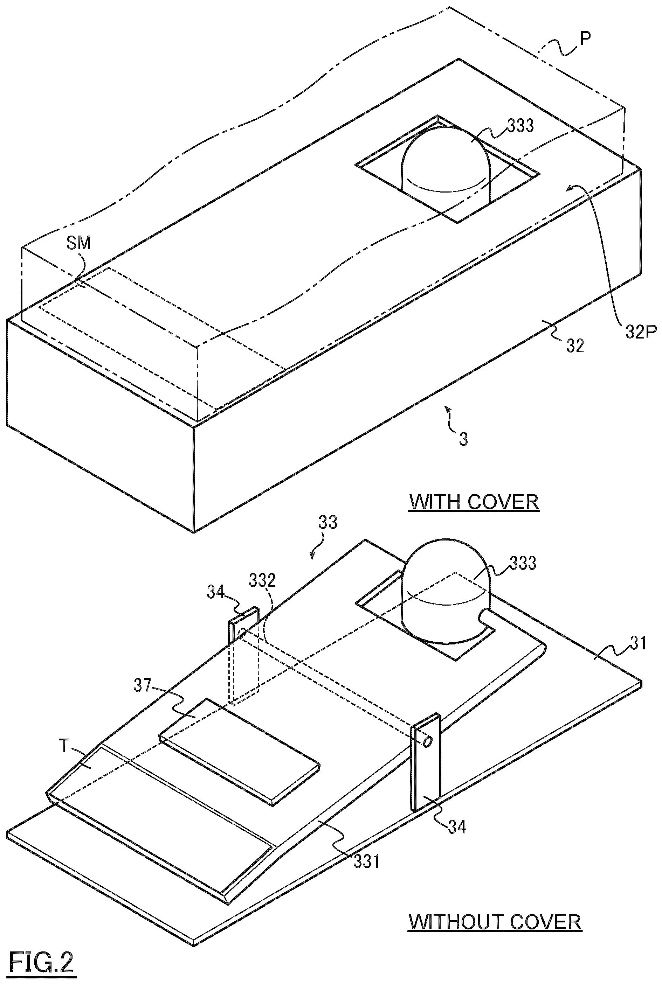

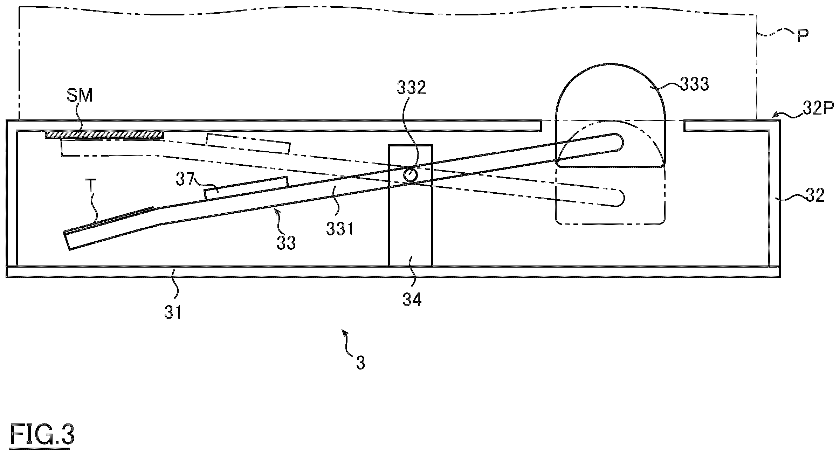

Next, a structure of the product detection instrument 3 will be described with reference to FIG. 2 and FIG. 3. The product detection instrument 3 is an instrument for detecting whether the arranged product P is present at the associated position. FIG. 2 includes perspective views illustrating the item detection instrument 3 with a cover and without the cover (in a state where the cover is removed). FIG. 3 is a sectional view of the product detection instrument 3. FIG. 3 illustrates, with the solid lines, a state where the product P is present on the product detection instrument 3, and illustrates, with the imaginary lines, a state where the product P is absent on the product detection instrument 3.

As illustrated in FIG. 2, the product detection instrument 3 in one embodiment includes a base 31, the cover 32, a swing member 33, supports 34, and a weight 37. The base 31, the cover 32, the swing member 33, and the supports 34 are formed of resin such as plastic, wood, or paper, for example, but there is no limitation to these.

As illustrated in FIG. 2, the product detection instrument 3 has a rectangular-parallelepiped shape having six surfaces formed by the base 31 and the cover 32. The upper surface 32P of the cover 32 is one example of the reference surface concerning placement of the product. In the following, presence of the product P on the product detection instrument 3 means that the product P is present on the upper surface 32P of the cover 32.

As illustrated in FIG. 3, in a state where the product is absent on the product detection instrument 3, a protrusion 333 protrudes upward from the upper surface 32P.

As illustrated in FIG. 2, the swing member 33 includes an elongated main body 331 and the protrusion 333. A shaft 332 is coupled to the main body 331. The protrusion 333 is attached to the main body 331. The protrusion 333 protrudes from the upper surface 32P upward in the vertical direction when the swing member 33 is located at a first position. The protrusion 333 is attached to one elongation-direction end of the main body 331.

Preferably, the protrusion 333 includes a curved surface that is convex upward in the vertical direction. Providing the convex curved surface allows the protrusion 333 to be smoothly pushed down when the product P is arranged on the product detection instrument 3 in the store by sliding the product on the upper surface 32P. Thus, the protrusion 333 is not easily broken.

The rectangular base 31 includes a pair of mutually opposite sides at which a pair of the supports 34 are provided for supporting both ends of the shaft 332. A pair of the supports 34 support the shaft 332 in such a way as to be rotatable around the axis of shaft 332. Thereby, the swing member 33 is allowed to swing around the axis of the shaft 332.

The swing member 33 is swingable, around the axis of the shaft 332, between the first position and a second position. The swing member 33 is located at the first position when the product P is absent on the upper surface 32P. The swing member 33 is located at the second position when the product P is present on the upper surface 32P. In FIG. 3, a position of the swing member 33 depicted by the solid line corresponds to the first position, and a position of the swing member 33 depicted by the imaginary line corresponds to the second position.

The weight 37 is bonded to the main body 331, on a side opposite to a side on which the protrusion 333 is attached, in such a way as to sandwich the shaft 332 between the weight 37 and the protrusion 333. The weight 37 is one example of the torque generation member that generates torque of swinging the swing member 33 from the second position toward the first position (i.e., swinging the swing member 33 counterclockwise in FIG. 3). In FIG. 3, the weight 37 may generate counterclockwise torque while canceling clockwise moment generated by an own weight of the protrusion 333. A size and a material of the weight 37 are not particularly limited. The weight 37 is preferably made of a metal material having a relatively large specific gravity, but is not limited to this, and may be made of a resin material or the like.

As illustrated in FIG. 2, an Internet-of-things (IoT) tag T (one example of the communication device) is attached to an elongation-direction opposite end (an end opposite to the end to which the protrusion 333 is attached) of an upper surface of the main body 331. The IoT tag is a wireless tag that collects surrounding radio waves and converts the collected radio waves into electric power, and that includes a capacitor storing the electric power. Such an IoT tag is preferable from a standpoint of being usable for a long term without maintenance.

Hereinafter, the IoT tag T is referred to simply as "tag T".

The maximum communication distance of the tag T is, but not limited to, a value in a range from 3 meters to 10 meters, for example. The tag T is configured to make wireless communication with low electric power consumption. Examples of a communication protocol for the tag T include Bluetooth (registered trademark) Low Energy (hereinafter, BLE), Bluetooth (registered trademark), and ZigBee (registered trademark). The following will describe an exemplified case where the communication is made by BLE.

When the tag T is based on the standard of BLE, the tag T broadcasts a packet at a predetermined interval (e.g., every short period in a range from approximately 1 second to approximately 10 seconds). The packet transmitted by the tag T includes the tag ID that is identification information of the tag.

Although not illustrated, the tag T includes a base material such as paper or a film, an antenna made of an electrically conductive material and formed on a surface of the base material, and an IC chip mounted on the base material. Depending on the application, another device may be mounted in addition to the IC chip.

A basic structure of the tag T is what is called a layered structure similar to that of an RFID inlay. A film (protection film) may be laminated on one surface or both surfaces of the layered structure to protect the tag T from external force. The protection film having a light-shielding property may be used to impart light resistance.

The layered structure of the tag T may include a specific film to change a communication distance, a frequency characteristic, or an energy harvesting ability of the tag T. For example, providing such a specific film only on one side of the base material causes a communication ability of the tag T to differ between a front and a back of the tag T. Thus, the directivity can be intentionally changed. An adhesive layer or double-sided tape may be provided on the one surface of the tag T to form the tag T as a label.

As illustrated in FIG. 1, the wireless device 2 for making BLE communication with the tag T is arranged near the product shelf 9. As described below, the wireless device 2 is a gateway device that can communicate with a tag management server (described below) via a network. The wireless device 2 is arranged at a position where the wireless device 2 can receive a packet transmitted from the tag T at the product detection instrument 3 when the product P is absent on the product detection instrument 3. In other words, the wireless device 2 is arranged by taking into consideration a radio wave output of the tag T.

An installation location of the wireless device 2 may be set to be arbitrary location around the product detection instrument 3.

As illustrated in FIG. 3, a radio wave shield member SM is bonded to a surface (back surface) that is included in the cover 32 and that is opposite to the upper surface 32P. The radio wave shield member SM is a sheet-shaped member that shields a radio wave emitted by the tag T when close to the tag T. A position at which the radio wave shield member SM is bonded is a position at which the radio wave shield member SM comes into contact with or becomes close to the tag T attached to the swing member 33 when the swing member 33 is located at the second position.

For example, a metal-deposited sheet can be used as the radio wave shield member SM. The metal-deposited sheet includes a transparent PET film, an aluminum vapor deposition layer (coating), and an adhesive that are layered on each other in this order. The metal-deposited sheet is attached to the back surface of the cover 32 by the adhesive. A foil sheet may be used instead of the metal-deposited sheet. Instead of this, a metal plate, a radio wave absorbing sheet, or a sheet including a coating into which metal powder or magnetic powder is mixed can also be used.

Next, operation of the product detection instrument 3 will be described with reference to FIG. 3.

As illustrated in FIG. 3, in a state where the product P is absent at the product detection instrument 3, the counterclockwise torque generated by the weight 37 causes the swing member 33 to be located at the first position (the position depicted by the solid line in FIG. 3) at which the protrusion 333 protrudes upward from the upper surface 32P. When the swing member 33 is located at the first position, the tag T and the radio wave shield member SM are not close to each other, and a gap is maintained between the tag T and the radio wave shield member SM. In this state, radio wave emission performance of the tag T is not degraded, and thus, the wireless device 2 can receive a packet transmitted from the tag T without a problem.

Meanwhile, in a state where the product P is placed on the product detection instrument 3, the gravity of the product P causes the swing member 33 to be pushed down until a top portion of the protrusion 333 reaches a position of the upper surface 32P. Thereby, the swing member 33 moves to the second position (the position depicted by the imaginary line in FIG. 3), and the tag T attached to the upper surface of the main body 331 of the swing member 33 comes into contact with or becomes close to the radio wave shield member SM. Accordingly, the radio wave shield member SM shields a radio wave emitted from the tag T, and thus, the radio wave emission performance of the tag T is significantly degraded. As a result, the wireless device 2 becomes unable to receive a packet transmitted from the tag T, or receives, at a significantly reduced frequency, a packet transmitted from the tag T.

The below-described tag management server can communicate with the wireless device 2, and acquires, from the wireless device 2, a result of whether communication with the tag T by the wireless device 2 is possible. Based on the result of whether the communication is possible, the tag management server determines whether the product P is present on the upper surface 32P (i.e., whether the product P is present on the product detection instrument 3).

In this manner, the product detection instrument 3 can detect whether the associated product P is placed on the product detection instrument 3.

FIG. 2 illustrates, as an example, the product detection instrument 3 having the rectangular shape in the plan view. However, a shape of the product detection instrument is not limited to this, and can be an arbitrary shape such as a circle, an ellipse, or a polygon. It is preferable that when the product is placed on the product detection instrument having an arbitrary shape, the protrusion is pushed downward in the vertical direction so that the tag T and the radio wave shield member SM become close to each other. From the standpoint of this, a shape of the product detection instrument is not essential.

As illustrated in FIG. 1, a reference tag Tref is preferably placed on the product shelf 9. The reference tag Tref is a tag for reference, and is a device having the same configuration as that of the tag T.

The reference tag Tref may be arranged at any location as long as the reference tag Tref can communicate with the wireless device 2 regardless of whether the products P are placed on the associated product detection instruments 3. The reference tag Tref is provided for determining whether the wireless device 2 is operating normally. Particularly, in a state where the products P are placed on all of the product detection instruments 3, the wireless device 2 cannot receive any of radio waves emitted from the tags T of all of the product detection instruments 3, and thus, it is difficult to determine whether the system is operating normally, if the reference tag Tref is not provided. In view of the above, the reference tag Tref that can communicate with the wireless device 2 regardless of whether the products P are placed on the associated product detection instruments 3 is provided. Thereby, it can be determined whether the system is operating normally.

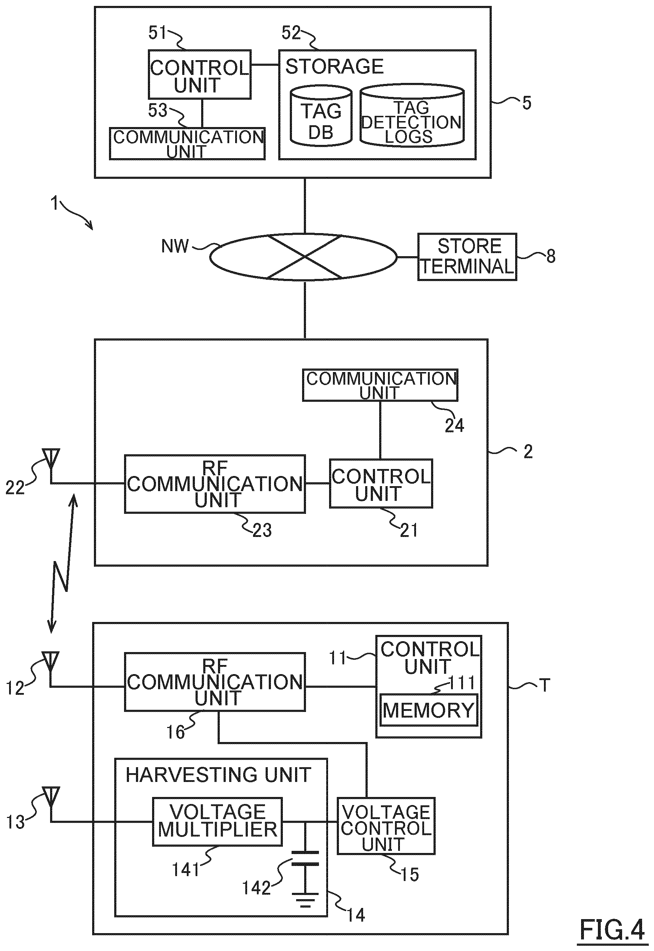

Next, a configuration of each device in the product management system 1 according to the one embodiment will be described with reference to FIG. 4.

FIG. 4 is a block diagram illustrating an internal configuration of each device in the product management system 1 according to the present embodiment.

As illustrated in FIG. 4, the product management system 1 includes the wireless device 2 and the tag management server 5 (one example of the control device). The tag management server 5 can communicate with the wireless device 2 via the network NW. The network NW is, but not limited to, a local area network (LAN), a wide area network (WAN), a mobile communication network, the Internet, or the like, for example.

The wireless device 2 functions as a BLE wireless terminal that receives packets from the tag T and the reference tag Tref by the BLE communication. When the wireless device 2 receives a packet from each of the tags, the wireless device 2 transmits the tag ID included in the received packet to the tag management server 5.

When the tag T and the reference tag Tref are in a state of being able to normally transmit packets, the tag T and the reference tag Tref each transmit a packet at a predetermined interval as described above. In response to this, the wireless device 2 also transmits the tag ID of each of the tags to the tag management server 5 at the predetermined interval.

Referring to FIG. 4, the tag T includes a control unit 11, a communication antenna 12, a harvesting antenna 13, a harvesting unit 14, a voltage control unit 15, and an RF communication unit 16. The control unit 11, the harvesting unit 14, the voltage control unit 15, and the RF communication unit 16 are mounted in the IC chip. Although the following will describe the configuration of the tag T, the configuration of the reference tag Tref, which is not illustrated in FIG. 4, is the same as that of the tag T.

The control unit 11 includes a microprocessor and a memory 111. The control unit 11 controls the entire tag T. The memory 111 is constituted by one or both of a random-access memory (RAM) and a read-only memory (ROM). The memory 111 stores programs executed by the microprocessor, and stores the tag ID that is identification information unique to the tag T.

The harvesting unit 14 harvests electric power from a radio wave (e.g., a radio wave generated by the surrounding wireless communication) that the harvesting antenna 13 receives from the surrounding environment. The harvesting unit 14 stores the harvested electric power in an internal capacitor 142. In the present embodiment, for example, the harvesting unit 14 includes a voltage multiplier 141 converting, into a DC voltage, a radio signal received by the harvesting antenna 13, and includes the capacitor 142 storing the DC voltage. The voltage multiplier 141 may be, but not limited to, a Dickson voltage multiplier circuit (charge pump), for example. The capacitor 142 may be one (i.e., an on-die capacitor) configured on the semiconductor chip, or may be one formed separately from the semiconductor chip.

Radio waves received by the harvesting antennas 13 for electric power generation are radio waves in a plurality of different frequency bands within a wide frequency band. Examples of such radio waves include radio waves generated by the wireless communication in the frequency bands used in mobile communication systems of what are called 3G to 5G and the like, radio waves generated by the wireless communication in the frequency bands used in the communication standards such as Bluetooth (registered trademark) and Wi-Fi (registered trademark), radio waves generated by the wireless communication in the 2.4-GHz band represented by the communication protocols such as ZigBee (registered trademark) and Thread, and radio waves generated by the wireless communication in the frequency bands (e.g., the UHF band and the 13.56-MHz band) used in the RFID. A plurality of frequency bands (e.g., the UHF band and the 2.4 GHz band) may be used in combination.

The voltage control unit 15 supplies an operation voltage to the control unit 11 and the RF communication unit 16. Preferably, the voltage control unit 15 monitors a voltage of the capacitor 142, and switches a power mode, depending on the monitored result.

For example, when a voltage of the capacitor 142 is lower than a predetermined value, the voltage control unit 15 sets the power mode to be a first mode of operating only the minimum circuitry. In this case, the control unit 11 and the RF communication unit 16 cease generation of a packet, transmission of a radio signal, and the like. When a voltage of the capacitor 142 becomes equal to or higher than the predetermined value by charging of the capacitor 142, the voltage control unit 15 sets the power mode to be a second mode of executing a normal processing routine. In this case, the control unit 11 and the RF communication unit 16 perform various pieces of processing including generation of a packet and transmission of a radio signal.

The RF communication unit 16 applies predetermined digital modulation (e.g., the Gaussian frequency shift keying (GFSK)) to a transmission-target packet (baseband signal). Then, the RF communication unit 16 applies orthogonal modulation to the digital-modulated packet, and sends the high-frequency signal (a signal in the 2.4-GHz frequency band in a case of BLE) to the communication antenna 12.

The communication antenna 12 transmits the high-frequency radio signal (packet) sent by the RF communication unit 16.

As illustrated in FIG. 4, the wireless device 2 includes a control unit 21, an antenna 22, an RF communication unit 23, and a communication unit 24.

The control unit 21 is constituted mainly by a microprocessor. The control unit 21 controls the entire wireless device 2. For example, when the control unit 21 acquires the tag ID from a packet received from the tag T, the control unit 21 controls the communication unit 24 to transmit the acquired tag ID to a tag management server 5. When the packet includes data detected by a sensor of the tag T, the tag ID and the detected data are transmitted to the tag management server 5 in association with each other.

The RF communication unit 23 demodulates the radio signal received by the antenna 22 from the tag T to convert the radio signal into the baseband signal. Then, the RF communication unit 23 applies predetermined digital demodulation to the baseband signal to receive the packet. In order to transmit a beacon signal from the antenna 22, the RF communication unit 23 applies orthogonal modulation to a baseband signal of a predetermined pattern, for example, and sends the orthogonal-modulated signal to the antenna 22.

The communication unit 24 functions as a communication interface for communicating with the tag management server 5.

As illustrated in FIG. 4, the tag management server 5 includes a control unit 51, a storage 52, and a communication unit 53, for example.

The control unit 51 is constituted mainly by a microprocessor. The control unit 51 controls the entire tag management server 5.

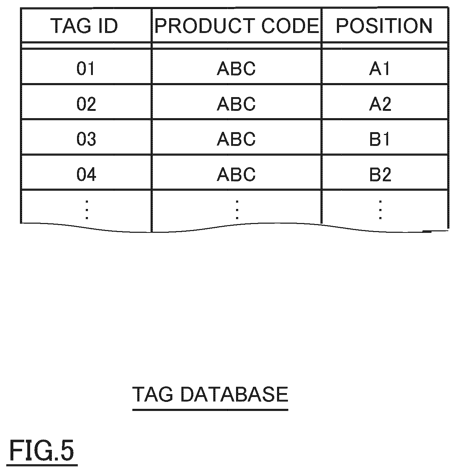

The storage 52 includes a large-scale storage device such as a hard disk drive (HDD). The storage 52 stores a tag database (tag DB). As illustrated in FIG. 5, the tag database includes, in association with each other, the tag ID of the tag T, a product code of the product placed on the product detection instrument 3 including the tag T, and information (position information) of a position at which the product is placed. The storage 52 also stores the tag ID of the reference tag Tref.

In the example illustrated in FIG. 1, the position information concerning each of the products and written in the tag database is one of A1, A2, B1, B2, C1, C2, D1, D2, E1, and E2.

The communication unit 53 functions as a communication interface for communicating with the wireless device 2 and a store terminal 8.

The control unit 51 executes a server program. Thereby, when the wireless device 2 receives packets transmitted by the respective tags T and the reference tag Tref and including the tag IDs, the control unit 51 acquires, from the wireless device 2, the tag IDs included in the packets.

In the one embodiment, each time the control unit 51 acquires the tag ID of the reference tag Tref from the wireless device 2, the control unit 51 records, in the storage 52, as a tag detection log, the acquired tag ID and a time point at which the control unit 51 acquires the tag ID. As illustrated in FIG. 1, the reference tag Tref is not shielded. Thus, unless the wireless device 2 is malfunctioning, the control unit 51 can acquire the tag ID of the reference tag Tref at the predetermined interval at which the reference tag Tref transmits a packet. When the control unit 51 cannot acquire the tag ID of the reference tag Tref at the predetermined interval, the control unit 51 determines that the wireless device 2 is malfunctioning, and notifies the store terminal 8 of the determined result.

Each time the control unit 51 acquires the tag ID of any of the tags T from the wireless device 2, the control unit 51 refers to the tag database, thereby identifies the product code and the position information that are associated with the acquired tag ID, generates an image indicating the identified result, and transmits the generated image to the store terminal 8. The result that the tag ID has been acquired indicates that the product of the product code associated with the tag ID is not placed on the product detection instrument 3 associated with the tag ID. Accordingly, for example, the product codes and the position information that are identified by the control unit 51 correspond to information as to whether the products are present at the respective positions in the matrix when a plurality of the product detection instruments 3 are arranged in the matrix as illustrated in FIG. 1.

The control unit 51 may determine whether the product is placed on the product detection instrument 3, based on a frequency at which the tag T transmits a signal (packet). When the product is placed on the product detection instrument 3, so that the tag T is close to the radio wave shield member SM but does not sufficiently contact with the radio wave shield member SM, there is a case where radio waves emitted from the tag T are not completely shielded, and as a result, the wireless device 2 receives the signal from the tag T. In this case, the tag T emits a signal less frequently, and thus, the wireless device 2 also receives the signal from the tag T less frequently. In view of the above, when the tag T emits a signal less frequently, and as a result, a frequency at which the control unit 51 acquires the tag ID from the wireless device 2 is smaller than a predetermined threshold value, the control unit 51 determines that the product is placed on the associated product detection instrument 3.

The store terminal 8 is an information processing terminal that is possessed by a store staff in charge and that is able to communicate with the tag management server 5. Examples of the store terminal 8 include a personal computer (PC), a tablet terminal, a smartphone, and the like.

The store terminal 8 displays the information (e.g., the information indicating that the wireless device 2 is malfunctioning) notified by the tag management server 5, and the image transmitted from the tag management server 5. While described below with reference to an example, the image transmitted from the tag management server 5 is, for example, an image indicating presence or absence of each of a plurality of the products arranged in the matrix.

The store terminal 8 and the tag management server 5 communicate with each other by using the HTTPS, for example, but the communication protocol is not particularly limited. A web browser of the store terminal 8 displays a web page including the image sent from the tag management server 5.

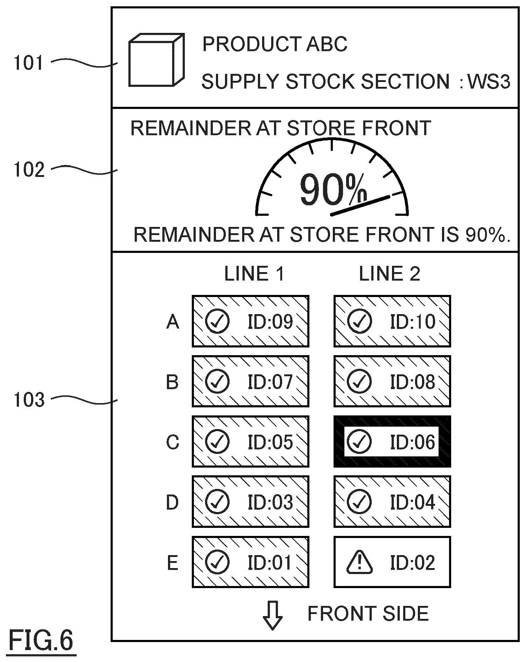

FIG. 6 illustrates one example of the image displayed on the store terminal 8. This image concerns the case where a plurality of the products are arranged in the 2×5 matrix as illustrated in FIG. 1.

The image illustrated in FIG. 6 is constituted of an upper part 101, an intermediate part 102, and a lower part 103. The upper part 101 represents a product name (e.g., ABC) and position information (e.g., WS3) of a location (a supply stock section) of stock of products for supply. The intermediate part 102 represents information (e.g., 90%) indicating a percentage of unsold products among the products that can be arranged at the store front. The intermediate part 102 may include a message (e.g., text of "remainder at store front is 90%.") depending on the percentage.

The lower part 103 represents, in a visually recognizable manner, information as to whether the products are placed at the respective positions of the product detection instruments 3 arranged in the 2×5 matrix. The example illustrated in the drawing represents a plurality of rectangles (rectangles arranged in the lines 1 and 2 and in the rows A to E) arranged in the matrix. The rectangles imitate the arrangement layout of the products at the store front. The example illustrated in the drawing also represents the tag ID in each of the rectangles. Further, the example illustrated in the drawing represents each of the rectangles, in a representing mode that depends on whether the product is present at the associated position. Thereby, the store staff in charge who views the store terminal 8 can immediately recognize presence or absence of the product at each position, concerning the products of the product name ABC.

The example illustrated in FIG. 6 represents a state where the product at the position E2 has been sold and is absent, and the other products remain unsold and is still present. Accordingly, the intermediate part 102 represents, as 90% (=9/10), a percentage of the remainder at the store front. Thereby, the store staff in charge can easily recognize a stock state of the products at the store front.

Although FIG. 1 illustrates the example in which the product detection instruments 3 are arranged in the 2×5 matrix, one of a resin sheet, a film, and a cloth each having flexibility may be used to cover the product detection instruments 3 from an upper side. The covering by the resin sheet or the like reduces unevenness and facilitates smooth taking-out and supplying of the products P.

As described above, in the above-described product management system 1, the product detection instrument 3 is configured in such a way that, when the product is placed on the product detection instrument 3, the swing member 33 swings, and thus, the tag T becomes close to the radio wave shield member SM, and thereby, the tag T becomes unable to emit a radio wave. The tag management server 5 acquires, from the wireless device 2, a result of whether the wireless device 2 has received a signal from the tag T. Based on the result, the tag management server 5 determines whether the product is present on the product detection instrument 3. When a plurality of the products are arranged, the respective products are arranged on a plurality of the respective product detection instruments 3, and presence or absence of each of the products is displayed. Thereby, a store staff in charge can recognize not only the number of the products being present but also the position of each of the products that remain unsold and are still present.

Thus, according to the product management system 1, a store staff in charge can recognize the number of the products being present and the positions to which the products are to be supplied, even without visual checking, and can appropriately supply the products and order the products. Particularly, the positions (positions at each of which the product is not placed on the product detection instrument 3) to which the products are to be supplied can be accurately recognized. Accordingly, work of supplying the products becomes easier. The positions of the products that remain unsold and are still present can be recognized. Accordingly, when a plurality of the products are arranged in a matrix, appropriate product arrangement work can be made at an appropriate timing. The appropriate product arrangement work is, for example, work of moving the unsold products being present to the positions where the products are more likely to catch the eyes of customers.

Next, product detection instruments according to other embodiments different from the product detection instrument 3 illustrated in FIG. 2 and FIG. 3 will be described.

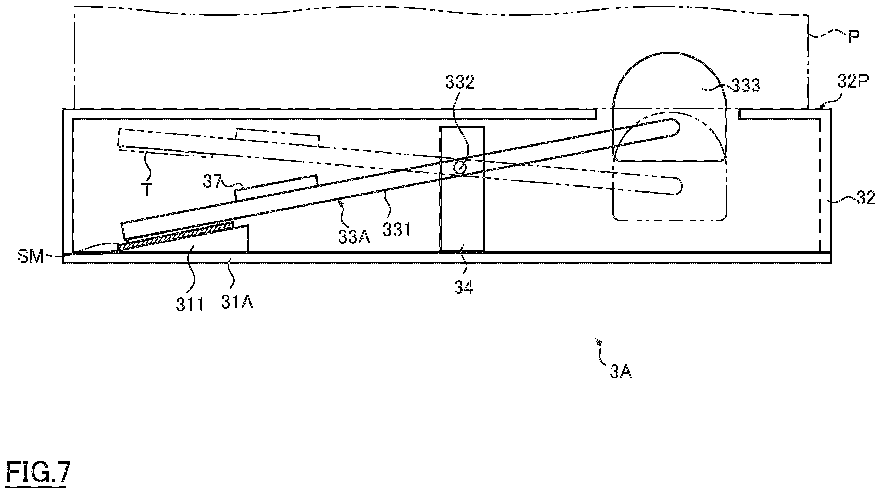

FIG. 7 illustrates a product detection instrument 3A according to one embodiment. FIG. 7 is a sectional view of the product detection instrument 3A, similarly to the product detection instrument 3 illustrated in FIG. 3.

The product detection instrument 3A differs from the product detection instrument 3 in the following point. Contrary to the product detection instrument 3, when the product P is absent on the product detection instrument 3A, communication between the tag T and the wireless device 2 is blocked, and when the product P is present on the product detection instrument 3A, communication between the tag T and the wireless device 2 is allowed. In the product detection instrument 3A illustrated in FIG. 7, a position of a swing member 33A depicted by the solid line corresponds to a first position, and a position of the swing member 33A depicted by the imaginary line corresponds to a second position.

As illustrated in FIG. 7, an inclination portion 311 is formed on an upper surface of a base 31A of the product detection instrument 3A, and the radio wave shield member SM is arranged on the inclination portion 311. Providing the inclination portion 311 allows the tag T and the radio wave shield member SM to come into surface contact with each other when the swing member 33A is located at the first position. Thus, a radio wave from the tag T can be effectively shielded.

In a state where the product P is absent at the product detection instrument 3A, the counterclockwise torque generated by the weight 37 causes the swing member 33 to be located at the first position (the position depicted by the solid line in FIG. 7) at which the protrusion 333 protrudes upward from the upper surface 32P. When the swing member 33 is located at the first position, the tag T and the radio wave shield member SM are close to or come in contact with each other. Accordingly, the radio wave shield member SM shields a radio wave emitted from the tag T, and thus, the radio wave emission performance of the tag T is significantly degraded. As a result, the wireless device 2 becomes unable to receive a packet transmitted from the tag T, or receives, at a significantly reduced frequency, a packet transmitted from the tag T.

Meanwhile, in a state where the product P is placed on the product detection instrument 3, the gravity of the product P causes the swing member 33 to be pushed down until the top portion of the protrusion 333 reaches a position of the upper surface 32P. Thereby, the swing member 33 moves to the second position (the position depicted by the imaginary line in FIG. 7) so that the tag T becomes separated from the radio wave shield member SM. In this state, the radio wave emission performance of the tag T is not degraded, and thus, the wireless device 2 can receive a packet transmitted from the tag T without a problem.

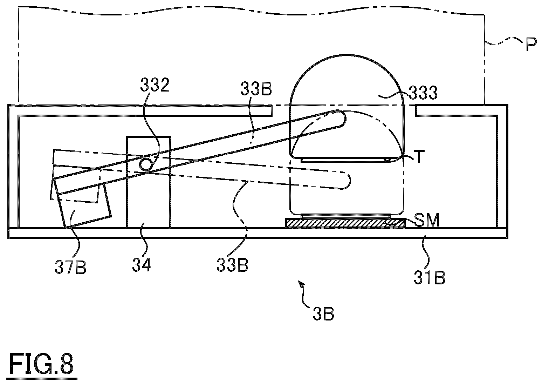

FIG. 8 illustrates a product detection instrument 3B according to one embodiment. FIG. 8 is a sectional view of the product detection instrument 3B, similarly to the product detection instrument 3 illustrated in FIG. 3.

The product detection instrument 3B differs from the product detection instrument 3 in the following point. The tag T is attached to a bottom surface of the protrusion 333, and the tag T becomes close to or separated from the radio wave shield member SM on the same side of the protrusion 333 with respect to the shaft 332. In the product detection instrument 3B illustrated in FIG. 8, a position of a swing member 33B depicted by the solid line corresponds to a first position, and a position of the swing member 33B depicted by the imaginary line corresponds to a second position.

As illustrated in FIG. 7, the tag T is attached to the bottom surface of the protrusion 333, and the radio wave shielding member SM is attached to an upper surface of a base 31B.

A weight 37B is provided on a side opposite to a side on which the protrusion 333 is attached, in such a way as to sandwich the shaft portion 332 between the weight 37B and the protrusion 333.

The weight 37B is one example of the torque generation member that generates torque of swinging the swing member 33B from the second position toward the first position (i.e., swinging the swing member 33B counterclockwise in FIG. 8). In FIG. 8, the weight 37B generates counterclockwise torque while canceling clockwise moment generated by the own weight of the protrusion 333.

According to the embodiment illustrated in FIG. 8, the protrusion 333 in the swing member 33B is on the same side of the tag T and the radio wave shield member SM with respect to the shaft 332. Thus, the swing member 33B and the product detection instrument 3B can be made smaller in size.

As illustrated in FIG. 8, in a state where the product P is absent at the product detection instrument 3B, the counterclockwise torque generated by the weight 37B causes the swing member 33B to be located at the first position (the position depicted by the solid line in FIG. 8) at which the protrusion 333 protrudes upward from the upper surface 32P. When the swing member 33B is located at the first position, the tag T and the radio wave shield member SM are not close to each other, and a gap is maintained between the tag T and the radio wave shield member SM. In this state, the radio wave emission performance of the tag T is not degraded, and thus, the wireless device 2 can receive a packet transmitted from the tag T without a problem.

Meanwhile, in a state where the product P is placed on the product detection instrument 3B, the gravity of the product P causes the swing member 33 to be pushed down until the top portion of the protrusion 333 reaches a position of the upper surface 32P. Thereby, the swing member 33B moves to the second position (the position depicted by the imaginary line in FIG. 8) so that the tag T attached to the bottom surface of the protrusion 333 comes in contact with or becomes close to the radio wave shield member SM. Accordingly, the radio wave shield member SM shields a radio wave emitted from the tag T, and thus, the radio wave emission performance of the tag T is significantly degraded. As a result, the wireless device 2 becomes unable to receive a packet transmitted from the tag T, or receives, at a significantly reduced frequency, a packet transmitted from the tag T.

FIG. 8 illustrates a case where the tag T is attached to the protrusion 333, and the radio wave shield member SM is attached to the base 31B. However, there is no limitation to this. In one embodiment, the radio wave shield member SM may be attached to the protrusion 333, and the tag T may be attached to the base 31B.

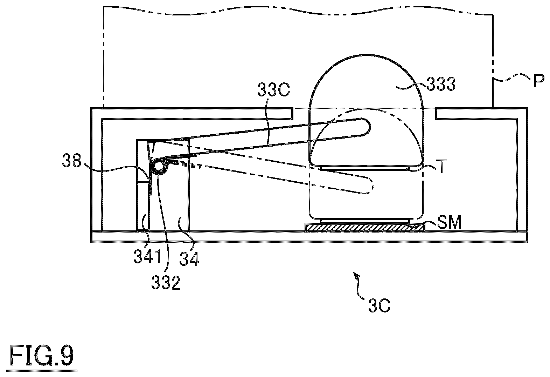

FIG. 9 illustrates a product detection instrument 3C according to one embodiment. FIG. 9 is a sectional view of the product detection instrument 3C, similarly to the product detection instrument 3B illustrated in FIG. 8.

The product detection instrument 3C differs from the product detection instrument 3B (FIG. 8) in that a torsion spring 38 is attached to the shaft 332, instead of providing a weight on a side opposite to a side on which the protrusion 333 is attached, in such a way as to sandwich the shaft 332 between the weight and the protrusion 333. The torsion spring 38 is wound around the shaft 332. The torsion spring 38 includes one end that comes in contact with a protrusion 341 (a part protruding towards a front of FIG. 9) formed at the support 34, and an opposite end that comes in contact with a lower surface of a swing member 33C. Thus, when the protrusion 333 is pushed down and the swing member 33C swings clockwise in FIG. 9, the torsion spring 38 generates counterclockwise torque acting on the swing member 33C. The torsion spring 38 is one example of the torque generation member that generates counterclockwise torque acting on the swing member 33C in FIG. 9.

Operation of the product detection instrument 3C is the same as that of the product detection instrument 3B.

The product detection instrument 3C does not include a weight, differently from the product detection instrument 3B. To that extent, the swing member 33C can be made shorter, and further, can be made smaller in size.

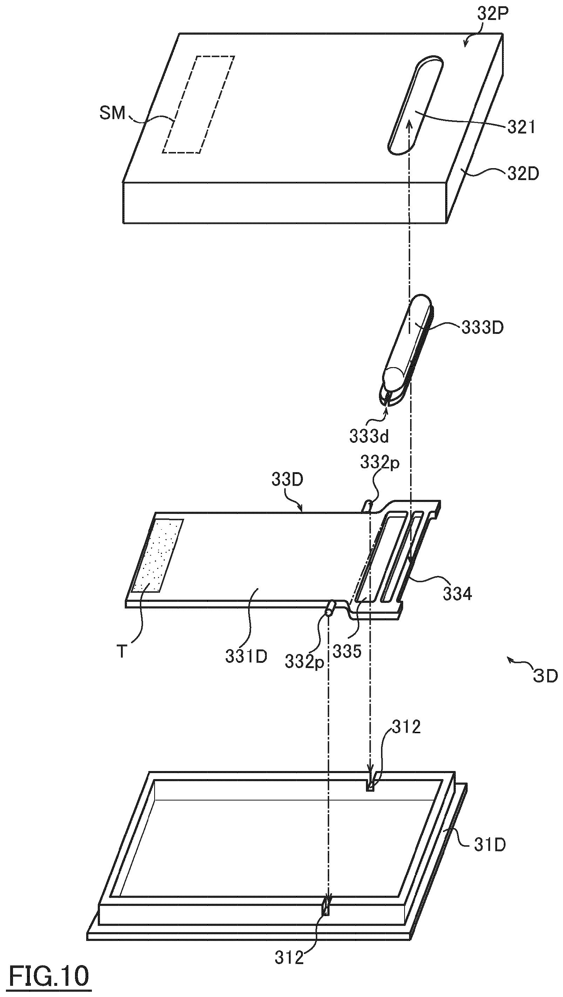

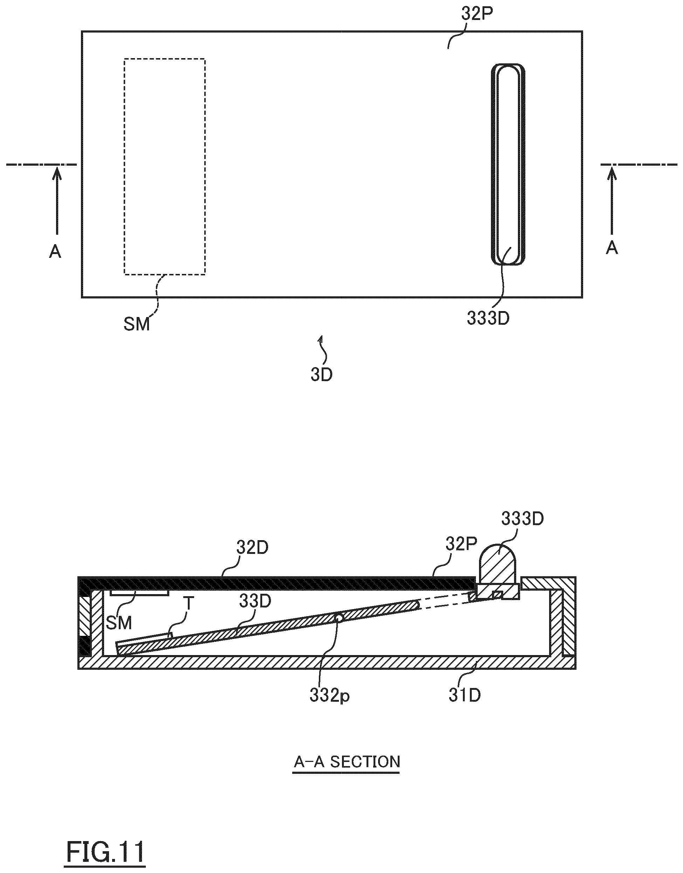

Next, a product detection instrument 3D according to one embodiment will be described with reference to FIG. 10 and FIG. 11.

FIG. 10 is an exploded perspective view of the product detection instrument 3D according to the one embodiment. FIG. 11 is an A-A sectional view of the product detection instrument 3D illustrated in FIG. 10.

As illustrated in FIG. 10, the product detection instrument 3D includes a base 31D, a cover 32D, and a swing member 33D. The base 31D, the cover 32D, and the swing member 33D are each formed of resin, for example.

The swing member 33D includes a main body 331D and a protrusion 333D. A pair of shafts 332p protrude laterally from side portions of the main body 331D. The shafts 332p each constitute a swing shaft of the swing member 33D. The tag T is attached to an upper surface of the main body 331D, on one side of the shafts 332p, and a support rod 334 is provided at the main body 331D, on an opposite side of the shafts 332p.

The radio wave shield member SM is attached to an inner surface of the cover 32D, at a position facing the tag T. Swinging of the swing member 33D around the shaft 332p causes the tag T to become close to or separated from the radio wave shield member SM.

The protrusion 333D is a member that protrudes upward from a hole 321 formed in the cover 32D, in a state where the product is absent on the product detection instrument 3D. In the example illustrated in FIG. 10, the protrusion 333D has an elongated shape to match with the elongated hole 321, but is not limited to this. The protrusion may have any shape as long as the protrusion is configured to be able to protrude from the hole formed in the cover. Preferably, the protrusion 333D has a curved surface that is convex upward in the vertical direction. A recess 333d is formed in the protrusion 333D. The recess 333d is fitted onto the support rod 334 of the main body 331D. Thereby, the main body 331D and the protrusion 333D are integrated with each other.

A pair of grooves 312 are formed in the base 31D. A pair of the grooves 312 receives a pair of the respective shafts 332p of the main body 331D.

Referring to FIG. 11, in a state where the respective components illustrated in FIG. 10 are assembled, a position of the shafts 332p is set in such a way that the tag T and the radio wave shield member SM become separated from each other when the product is absent on the product detection instrument 3D.

In one embodiment, the shafts 332p are arranged at the position shifted in an elongation direction of the main body 331D from the center of the main body 331D to a side of the support rod 334. However, there is no limitation to this. In one embodiment, as illustrated in FIG. 10, a hole 335 is formed, in the main body 331D, between the shafts 332p and the support rod 334 in the elongation direction of the main body 331D. In this case, the main body 331D can be made smaller in weight in a part on a side of the support rod 334 with respect to the shafts 332p. For this reason, even when the shafts 332p are arranged at a position shifted from the elongation-direction center to a side of the tag T, the tag T and the radio wave shiel member SM can be configured to become separated from each other when the product is absent on the product detection instrument 3D.

Operation of the product detection instrument 3D is the same as that of the product detection instrument 3 illustrated in FIG. 2 and FIG. 3. In other words, when the product is absent on the product detection instrument 3D, the protrusion 333D protrudes upward from the upper surface 32P through the hole 321, and the tag T and the radio wave shield member SM becomes separated from each other so that the tag T and the wireless device 2 can communicate with each other. When the product is present on the product detection instrument 3D, a weight of the product pushes down the protrusion 333D, and thereby, the swing member 33D swings around an axis of the shafts 332p. Thus, the tag T and the radio wave shield member SM become close to each other, and thereby, communication between the tag T and the wireless device 2 is prevented.

### (2) Second Embodiment

Next, the second embodiment will be described.

A product management system according to the present embodiment is configured in such a way as to enable a store staff in charge to recognize whether a product remains on an inclination-type product shelf (inclined shelf) in a store. A product detection instrument (one example of an item detection instrument) is used in order to detect whether a product remains.

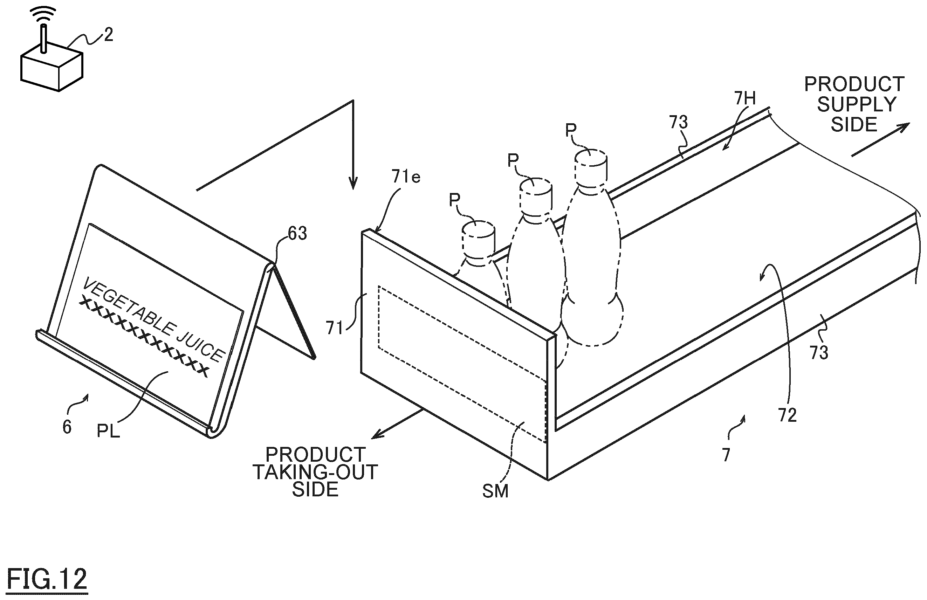

The following will describe the product detection instrument according to the second embodiment with reference to FIG. 12 to FIG. 14. FIG. 12 illustrates an arrangement example of the product detection instrument according to one embodiment. In the present embodiment, a product detection tool 6 and a product placement member 7 constitute the product detection instrument according to the one embodiment. The product detection tool 6 and the product placement member 7 are each formed of resin such as plastic, wood, or paper, for example, but there is no limitation to these.

In FIG. 12, the product placement member 7 includes a storage portion 7H on which a plurality of products P can be placed in a line. The storage portion 7H is formed by a product placement surface 72 and a pair of side walls 73. The product placement member 7 includes a restriction plate 71 that stands and extends from the product placement surface 72.

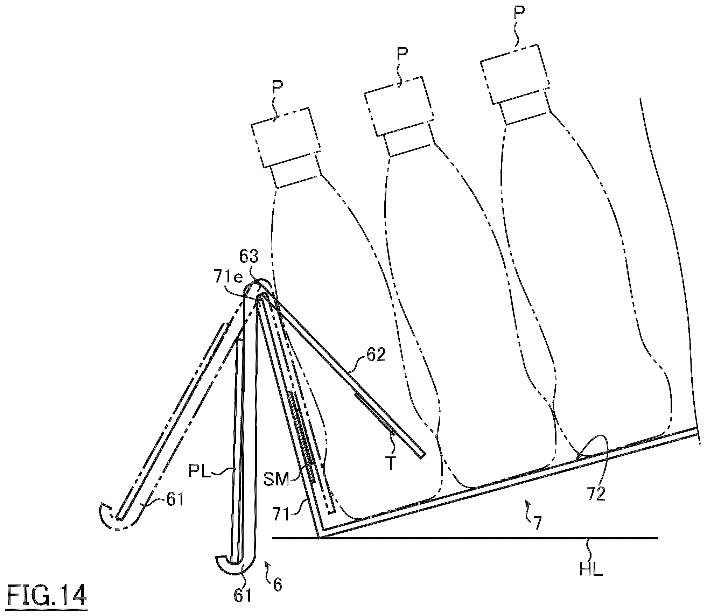

The products can be arranged on the product placement member 7 in an elongation direction of the product placement member 7. The product placement member 7 is arranged in such a way that in in the product placement member 7, one side is a product supply side where the store supplies the products, and an opposite side is a product taking-out side where a consumer takes out the product. The product placement surface 72 of the product placement member 7 is inclined from the horizontal plane HL (refer to FIG. 14). Accordingly, the product P placed on the product placement surface 72 is configured in such a way as to move to the product taking-out side by its own weight and come into contact with the restriction plate 71 on the product taking-out side in the product placement member 7. In other words, the restriction plate 71 restricts movement of the product P caused by its own weight of the product P when the product P is present on the product placement surface 72. The radio wave shield member SM is attached to a surface included in the restriction plate 71 and facing the product P. Rollers may be provided on the product placement surface 72 in order to facilitate smooth movement of the products P on the product placement surface 72.

The one or more products P supplied onto the product placement member 7 from the product supply side move toward the product taking-out side each time the one product P is taken out by a consumer from the product taking-out side. Thereby, the leading product P (the product P closest to the product taking-out side) among the one or more products P on the product placement surface 72 constantly comes in contact with the restriction plate 71.

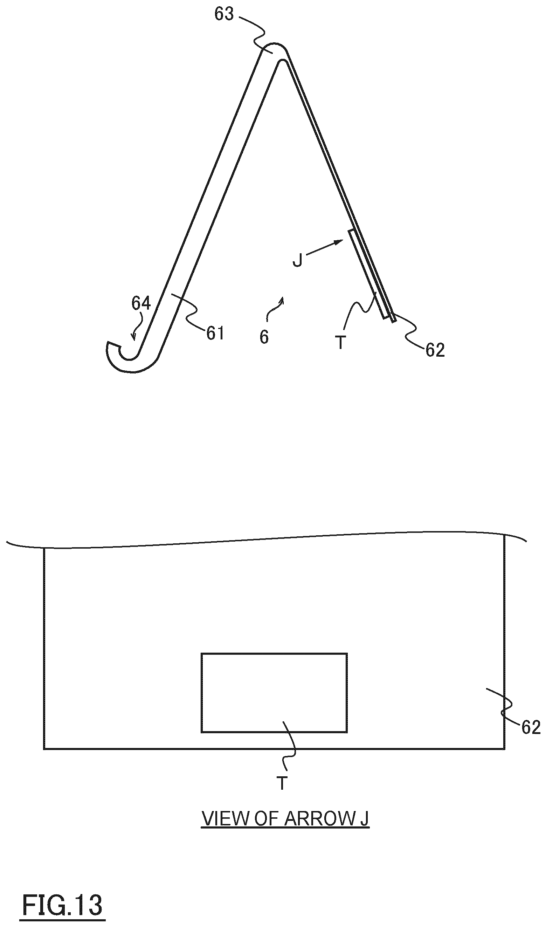

As illustrated in FIG. 13, the product detection tool 6 is a member having a substantially V-shaped section. The product detection tool 6 includes a first plate-shaped portion 61, a second plate-shaped portion 62, and an engagement portion 63. The first plate-shaped portion 61 and the second plate-shaped portion 62 each extend from the engagement portion 63. The engagement portion 63 is a portion that engages with the product placement member 7.

A folded portion 64 is formed at an end portion of the first plate-shaped portion 61. As illustrated in FIG. 12, a label PL on which information of the product P is printed is arranged at the folded portion 64.

The first plate-shaped portion 61 is larger in weight than the second plate-shaped portion 62. In one embodiment, the first plate-shaped portion 61 is formed to be thicker than the second plate-shaped portion 62, and thereby, the first plate-shaped portion 61 is larger in weight than the second plate-shaped portion 62. The first plate-shaped portion 61 larger in weight than the second plate-shaped portion 62 means that the product detection tool 6 substantially functions as the torque generation member including a weight.

In an example illustrated in FIG. 13, the first plate-shaped portion 61 is formed to be longer than the second plate-shaped portion 62, but there is no limitation to this. As long as the first plate-shaped portion 61 is larger in weight than the second plate-shaped portion 62, the first plate-shaped portion 61 may be shorter than the second plate-shaped portion 62. In order to relatively increase a weight of the first plate-shaped portion 61, a metal member may be insert-molded into the first plate-shaped portion 61 when the entire product detection tool 6 is made of resin.

The tag T is attached to a surface that is included in the second plate-shaped portion 62 and that is located on a side of facing the first plate-shaped portion 61.

As illustrated in FIG. 12, the engagement portion 63 of the product detection tool 6 is placed, from an upper side, on a restriction plate end portion 71e of the restriction plate 71 in the product placement member 7. Thereby, the product detection tool 6 engages with the product placement member 7.

The product detection instrument (the product detection tool 6 and the product placement member 7) according to the present embodiment is further described with reference to FIG. 14.

FIG. 14 is a side view of the product detection instrument illustrated in FIG. 12. In FIG. 14, the side walls 73 are not depicted in order that an inside state of the storage portion 7H of the product placement member 7 is made visible. In FIG. 14, the solid line depicts a position (one example of the first position) of the product detection tool 6 when no products P are placed on the product placement surface 72 of the product placement member 7, and the imaginary line depicts a position (one example of the second position) of the product detection tool 6 when at least one product P is placed on the product placement surface 72.

As illustrated in FIG. 14, when the product detection tool 6 is located at the first position, the tag T and the radio wave shield member SM are not close to each other, and when the product detection tool 6 is located at the second position, the tag T and the radio wave shield member SM are close to each other.

In a state where the product detection tool 6 and the product placement member 7 engage with each other, the product detection tool 6 is swingable around the restriction plate end portion 71e included in the product placement member 7 and serving as an imaginary axis. In other words, the product detection tool 6 functions as a swing member that is swingable, around the restriction plate end portion 71e as the imaginary axis, between the first position at which the product detection tool 6 is located when no products P are present on the product placement surface 72 (one example of the reference surface) and the second position at which the product detection tool 6 is located when the product P is present on the product placement surface 72.

As described above, in the product detection tool 6, the first plate-shaped portion 61 is larger in weight than the second plate-shaped portion 62. Thus, in a state were the product detection tool 6 and the product placement member 7 engage with each other, the first plate-shaped portion 61 functions as the torque generation member that generates torque of swinging the product detection tool 6 from the second position toward the first position.

Next, operation of the product detection instrument according to the present embodiment will be described with reference to FIG. 14.

In a state where at least one product P is placed on the product placement surface 72 of the product placement member 7, its own weight of the leading product P on the product placement surface 72 overcomes the torque of swinging the product detection tool 6 from the second position toward the first position, and causes the product detection tool 6 to swing clockwise in FIG. 14 while using the restriction plate end portion 71e as the imaginary axis. Thereby, the second plate-shaped portion 62 of the product detection tool 6 comes into contact with the restriction plate 71 of the product placement member 7. This state corresponds to the second position (depicted by the imaginary line) of the product detection tool 6. In this state, the tag T arranged on the second plate-shaped portion 62 comes in contact with or close to the radio wave shield member SM. Accordingly, the radio wave shield member SM shields a radio wave emitted from the tag T, and thus, the radio wave emission performance of the tag T is significantly degraded. As a result, the wireless device 2 becomes unable to receive a packet transmitted from the tag T, or receives, at a significantly reduced frequency, a packet transmitted from the tag T.

When all the products P are taken out from the product placement member 7, and no products P are placed on the product placement surface 72, the torque of swinging the product detection tool 6 from the second position toward the first position brings the product detection tool 6 into an equilibrium state where the first plate-shaped portion 61 is oriented substantially in the vertical downward direction. This state corresponds to the first position (depicted by the solid line) of the product detection tool 6. When the product detection tool 6 is located at the first position, the tag T attached to the second plate-shaped portion 62 is not close to the radio wave shield member SM, and a gap is maintained between the tag T and the radio wave shield member SM. In this state, the radio wave emission performance of the tag T is not degraded, and thus, the wireless device 2 can receive a packet transmitted from the tag T without a problem.

In a short period between the time at which the leading product P among a plurality of the products P on the product placement member 7 is taken out and the time at which the next product P comes into contact with the restriction plate 71, the product detection tool 6 swings counterclockwise in FIG. 14 toward the first position, and thus, the tag T becomes separated from the radio wave shield member SM. For this reason, there is a case where the tag T and the wireless device 2 become able to communicate with each other in this short period. However, in this case, a frequency at which communication between the tag T and the wireless device 2 becomes possible is considerably lower than in a case where no products P are present on the product placement member 7. Thus, the tag management server 5 compares, with a predetermined threshold value, the frequency at which the communication becomes possible, and thereby, can reliably determine a state where no products P are present on the product placement member 7.

Similarly to the first embodiment, the tag management server 5 can communicate with the wireless device 2, acquires, from the wireless device 2, a result of whether communication with the tag T by the wireless device 2 is possible, and determines whether at least one product P is present on the product placement surface 72 of the product placement member 7, based on the result of whether the communication is possible.

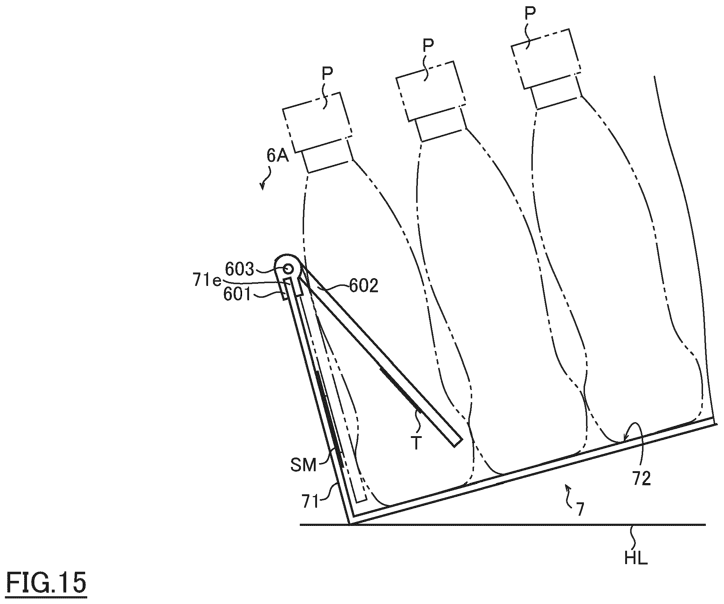

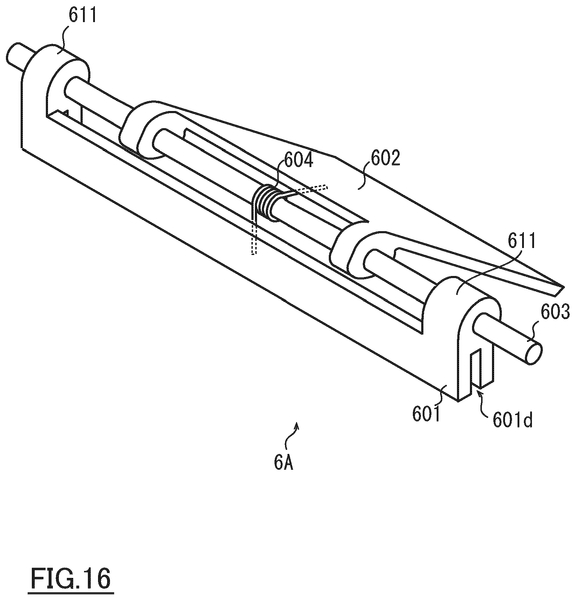

Next, another embodiment of a product detection instrument different from that illustrated in FIG. 12 to FIG. 14 will be described with reference to FIG. 15 and FIG. 16. Similarly to FIG. 14, FIG. 15 is a side view of the product detection instrument according to the one embodiment. FIG. 16 is a perspective view of a product detection tool 6A included in the product detection instrument according to the embodiment illustrated in FIG. 15.

Also in FIG. 15, the solid line depicts a position (one example of the first position) of the product detection tool 6A when no products P are placed on the product placement surface 72 of the product placement member 7, and the imaginary line depicts a position (one example of the second position) of the product detection tool 6A when at least one product P is placed on the product placement surface 72.

As illustrated in FIG. 16, the product detection tool 6A includes a main body 601, a swing member 602, a shaft 603, and a torsion spring 604. The main body 601, the swing member 602, and the shaft 603 are formed of resin, for example, but there is no limitation to this.

The main body 601 includes a groove 601d formed in an elongation direction of the main body 601. As illustrated in FIG. 15, the restriction plate end portion 71e of the product placement member 7 is inserted into the groove 601d of the product detection tool 6A. Thereby, the product detection tool 6A is attached to the restriction plate 71 of the product placement member 7.

The shaft 603 is coupled to the swing member 602. The swing member 602 and the shaft 603 may be formed integrally with each other. Both ends of the shaft 603 are rotatably supported by supports 611 of the main body 601.

In one embodiment, the torsion spring 604 is arranged at an axial-direction center portion of the shaft 603, and is wound around the shaft 603. The torsion spring 604 includes one end that comes in contact with the main body 601 and an opposite end that comes in contact with one surface (a surface to which the tag T is attached; refer to FIG. 15) of the swing member 602. Thereby, the torsion spring 604 functions as the torque generation member that generates counterclockwise torque acting on the swing member 602 when the swing member 602 comes in contact with a side of the restriction plate 71 in FIG. 15.

Next, operation of the product detection instrument according to the embodiment illustrated in FIG. 15 will be described.

In a state where at least one product P is placed on the product placement surface 72 of the product placement member 7, its own weight of the leading product P on the product placement surface 72 overcomes the torque generated by the torsion spring 604, and causes the product detection tool 6A to swing around the shaft 603 clockwise in FIG. 15. Thereby, the swing member 602 of the product detection tool 6A comes into contact with the restriction plate 71 of the product placement member 7. This state corresponds to the second position (depicted by the imaginary line) of the product detection tool 6A. In this state, the tag T arranged on the swing member 602 comes in contact with or close to the radio wave shield member SM. Accordingly, the radio wave shield member SM shields a radio wave emitted from the tag T, and thus, the radio wave emission performance of the tag T is significantly degraded. As a result, the wireless device 2 becomes unable to receive a packet transmitted from the tag T, or receives, at a significantly reduced frequency, a packet transmitted from the tag T.

When all the products P are taken out from the product placement member 7, and no products P are placed on the product placement surface 72, the swing member 602 becomes separated from the restriction plate 71 of the product placement member 7 by the torque that is generated by the torsion spring 604 and that causes the product detection tool 6A to swing from the second position toward the first position. This state corresponds to the first position (depicted by the solid line) of the product detection tool 6A. When the product detection tool 6A is located at the first position, the tag T attached to the swing member 602 is not close to the radio wave shield member SM, and a gap is maintained between the tag T and the radio wave shield member SM. In this state, the radio wave emission performance of the tag T is not degraded, and thus, the wireless device 2 can receive a packet transmitted from the tag T without a problem.

As described above, according to the product detection instrument of the second embodiment, in a state where at least one product P is placed on the product placement member 7, the wireless device 2 is unable to communicate with the tag T, or a frequency of the communication is significantly reduced. When all the products P supplied on the product placement member 7 are taken out, the communication between the tag T and the wireless device 2 becomes possible.

In light of this, when the communication between the tag T and the wireless device 2 becomes possible, or when a frequency of the communication between the tag T and the wireless device 2 becomes higher than a predetermined value, the tag management server 5 notifies the store terminal 8 of this fact. Thereby, a store staff in charge can recognize that the product placement member 7 becomes empty, and can supply the products P to the product placement member 7 at an appropriate time.

A product management method (one example of an item management method) according to one embodiment includes the following steps (S1) to (S5).
(S 1) The step of arranging the item detection instrument that includes the swing member and the torque generation member. The swing member is swingable, around the predetermined axis, between a first position and a second position. One of the tag T and the radio wave shield member SM is attached to the swing member. The torque generation member generates torque of swinging the swing member from the second position toward the first position.
(S2) The step of causing the product P to be present on a reference surface, so that the swing member is located on the second position, the tag T and the radio wave shield member SM are close to each other, and thereby a radio wave emitted from the tag T is shielded.
(S3) The step of removing the product P from the reference surface, so that the swing member swings from the second position to the first position, the tag T and the radio wave shield member SM are separated from each other, and thereby a radio wave emitted from the tag T is not shielded;
(S4) The step of acquiring a result of whether the wireless device 2 is able to communicate with the tag T.
(S5) The step of determining, based on the result, whether the product P is present on the reference surface.

Although the embodiments of the item management system, the item management method, the item detection instrument, and the item detection device according to the present invention have been described above, the present invention is not limited to the above-described embodiments. The above-described embodiments can be variously improved or modified within a range that does not depart from the essence of the present invention.

For example, although FIG. 3 and FIG. 7 illustrate the cases where the tag T is attached to the swing member, and the radio wave shield member SM is attached to a fixed member such as the cover or the base, there is no limitation to this. The radio wave shield member SM may be attached to the swing member, and the tag T may be attached to a fixed member such as the cover or the base. For example, in one embodiment, the radio wave shield member SM may be attached to the main body 331 of the swing member 33, and the tag T may be attached to the cover 32 or the base 31.

In the described case of the embodiment illustrated in FIG. 14 and FIG. 15, the radio wave shield member SM is attached to the product placement member 7, and the tag T is attached to the product detection tool. However, there is no limitation to this. The tag T may be attached to the product placement member 7, and the radio wave shield member SM may be attached to the product detection tool.

### (3) Third Embodiment

Next, the third embodiment will be described.

Conventionally, for example, there is a known method for detecting that a cover of a beverage container is opened.

For example, Japanese Patent Application Laid-Open Publication No 2020-187635 proposes an IC tag label for detecting that a cover of a container is opened. The IC tag label includes an opening detection unit, an antenna coil, and an IC chip that are provided on a label substrate. The opening detection unit detects that the cover of the container is opened. The antenna coil can communicate with an external device. The IC chip is electrically connected to the opening detection unit and the antenna coil. The opening detection unit includes slits or weakened lines, and an opening detection wiring. The slits or weakened lines are provided in such a way as to enable breakage of the opening detection unit that extends to be on a pull tag of the container. The opening detection wiring detects that the cover of the container is opened. The IC tag label is configured in such a way that the IC chip detects breakage of the opening detection unit.

Incidentally, for a case where a container contains contents that are continued to be consumed little by little over a plurality of times instead of completely using (consuming) the contents of the container at one time, there is a demand for recognizing each of consuming timings. For example, when the container contains granular instant coffee, a laundry detergent, or the like, these contents are continued to be consumed over a plurality of times. In this case, if the consuming timing or the consuming frequency can be recognized, an actual state of consumption of the product by a consumer can be recognized, and is useful for marketing

However, the conventional method for detecting that the cover is opened is based on disconnecting a wiring part in response to an opening action, and cannot detect an opening action at each opening time in the case where the cover is opened a plurality of times. Providing a complex sensor for detecting that the cover is detached from a main body of the container increases the cost of the product itself, and is thus undesirable.

In view of the above, an object of the present invention is to enable a consuming timing of contents contained in a container main body to be recognized with a simple configuration.

The following will describe one embodiment of an item management system, an item management method, and an item detection instrument according to the present invention. Configurations described below are not limited to those in the drawings those in described by the brief description of the drawings.

A first aspect of the present invention provides an item management system for a product that includes a container main body and a cover. The container main body includes an opening formed for inserting or extracting contents. The cover is detachably coupled to the container main body. When attached to the container main body, the cover tightly closes the opening. The item management system detects that the cover is detached. In the present disclosure, "item" means a tangible object such as a product, a manufactured item, a semi-manufactured item (an item at an intermediate stage in course of being manufactured), or a mock-up. Examples of the product including the container main body and the cover include a product inside which granular instant coffee is enclosed, a product inside which tea leaves of black tea or green tea are enclosed, and a product inside which spices or seasoning is enclosed.

This item management system includes the following elements (E1) to (E3).
(E1) A detection tool that is attached to the cover and that includes a communication device and a sheet-shaped radio wave shield member. When the radio wave shield member is close to the communication device, the radio wave shield member shields a radio wave emitted by the communication device.
(E2) A wireless device that wirelessly communicates with the communication device.
(E3) A control device that acquires a result of whether communication with the communication device by the wireless device is possible, and determines, based on the result, whether the cover is detached.

Here, a first posture is defined as a posture taken by the cover attached to the container main body when the opening of the container main body is oriented upward. A second posture is defined as a posture taken by the cover when the cover of the first posture is reversed. The detection tool is configured in such a way that a state of the detection tool can be changed between a state where the communication device and the radio wave shield member are separated from each other and a state where the communication device and the radio wave shield member are close to each other, when a posture of the cover is changed from the first posture to the second posture.

In the present disclosure, "upward" means a direction opposite to the vertical downward direction.

In this system, a communication state (a state where the communication is possible or a state where the communication is impossible) between the communication device and the wireless device changes depending on a posture taken by the cover. Thus, monitoring a reception state of the wireless device enables detection of whether the cover is detached from the container main body. In this case, a communication state between the communication device and the wireless device may become a state where the communication is possible when the cover takes the first posture, and may become a state where the communication is impossible when the cover takes the second posture. Conversely, a communication state between the communication device and the wireless device may become a state where the communication is possible when the cover takes the second posture, and may become a state where the communication is impossible when the cover takes the first posture.

The radio wave shield member may be a member that changes a frequency of a radio wave emitted from the communication device to an unintended frequency at which the communication with the wireless device is impossible. The radio wave shield member may be a member that superimposes noise on a radio wave emitted from the communication device, in such a way as to inhibit communication with the wireless device.

According to a second aspect of the present invention, in the first aspect, the detection tool is configured in such a way that when the cover changes from the first posture to the second posture, the communication device and the radio wave shield member change from a state of being close to each other to a state of being separated from each other. Thereby, a communication state between the communication device and the wireless apparatus becomes a state where the communication is impossible when the cover takes the first posture, and becomes a state where the communication is possible when the cover takes the second posture. The item is kept in a stored state for a long time, i.e., the cover is kept attached to the container main body and the cover is thus kept in the first posture for a long time. For this reason, the communication device and the wireless device are unable to communicate with each other during such a long time, and a data amount of communication between the communication device and the wireless device can be suppressed.

According to a third aspect of the present invention, in the first or second aspect, the detection tool includes a movable member and a housing. One of the communication device and the radio wave shield member is attached to the movable member. The housing forms a space in which the movable member can move in the vertical direction. The other of the communication device and the radio wave shield member is arranged in the space of the housing. When the cover changes from the first posture to the second posture, the communication device and the radio wave shield member change between a state of being separated from each other and a state of being close to each other, depending on movement of the movable member in the space. A positional relation between the communication device and the radio wave shield member is determined depending on a position of the movable member that can move in the vertical direction. Thus, the detection tool can be made smaller in size.

According to a fourth aspect of the present invention, in any of the first to the third aspects, the item management system further includes a reference communication device that is arranged in a position where a radio wave is not shielded by the radio wave shield member regardless of whether the cover of the item is detached. The wireless device communicates with the reference communication device. The control device acquires a result of whether the wireless device is able to communicate with the reference communication device. It can be determined whether the system is operating normally, by providing the reference communication device that can communicate with the wireless device regardless of whether the cover of the item is detached.

According to a fifth aspect of the present invention, in any of the first to the fourth aspects, the communication device is a wireless tag that collects surrounding a radio wave and converts the collected radio waves into electric power, and that includes a capacitor storing the electric power. Such a wireless tag is preferable from a standpoint of being usable for a long term without maintenance.

According to a sixth aspect of the present invention, in any of the first to the fourth aspects, the communication device is a UHF-band wireless tag. Such a wireless tag is preferable from a standpoint of being widely available.

According to a seventh aspect of the present invention, in any one of the first to fourth aspects, the communication device is an HF-band wireless tag. Such a wireless tag is preferable from a standpoint of being widely available.

According to an eighth aspect of the present invention, in any one of the first to fourth aspects, the communication device is a microwave-band wireless tag. Such a wireless tag is preferable from a standpoint of being widely available.

Another aspect of the present invention provides a detection method for a product that includes a container main body and a cover. The container main body includes an opening formed for inserting or extracting contents. The cover is detachably coupled to the container main body. When attached to the container main body, the cover tightly closes the opening. The detection method is a method for detecting that the cover is detached. The detection method includes the following steps (S1) to (S5).
(S1) Attaching a detection tool to the cover of the item. The detection tool includes a communication device and a sheet-shaped radio wave shield member. When the radio wave shield member is close to the communication device, the radio wave shield member shields a radio wave emitted by the communication device.
(S2) With the cover taking a first posture, causing the communication device and the radio wave shield member in the detection tool to be close to each other, and thereby shielding a radio wave emitted by the communication device. The first posture is defined as a posture taken by the cover attached to the container main body when the opening of the container main body is oriented upward. A second posture is defined as a posture taken by the cover when the cover of the first posture is reversed.
(S3) With the cover taking the second posture, causing the communication device and the radio wave shield member in the detection tool to be separated from each other, and thereby allowing a radio wave from the communication device to be emitted without being shielded.
(S4) Acquiring a result of whether a wireless device is able to communicate with the communication device.
(S5) Determining, based on the result, whether the cover is detached.

According to the detection method, monitoring a reception state of the wireless device enables detection of whether the cover is detached from the container main body.

A still another aspect of the present invention provides a detection tool for a product that includes a container main body and a cover. The container main body includes an opening formed for inserting or extracting contents. The cover is detachably coupled to the container main body. When attached to the container main body, the cover tightly closes the opening. The detection tool is attached to the cover in order to detect that the cover is detached.

The detection tool includes the following elements (E1) to (E4).
(E1) A communication device.
(E2) A sheet-shaped radio wave shield member. When the radio wave shield member is close to the communication device, the radio wave shield member shields a radio wave emitted by the communication device.
(E3) A movable member. One of the communication device and the radio wave shield member is attached to the movable member.
(E4) A housing. The housing forms a space in which the movable member can move in the vertical direction. The other of the communication device and the radio wave shield member is arranged in the space of the housing.

Here, a first posture is defined as a posture taken by the cover attached to the container main body when the opening of the container main body is oriented upward. A second posture is defined as a posture taken by the cover when the cover of the first posture is reversed. In this case, when the cover changes from the first posture to the second posture, the communication device and the radio wave shield member change between a state of being separated from each other and a state of being close to each other, depending on movement of the movable member in the space.

The detection tool can be made relatively compact, and is thus suitable to be incorporated in the cover of the item.

The following will describe an embodiment with reference to the drawings.

In the following description, one example cited as the item is a product whose contents are consumed by an appropriate amount each time in a home of a consumer. The contents are assumed to be solid contents (including powdered contents and granular contents) or liquid contents. Examples of the contents include seasoning and instant coffee (granular contents), coffee beans (solid contents), a softener and a detergent (e.g., liquid or powdered contents), alcoholic beverages (liquid contents), and the like. In the following description, the meaning of "consuming the product" is the same as consuming the contents associated with the product.

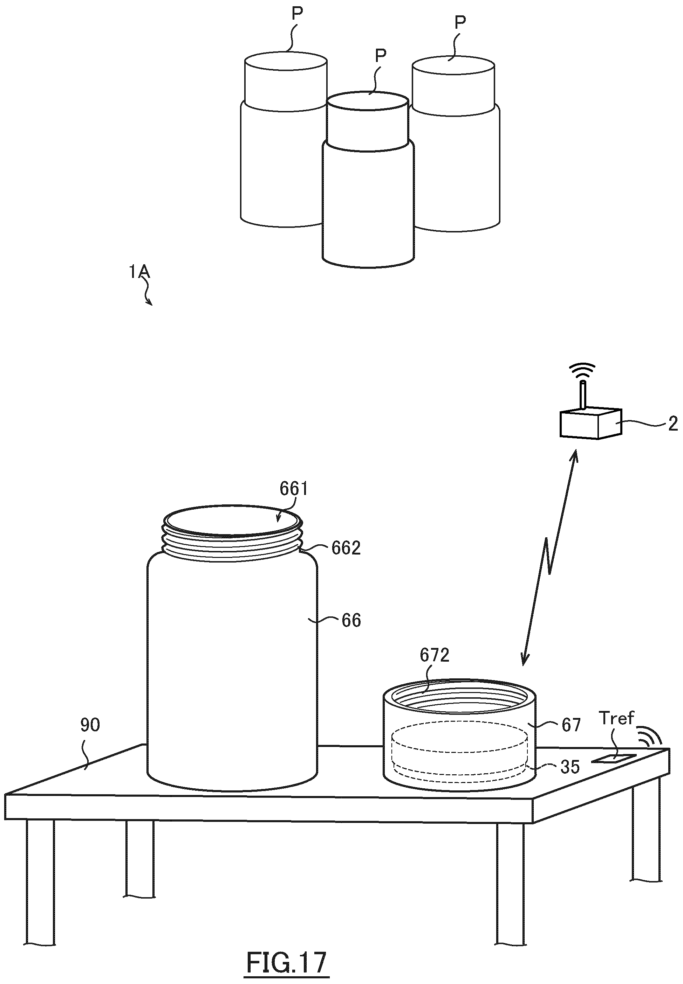

FIG. 17 illustrates an application example of a product management system 1A according to one embodiment. As illustrated in FIG. 17, the product management system 1A according to the one embodiment is configured in such a way that a plurality of the products P are stored in a home, and when a consumer consumes one of a plurality of the products P, information concerning the consumed product P and a time point of the consuming can be automatically recorded.

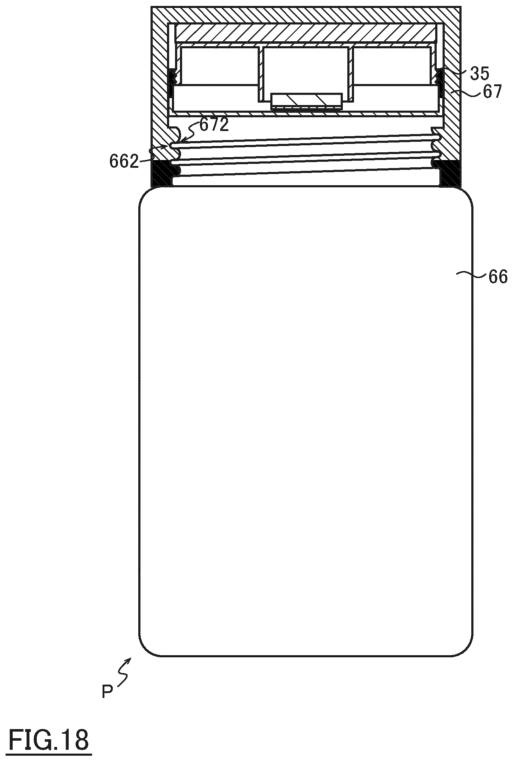

FIG. 18 is a side view illustrating the product P illustrated in FIG. 17. FIG. 18 illustrates, by the sections, a cover 67 of the product P and a reverse detection tool 35.

As illustrated in FIG. 17 and FIG. 18, the product P includes a container main body 66 and the cover 67. The container main body 66 includes an opening 661 for inserting or extracting the contents. The cover 67 is detachably coupled to the container main body 66. When the product P is stored, a fitting portion 662 of the container main body 66 and a fitting portion 672 of the cover 67 are fitted to each other, and thereby close (tightly close) the opening 661. Conversely, in a case of consuming the product P, a consumer releases the fitting between the fitting portion 662 and the fitting portion 672, detaches the cover 67 from the container main body 66, and then reverses the cover 67 and places the reversed cover 67 on a horizontal location such as a table 90 (refer to FIG. 17).

In the product management system 1A according to the one embodiment, the reverse detection tool 35 is incorporated in the cover 67 of the product P. The reverse detection tool 35 is configured in such a way as to detect a state that is one of a state (referred to as "normal state") of the cover 67 coupled to the container main body 66 when the product P is placed on a horizontal surface as illustrated in FIG. 18 and a state (referred to as "reversed state") where the cover 67 is reversed. In other words, when the consumer is storing the product P, the cover 67 is in the normal state, and when the consumer is consuming the product P, the cover 67 is in the reversed state. Thus, detecting whether the cover 67 is in the normal state or in the reversed state enables detection of whether the consumer is consuming the product P.

A posture taken by the cover 67 when the cover 67 is in the normal state is one example of the first posture. A posture taken by the cover 67 when the cover 67 is in the reversed state is one example of the second posture. In other words, the cover 67 in the normal state is in a posture (the first posture) taken by the cover 67 attached to the container main body 66 when the opening 661 of the container main body 66 is oriented upward. The cover 67 in the reversed state is in a posture (second posture) taken by the cover 67 when the cover 67 of the first posture is reversed.

As illustrated in FIG 17, a wireless device 2 is arranged near a location where the product P to be consumed is placed. The wireless device 2 is arranged for wirelessly communicating with an Internet-of-things (IoT) tag T (described below) included in the reverse detection tool 35 incorporated in the cover 67. As described below, the wireless device 2 is a gateway device that can communicate with a tag management server (described below) via a network. The wireless device 2 is arranged by taking into consideration a radio wave output of the IoT tag T.

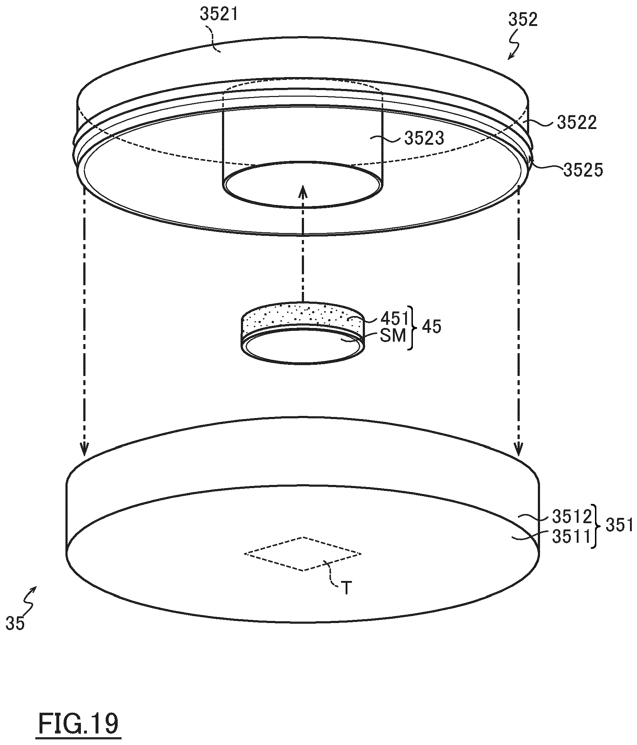

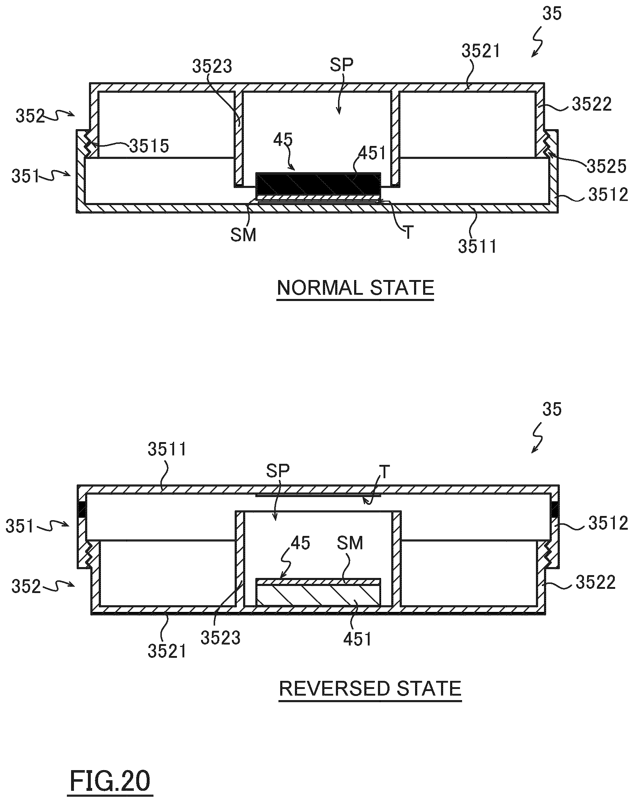

Next, a structure of the reverse detection tool 35 incorporated in the cover 67 will be described with reference to FIG. 19 and FIG. 20. FIG. 19 is an exploded perspective view of the reverse detection tool 35. FIG. 20 includes sectional views of the reverse detection tool 35 illustrated in FIG. 19 in the normal state and in the reversed state.

As illustrated in FIG. 19, the reverse detection tool 35 includes a first housing portion 351, a second housing portion 352, and a movable member 45.

The first housing portion 351 includes a circular base 3511 and a side portion 3512 provided along a periphery of the base 3511. The IoT tag T (one example of the communication device) is attached to a surface included in the base 3511 and facing the second housing portion 352. The IoT tag is a wireless tag that collects surrounding radio waves and converts the collected radio waves into electric power, and that includes a capacitor storing the electric power. Such an IoT tag is preferable from a standpoint of being usable for a long term without maintenance. Hereinafter, the IoT tag T is referred to simply as "tag T."

The side portion 3512 of the first housing portion 351 includes a fitting portion 3515 (refer to FIG. 20) formed for being fitted to the second housing portion 352. The fitting portion 3515 is a threaded portion formed along a periphery of the side portion 3512.

The maximum communication distance of the tag T is, but not limited to, a value in a range from 3 meters to 10 meters, for example. The tag T is configured to make wireless communication with low electric power consumption. Examples of a communication protocol for the tag T include Bluetooth (registered trademark) Low Energy (hereinafter, BLE), Bluetooth (registered trademark), and ZigBee (registered trademark). The following will describe an exemplified case where the communication is made by BLE.

When the tag T is based on the standard of BLE, the tag T broadcasts a packet at a predetermined interval (e.g., every short period in a range from approximately 1 second to approximately 10 seconds). The packet transmitted by the tag T includes the tag ID that is identification information of the tag. The wireless device 2 illustrated in FIG. 17 communicates with the tag T by BLE.

The second housing portion 352 includes a circular base 3521, a side portion 3522 provided along a periphery of the base portion 3521, and a cylindrical portion 3523 provided in such a way as to protrude from the base 3521 toward the first housing portion 351.

The side portion 3522 of the second housing portion 352 includes a fitting portion 3525 for being coupled to the first housing portion 351. The fitting portion 3525 is a threaded portion formed along a periphery of the side portion 3522. A housing of the reverse detection tool 35 is formed by fitting the fitting portion 3515 of the first housing portion 351 to the fitting portion 3525 of the second housing portion 352.

A method of coupling the first housing portion 351 to the second housing portion 352 is not limited to a method of fitting the threaded portions to each other. The first housing portion 351 and the second housing portion 352 may be coupled to each other by press fitting.

The movable member 45 is configured to include a disk-shaped attachment portion 451 and a radio wave shield member SM that is attached to the attachment portion 451 by an adhesive, for example. The attachment portion 451 may be made of resin or metal. The radio wave shield member SM is a sheet-shaped member. When close to the tag T, the radio wave shield member SM shields a radio wave emitted by the tag T. When the tag T includes a communication antenna and a harvesting antenna as described below, the radio wave shield member SM preferably shields only the communication antenna.

For example, a metal-deposited sheet can be used as the radio wave shield member SM. The metal-deposited sheet includes a transparent PET film, an aluminum vapor deposition layer (coating), and an adhesive that are layered on each other in this order. The metal-deposited sheet is attached to a back surface of the base 3511 by the adhesive. A foil sheet may be used instead of the metal-deposited sheet. Instead of this, a metal plate, a radio wave absorbing sheet, or a sheet including a coating into which metal powder or magnetic powder is mixed can also be used.

In FIG. 19, the radio wave shield member SM is circular to match with a shape of the attachment portion 451. However, there is no limitation to this. A shape of the radio wave shield member SM may be any shape as long as the radio wave shield member SM can shield a radio wave from the tag T when close to the tag T. For example, the radio wave shield member SM may be rectangular or polygonal.

As illustrated in FIG. 19, when the first housing portion 351 and the second housing portion 352 are coupled to each other, the movable member 45 is inserted into the cylindrical portion 3523 of the second housing portion 352 in a direction in which the radio wave shield member SM faces the tag T. Thereby, the reverse detection tool 35 is completed.

With reference to FIG. 20, the reverse detection tool 35 includes a space SP formed inside the cylindrical portion 3523. In the space SP, the movable member 45 is movable between the base 3511 and the base 3521. A gap may be present or absent between a distal end of the cylindrical portion 3523 and the base 3511. When the gap is present, the gap has a size that prevents the movable member 45 from escaping from the space SP.

In the normal state (the state of the cover 67 coupled to the container main body 66 when the product P is placed on a horizontal surface) in FIG. 20, the radio wave shield member SM of the movable member 45 comes in contact with or close to the tag T attached to the base 3511 of the first housing portion 351, and thereby shields a radio wave from the tag T. Meanwhile, in the reversed state (the state where the cover portion 67 is reversed from the normal state), the radio wave shield member SM of the movable member 45 is separated from the tag T attached to the base 3511 of the first housing portion 351, and thus, does not shield a radio wave emitted from the tag T. Accordingly, the tag T becomes able to communicate with the wireless device 2 (FIG. 17).

The following will describe operation of the product management system 1A according to the one embodiment with reference to FIG. 17 and FIG. 20.

In a state where the product P is stored in a home, the reverse detection tool 35 incorporated in the cover 67 of the product P is in the normal state. When the reverse detection tool 35 is in the normal state, the radio wave shield member SM and the tag T are close to each other as illustrated in FIG. 20. Thus, a radio wave from the tag T is shielded by the radio wave shield member SM, and the tag T and the wireless device 2 cannot communicate with each other.

When a consumer consumes one of the products P, the consumer detaches the cover 67 from the container main body 66, reverses the cover 67, and places the reversed cover 67 on a horizontal location such as a table 90. Thereby, the reverse detection tool 35 incorporated in the cover 67 of the product P is caused to be in the reversed state. When the reverse detection tool 35 is in the reversed state, the radio wave shield member SM and the tag T are separated from each other as illustrated in FIG. 20. Thus, a radio wave emitted from the tag T is not shielded by the radio wave shield member SM, and the wireless device 2 can receive a packet transmitted from the tag T. The packet received by the wireless device 2 includes the tag ID.

As described below, the tag ID is associated with a product code of the product P. By receiving the tag ID, it can be recognized which product P is consumed and when the product P is consumed.

As illustrated in FIG. 17, a reference tag Tref is preferably arranged on the table 90, for example. The reference tag Tref is a tag for reference, and is a device having the same configuration as that of the tag T.

The reference tag Tref may be arranged at any location as long as the reference tag Tref can communicate with the wireless device 2 regardless of whether the product P is being consumed. The reference tag Tref is provided for determining whether the wireless device 2 is operating normally. Particularly, in a state where all the products P are stored without being consumed, the wireless device 2 cannot receive a radio wave emitted from any of the tags T of all the reverse detection tools 35. For this reason, if the reference tag Tref is not provided, it is difficult to determine whether the system is operating normally. In light of this, providing the reference tag Tref that can communicate with the wireless device 2 regardless of whether the product P is being consumed enables determination of whether the system is operating normally.

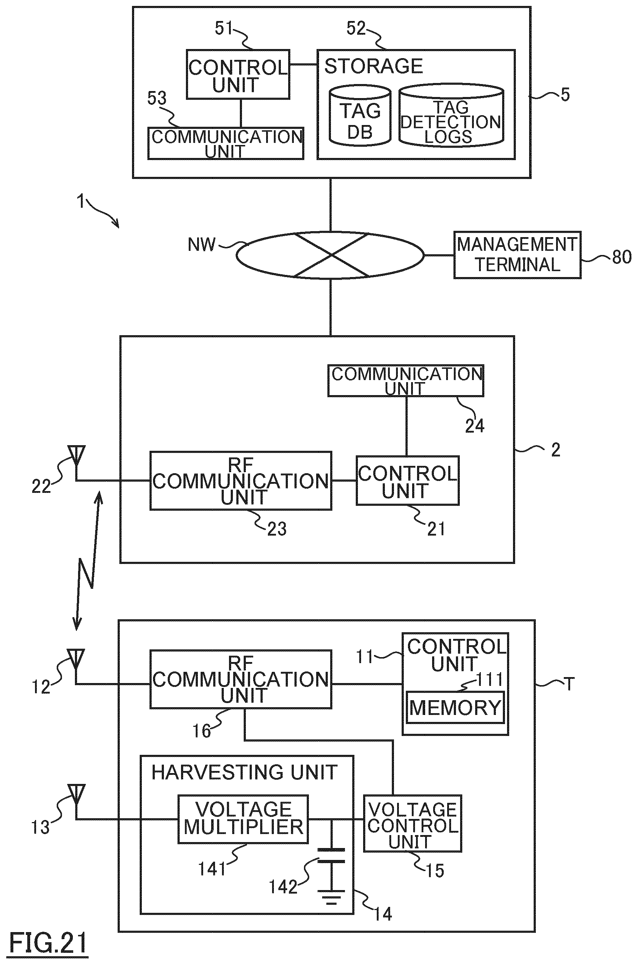

Next, a configuration of each device of the product management system 1A according to the one embodiment will be described with reference to FIG. 21.

FIG. 21 is a block diagram illustrating an internal configuration of each device in the product management system 1 according to the present embodiment.

As illustrated in FIG. 21, the product management system 1A includes the tag T, the wireless device 2, the tag management server 5 (one example of the control device), and a management terminal 80. The wireless device 2 and the tag management server 5 can communicate with each other via the network NW. The tag management server 5 and the management terminal 80 can communicate with each other via the network NW. The network NW is, but not limited to, a local area network (LAN), a wide area network (WAN), a mobile communication network, the Internet, or the like, for example.

The wireless device 2 functions as a BLE wireless terminal that receives packets from the tag T and the reference tag Tref by the BLE communication. When the wireless device 2 receives a packet from each of the tags, the wireless device 2 transmits the tag ID included in the received packet to the tag management server 5.

When the tag T and the reference tag Tref are in a state of being able to normally transmit packets, the tag T and the reference tag Tref each transmit a packet at a predetermined interval. In response to this, the wireless device 2 also transmits the tag ID to the tag management server 5 at the predetermined interval.

The management terminal 80 is a terminal that acquires and displays information concerning consumed timings of each product P detected by the tag management server 5. However, the management terminal 80 is not essential in this system.

Referring to FIG. 21, the tag T includes a control unit 11, a communication antenna 12, a harvesting antenna 13, a harvesting unit 14, a voltage control unit 15, and an RF communication unit 16. The control unit 11, the harvesting unit 14, the voltage control unit 15, and the RF communication unit 16 are mounted in the IC chip. Although the following will describe the configuration of the tag T, the configuration of the reference tag Tref, which is not illustrated in FIG. 21, is the same as that of the tag T.

The control unit 11 includes a microprocessor and a memory 111. The control unit 11 controls the entire tag T. The memory 111 is constituted by one or both of a random-access memory (RAM) and a read-only memory (ROM). The memory 111 stores programs executed by the microprocessor, and stores the tag ID that is identification information unique to the tag T.

The harvesting unit 14 harvests electric power from a radio wave (e.g., a radio wave generated by the surrounding wireless communication) that the harvesting antenna 13 receives from the surrounding environment. The harvesting unit 14 stores the harvested electric power in an internal capacitor 142. In the present embodiment, for example, the harvesting unit 14 includes a voltage multiplier 141 converting, into a DC voltage, a radio signal received by the harvesting antenna 13, and includes the capacitor 142 storing the DC voltage. The voltage multiplier 141 may be, but not limited to, a Dickson voltage multiplier circuit (charge pump), for example. The capacitor 142 may be one (i.e., an on-die capacitor) configured on the semiconductor chip, or may be one formed separately from the semiconductor chip.

Radio waves received by the harvesting antenna 13 for electric power generation are radio waves in a plurality of different frequency bands within a wide frequency band. Examples of such radio waves include radio waves generated by the wireless communication in the frequency bands used in mobile communication systems of what are called 3G to 5G and the like, radio waves generated by the wireless communication in the frequency bands used in the communication standards such as Bluetooth (registered trademark) and Wi-Fi (registered trademark), radio waves generated by the wireless communication in the 2.4-GHz band represented by the communication protocols such as ZigBee (registered trademark) and Thread, and radio waves generated by the wireless communication in the frequency bands (e.g., the 900-MHz band and the 13.56-MHz band) used in the RFID.

The harvesting antenna 13 is not limited to a single antenna. For example, the harvesting antenna 13 may be a dual antenna compatible with two frequency bands (e.g., the 900-MHz band (UHF band) and the 2.4-GHz band).

The voltage control unit 15 supplies an operation voltage to the control unit 11 and the RF communication unit 16. Preferably, the voltage control unit 15 monitors a voltage of the capacitor 142, and switches a power mode, depending on the monitored result.

For example, when a voltage of the capacitor 142 is lower than a predetermined value, the voltage control unit 15 sets the power mode to be a first mode of operating only the minimum circuitry. In this case, the control unit 11 and the RF communication unit 16 cease generation of a packet, transmission of a radio signal, and the like. When a voltage of the capacitor 142 becomes equal to or higher than the predetermined value by charging of the capacitor 142, the voltage control unit 15 sets the power mode to be a second mode of executing a normal processing routine. In this case, the control unit 11 and the RF communication unit 16 perform various pieces of processing including generation of a packet and transmission of a radio signal.

The RF communication unit 16 applies predetermined digital modulation (e.g., the Gaussian frequency shift keying (GFSK)) to a transmission-target packet (baseband signal). Then, the RF communication unit 16 applies orthogonal modulation to the digital-modulated packet, and sends the high-frequency signal (a signal in the 2.4-GHz frequency band in a case of BLE) to the communication antenna 12.

The communication antenna 12 transmits the high-frequency radio signal (packet) sent by the RF communication unit 16.

As illustrated in FIG. 21, the wireless device 2 includes a control unit 21, an antenna 22, an RF communication unit 23, and a communication unit 24.

The control unit 21 is constituted mainly by a microprocessor. The control unit 21 controls the entire wireless device 2. For example, when the control unit 21 acquires the tag ID from the packet received from the tag T, the control unit 21 controls the communication unit 24 to transmit the acquired tag ID to the tag management server 5.

The RF communication unit 23 demodulates the radio signal received by the antenna 22 from the tag T to convert the radio signal into the baseband signal. Then, the RF communication unit 23 applies predetermined digital demodulation to the baseband signal to receive the packet. In order to transmit a beacon signal from the antenna 22, the RF communication unit 23 applies orthogonal modulation to a baseband signal of a predetermined pattern, for example, and sends the orthogonal-modulated signal to the antenna 22.

The communication unit 24 functions as a communication interface for communicating with the tag management server 5.

As illustrated in FIG. 21, the tag management server 5 includes a control unit 51, a storage 52, and a communication unit 53, for example.

The control unit 51 is constituted mainly by a microprocessor. The control unit 51 controls the entire tag management server 5.

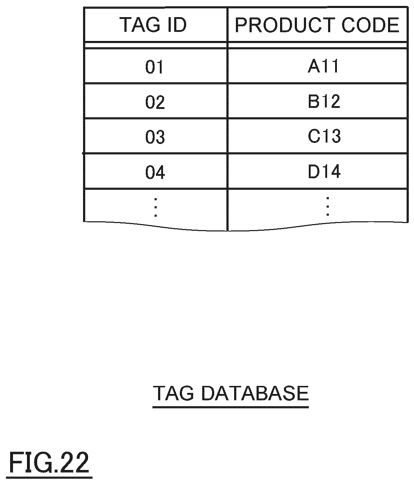

The storage 52 includes a large-scale storage device such as a hard disk drive (HDD). The storage 52 stores a tag database (tag DB). As illustrated in FIG. 22, the tag database includes, in association with each other, the tag ID of the tag T, and a product code of the product including the cover in which the reverse detection tool 35 including the tag T is incorporated. The storage 52 also stores the tag ID of the reference tag Tref.

The communication unit 53 functions as a communication interface for communicating with the wireless device 2 and the management terminal 80.

The control unit 51 executes a server program. Thereby, when the wireless device 2 receives packets transmitted by the respective tags T and the reference tag Tref and including the tag IDs, the control unit 51 acquires, from the wireless device 2, the tag IDs included in the packets.

In the one embodiment, each time the control unit 51 acquires the tag ID of the reference tag Tref from the wireless device 2, the control unit 51 records, in the storage 52, as a tag detection log, the acquired tag ID and a time point at which the control unit 51 acquires the tag ID. As illustrated in FIG. 17, the reference tag Tref is not shielded. Thus, unless the wireless device 2 is malfunctioning, the control unit 51 can acquire the tag ID of the reference tag Tref at the predetermined interval at which the reference tag Tref transmits a packet. When the control unit 51 cannot acquire the tag ID of the reference tag Tref at the predetermined interval, the control unit 51 determines that the wireless device 2 is malfunctioning, and notifies the management terminal 80 of the determined result.

Each time the control unit 51 acquires the tag ID of any of the tags T from the wireless device 2, the control unit 51 refers to the tag database, thereby identifies the product code associated with the acquired tag ID, generates an image indicating the identified result, and transmits the generated image to the management terminal 80. The result that the tag ID has been acquired indicates that the product associated with the tag ID is being consumed.

The control unit 51 may determine whether the product is being consumed, based on a frequency at which the tag T transmits a signal (packet).

When the product is stored, so that the tag T is close to the radio wave shield member SM but does not sufficiently contact with the radio wave shield member SM, there is a case where radio waves emitted from the tag T are not completely shielded, and as a result, the wireless device 2 receives the signal from the tag T. In this case, the tag T emits a signal less frequently, and thus, the wireless device 2 also receives the signal from the tag T less frequently. In view of the above, when the tag T emits a signal less frequently, and as a result, a frequency at which the control unit 51 acquires the tag ID from the wireless device 2 is smaller than a predetermined threshold value, the control unit 51 determines that the associated product is stored.

The management terminal 80 is an information processing terminal used for observing consumed timings and a consumed frequency of each of the products. Examples of the management terminal 80 include a personal computer (PC), a tablet terminal, a smartphone, and the like.

The management terminal 80 displays the information (e.g., the information indicating that the wireless device 2 is malfunctioning) notified by the tag management server 5, and the image transmitted from the tag management server 5. The image transmitted from the tag management server 5 is, for example, an image including consumed timings and a consumed frequency of each of the products.

The management terminal 80 and the tag management server 5 communicate with each other by using the HTTPS, for example, but the communication protocol is not particularly limited. A web browser of the management terminal 80 displays a web page including the image transmitted from the tag management server 5.

As described above, the above-described product management system 1A is configured in such a way as to detect whether the cover of the product including the container main body and the cover is detached and reversed, based on whether communication is possible between the wireless device 2 and the tag T that is incorporated in the detection tool. Thus, a consumed state of the contents contained in the container main body can be recognized in real time. When a fixed amount of the contents is consumed at one time, a remaining amount of the contents can be predicted based on an actual record of the number of times (frequency) of consuming the contents. Since data of an actual consuming state in a home of a consumer can be acquired, the data can be used for various purposes including a purpose of product marketing.

A detection method (one example of an item management method) according to one embodiment is a method for the product P that includes the container main body 66 and the cover 67. The container main body 66 includes the opening 661 formed for inserting or extracting contents. The cover 67 is detachably coupled to the container main body 66. The detection method is a method for detecting that the cover 67 is detached. The detection method includes the following steps (S1) to (S5).
(S1) The step of attaching the reverse detection tool 35 to the cover 67 of the product P. The reverse detection tool 35 includes the tag T and the sheet-shaped radio wave shield member SM. When the radio wave shield member SM is close to the tag T, the radio wave shield member SM shields a radio wave emitted by the tag T.
(S2) The step of, when the cover 67 is in the normal state, causing the tag T and the radio wave shield member SM to be close to each other in the reverse detection tool 35 so that a radio wave emitted by the tag T is shielded.
(S3) The step of, when the cover 67 is in the reversed state, causing the tag T and the radio wave shield member SM to be separated from each other in the reverse detection tool 35 so that a radio wave emitted by the tag T is not shielded.
(S4) The step of acquiring a result of whether the wireless device 2 is able to communicate with the tag T.
(S5) The step of determining, based on the result, whether the cover 67 is detached.

Although the embodiments of the item management system, the detection method, and the detection tool according to the present invention have been described above, the present invention is not limited to the above-described embodiments. The above-described embodiments can be variously improved or modified within a range that does not depart from the essence of the present invention.

In the above-described case, in the above-described reverse detection tool 35, the movable member 45 includes the radio wave shield member SM, and the tag T is attached to the immovable first housing portion 351. However, there is no limitation to this. Conversely, the movable member 45 may include the tag T, and the radio wave shield member SM may be attached to the first housing portion 351. Also in this case, the similar operation can be made.

In the above-described case, in the above-described reverse detection tool 35, the tag T and the radio wave shield member SM are close to each other in the normal state, and the tag ID and the radio wave shield member SM are separated from each other in the reversed state. However, there is no limitation to this.

The reverse detection tool may be configured in such a way that the tag T and the radio wave shield member SM are separated from each other in the normal state, and the tag ID and the radio wave shield member SM are close to each other in the reversed state. Also in this case, either the normal state or the reversed state can be detected. For example, in the reverse detection tool 35 of FIG. 20, the tag T may be attached to the opposite surface of the movable member 45, and the radio wave shield member SM may be attached to the base portion 3521 in such a way as to face the tag T.

The above-described configuration of the reverse detection tool 35 has an advantage of being able to suppress a data amount of communication. In other words, the product P is kept in a stored state for a long time, i.e., the cover 67 is kept attached to the container main body 66 and the cover 67 is thus kept in the normal state for a long time. For this reason, the tag T and the wireless device 2 are unable to communicate with each other during such a long time, and a data amount of communication between the tag T and the wireless device 2 can be suppressed.

### (4) Fourth Embodiment

Next, the fourth embodiment will be described.

Conventionally, for example, there is a known method for detecting that a cover of a beverage container is opened.

For example, Japanese Patent Application Laid-Open Publication No 2020-187635 proposes an IC tag label for detecting that a cover of a container is opened. The IC tag label includes an opening detection unit, an antenna coil, and an IC chip that are provided on a label substrate. The opening detection unit detects that the cover of the container is opened. The antenna coil can communicate with an external device. The IC chip is electrically connected to the opening detection unit and the antenna coil. The opening detection unit includes slits or weakened lines, and an opening detection wiring. The slits or weakened lines are provided in such a way as to enable breakage of the opening detection unit that extends to be on a pull tag of the container. The opening detection wiring detects that the cover of the container is opened. The IC tag label is configured in such a way that the IC chip detects breakage of the opening detection unit.

Incidentally, there is an item including a container whose inside contents are allowed to be extracted by a user rotating a member provided at an outer periphery of the container, instead of opening a cover. It has not been conventionally known that the rotational operation on such an item can be detected with a simple configuration

In view of the above, an object of the present invention is to enable rotational operation on an item to be detected with a simple configuration.

The following will describe one embodiment of an item management system according to the present invention. Configurations described below are not limited to those in the drawings described by the brief description of the drawings.

A first aspect of the present invention provides an item management system for an item that includes a cylindrical container main body and a cylindrical slide member. The slide member can slide, between a first position and a second position, on an outer periphery of the container main body. In the present disclosure, "item" means a tangible object such as a product, a manufactured item, a semi-manufactured item (an item at an intermediate stage in course of being manufactured), or a mock-up.

The item management system according to the first aspect includes the following elements (E1) to (E4).
(E1) A communication device that is attached to one of a peripheral surface of the container main body and a peripheral surface of the slide member.
(E2) A sheet-shaped radio wave shield member that is attached to the other of the peripheral surface of the container main body and the peripheral surface of the slide member. When the radio wave shield member is close to the communication device, the radio wave shield member shields a radio wave emitted by the communication device.
(E3) A wireless device that wirelessly communicates with the communication device.
(E4) A control device that acquires a result of whether the wireless device is able to communicate with the communication device, and determines whether, based on the result, the slide member is located at the first position or at the second position.

Further, the item management system according to the first aspect is configured as follows. When the slide member is located at the first position, the communication device and the radio wave shield member at least partially overlap with each other over the peripheral direction. When the slide member is located at the second position, the communication device and the radio wave shield member do not overlap with each other over the peripheral direction.

In the item management system according to the first aspect, when the slide member is located at the first position, the communication device and the radio wave shield member at least partially overlap with each other over the peripheral direction. Thus, the communication device and the wireless device cannot communicate with each other. When the slide member is located at the second position, the communication device and the radio wave shield member do not overlap with each other over the peripheral direction. Thus, a radio wave emitted by the communication device is not shielded, and the communication device and the wireless device can communicate with each other. For this reason, rotational operation on the item, i.e., operation (operation of rotation between the first position and the second position) of rotating the slide member relative to the container main body of the item can be detected with a simple configuration.

The radio wave shield member may be a member that changes a frequency of a radio wave emitted from the communication device to an unintended frequency at which the communication with the wireless device is impossible. The radio wave shield member may be a member that superimposes noise on radio waves emitted from the communication device, in such a way as to inhibit communication with the wireless device.

According to a second aspect of the present invention, in the item management system of the first aspect, a first opening is formed on a side surface of the container main body, and a second opening is formed on a side surface of the slide member. When the slide member is located at the first position, the first opening is closed by the slide member. When the slide member is located at the second position, at least a part of the first opening is exposed through the second opening, and the communication device is exposed through the second opening.

According to the second aspect of the present invention, when the slide member is located at the first position while the container main body contains contents, the first opening is closed by the slide member, and thus, the contents of the container main body cannot be taken out. Meanwhile, when the slide member is located at the second position, at least a part of the first opening is exposed through the second opening, and thus, the contents of the container main body can be taken out. Accordingly, rotating the slide member enables the contents of the container main body to be taken out or prevented from escaping to an outside.

The contents may be, but not limited to, foodstuffs such as seasoning and gum, or industrial products such as screws and nuts.

According to a third aspect of the present invention, in the item management system of the first or second aspect, the communication device is attached to the peripheral surface of the container main body, and the radio wave shield member is attached to the peripheral surface of the slide member.

According to a third aspect of the present invention, when the slide member is located at the first position, and the communication device and the radio wave shielding member at least partially overlap with each other over the peripheral direction, the radio wave shield member covers the communication device from an outer side. Thereby, the radio wave shield member can more effectively shield a radio wave emitted by the communication device.

According to a fourth aspect of the present invention, in any one of the first to third aspects, the communication device is a wireless tag that collects surrounding radio waves and converts the collected radio waves into electric power, and that includes a capacitor storing the electric power. According to the fourth aspect of the present invention, the wireless tag is preferable from a standpoint of being usable for a long term without maintenance.

According to a fifth aspect of the present invention, in any one of the first to third aspects, the communication device is a UHF-band wireless tag. According to the fifth aspect of the present invention, the wireless tag is preferable from a standpoint of being widely available.

According to a sixth aspect of the present invention, in any one of the first to third aspects, the communication device is an HF-band wireless tag. According to the sixth aspect of the present invention, the wireless tag is preferable from a standpoint of being widely available.

According to a seventh aspect of the present invention, in any one of the first to third aspects, the communication device is a microwave-band wireless tag. According to a seventh aspect of the present invention, the wireless tag is preferable from a standpoint of being widely available.

Another aspect of the present invention provides an item management method for an item that includes a cylindrical container main body and a cylindrical slide member. The slide member can slide, between a first position and a second position, on an outer periphery of the container main body. Here, a communication device is attached to one of a peripheral surface of the container main body and a peripheral surface of the slide member. A sheet-shaped radio wave shield member is attached to the other of the peripheral surface of the container main body and the peripheral surface of the slide member. When close to the communication device, the radio wave shield member shields a radio wave emitted by the communication device.

The item management method includes the following steps.
(S1) The step of locating the slide member at the first position, and thereby causing the radio wave shield member to at least partially overlap with the communication device over a peripheral direction in such a way as to shield a radio wave emitted from the communication device, resulting in that the communication device becomes unable to wirelessly communicate with a wireless device.
(S2) The step of rotating the slide member by a user of the item in such a way as to locate the slide member at the second position, and thereby causing the radio wave shield member to no longer overlap with the communication device over the peripheral direction, resulting in that the communication device becomes able to wirelessly communicate with the wireless device.
(S3) The step of acquiring a result of whether the wireless device is able to communicate with the communication device, and determining, based on the result, whether the slide member is located at the first position or at the second position.

According to the item management method, the rotational operation on the item, i.e., the operation (the operation of rotation between the first position and the second position) of rotating the slide member relative to the container main body of the item can be detected with a simple configuration.

The following will describe an embodiment with reference to the drawings.

One example of an item cited in the following description is a product whose contents are consumed by an appropriate amount at each time in a home or workplace of a consumer. The contents are assumed to be solid contents (including powdered contents and granular contents). Examples of the contents include seasoning (such as red pepper and cinnamon) and coffee beans (solid or granular contents), thumbtacks, nails, screws, nuts, and the like. In the following description, the meaning of "consuming the product" is the same as consuming the contents associated with the product.

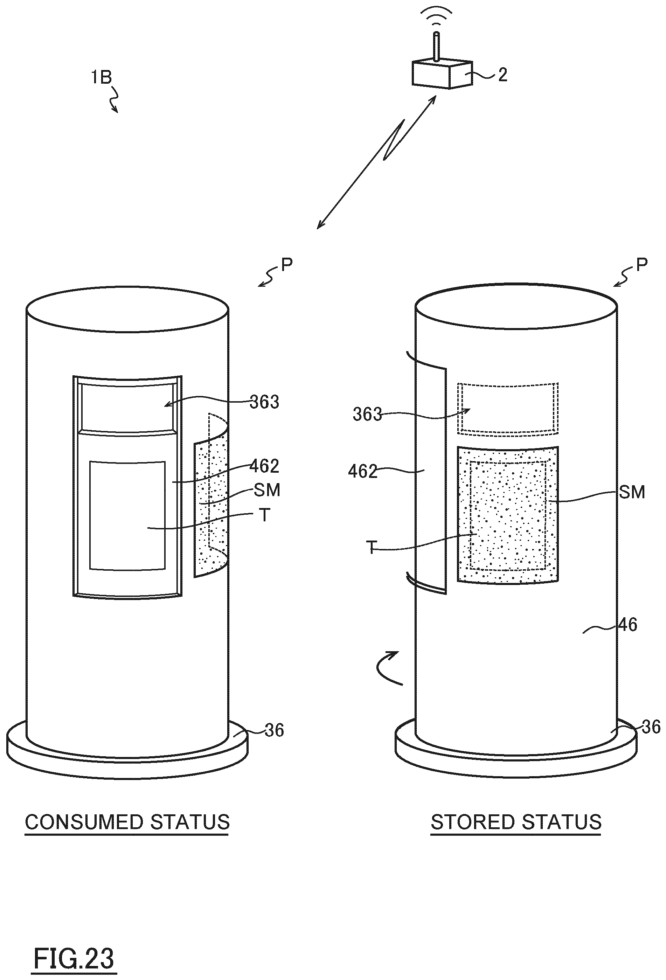

FIG. 23 illustrates an application example of a product management system 1B according to one embodiment.

Referring to FIG. 23, a product P includes a cylindrical container that contains contents inside.

In the consumed status in which the product P is consumed, an opening 363 of the product P is exposed, and the contents of the product P can be taken out. Meanwhile, in the stored status in which the product P is stored, a slide member 46 of the product P is rotated by a consumer so that the opening 363 can be closed.

An Internet-of-things (IoT) tag T (described below) is attached to the product P. In the consumed status of the product, the tag T is exposed. In the stored status of the product P, the tag T is shielded by a radio wave shield member SM.

As illustrated in FIG. 23, a wireless device 2 for wirelessly communicating with the IoT tag T attached to the product P is arranged near a location at which the product P is placed. As described below, the wireless device 2 is a gateway device that can communicate with a tag management server (described below) via a network. The wireless device 2 is arranged by taking into consideration a radio wave output of the IoT tag T (hereinafter, referred to simply as "tag T").

The maximum communication distance of the tag T is, but not limited to, a value in a range from 3 meters to 10 meters, for example. The tag T is configured to make wireless communication with low electric power consumption. Examples of a communication protocol for the tag T include Bluetooth (registered trademark) Low Energy (hereinafter, BLE), Bluetooth (registered trademark), and ZigBee (registered trademark). The following will describe an exemplified case where the communication is made by BLE.

When the tag T is based on the standard of BLE, the tag T broadcasts a packet at a predetermined interval (e.g., every short period in a range from approximately 1 second to approximately 10 seconds). The packet transmitted by the tag T includes the tag ID that is identification information of the tag. The wireless device 2 illustrated in FIG. 23 makes BLE communication with the tag T.

In one embodiment, as illustrated in FIG. 23, in the consumed status of the product P, the tag T is exposed, and thus, the tag T can wirelessly communicate with the wireless device 2. Meanwhile, in the stored status of the product P, the tag T is shielded by the radio wave shield member SM, and thus, the tag T cannot wirelessly communicate with the wireless device 2.

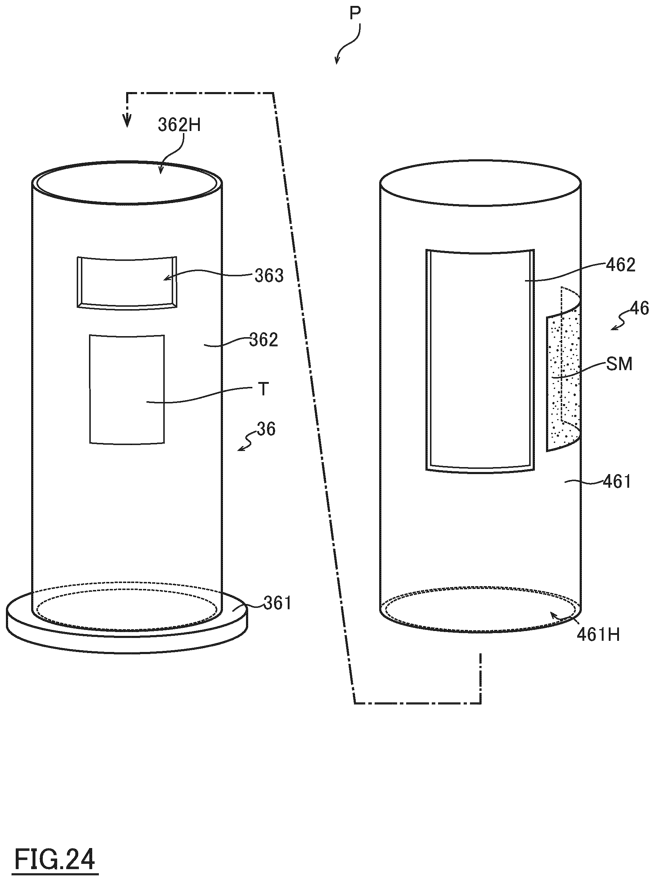

Next, a structure of the product P will be described with reference to FIG. 24.

The product P has a two-layer structure that includes a cylindrical container main body 36 and a cylindrical slide member 46. The container main body 36 accommodates the contents. The slide member 46 can slide on an outer periphery of the container main body 36. The container main body 36 and the slide member 46 are each formed of a resin material, for example.

The container main body 36 includes a base 361 at a bottom. The tag T is attached to an outer peripheral surface 362 of the container main body 36 by an adhesive, for example. The opening 363 (one example of the first opening) is formed on the outer peripheral surface 362 of the container main body 36. The container main body 36 has a cylindrical shape with the bottom. A content insertion hole 362H is formed on the container main body 36. The contents can be inserted or supplied through the content insertion hole 362H. The opening 363 for taking out the contents is formed on the outer peripheral surface 362.

The slide member 46 is a cylindrical member that includes a ceiling portion. The slide member 46 includes a hollow space 461H. An opening 462 (one example of the second opening) is formed on an outer peripheral surface 461 of the slide member 46. The radio wave shield member SM is attached to the outer peripheral surface 461 of the slide member 46 by an adhesive, for example.

The radio wave shield member SM is a sheet-shaped member. When close to the tag T, the radio wave shield member SM shields a radio wave emitted by the tag T. For example, a metal-deposited sheet can be used as the radio wave shield member SM. The metal-deposited sheet includes a transparent PET film, an aluminum vapor deposition layer (coating), and an adhesive that are layered on each other in this order. The metal-deposited sheet is attached to the outer peripheral surface 461 of the slide member 46 by the adhesive. A foil sheet may be used instead of the metal-deposited sheet. Instead of this, a metal plate, a radio wave absorbing sheet, or a sheet including a coating into which metal powder or magnetic powder is mixed can also be used.

In FIG. 24, the radio wave shield member SM is rectangular. However, there is no limitation to this. A shape of the radio wave shield member SM may be any shape as long as the radio wave shield member SM can shield a radio wave from the tag T when close to the tag T. For example, the radio wave shield member SM may be circular or polygonal. The openings 363 and 462 are not limited to rectangular ones illustrated in the drawings, and may each have an arbitrary shape.

The following will describe operation of the product management system 1B according to the one embodiment with reference to FIG. 23.

In a state where the product P is stored, the opening 363 of the product P is closed, and thus, the contents are reliably stored without leaking out of the product P. At this time, the radio wave shield member SM overlaps with the tag T over the peripheral direction of the product P, thereby shields a radio wave emitted from the tag T, and thus hinders the tag T from wirelessly communicating with the wireless device 2. When the tag T includes a communication antenna and a harvesting antenna as described below, the radio wave shield member SM preferably shields only the communication antenna.

A position of the slide member 46 in the stored status of the product P is one example of the first position.

When a consumer rotates the slide member 46 of the product P relative to the container main body 36, at least a part of the opening 363 of the container main body 36 is exposed through the opening 462 of the slide member 46. Thereby, the contents in the container main body 36 can be taken out from the opening 462 (i.e., the product P can be consumed). At this time, the radio wave shield member SM does not overlap with the tag T over the peripheral direction of the product P, does not shield a radio wave emitted from the tag T, and thereby allows the tag T to wirelessly communicate with the wireless device 2.

A position of the slide member 46 in the consumed status of the product P is one example of the second position.

The product management system 1B according to the one embodiment is configured in such a way that when a consumer consumes the product P, information concerning the consumed product P and a time point of the consuming can be automatically recorded.

In the example illustrated in FIG. 23, the tag T is attached to the outer peripheral surface 362 of the container main body 36, and the radio wave shield member SM is attached to the outer peripheral surface 42 of the slide member 46. For this reason, when the tag T and the radio wave shield member SM overlap with each other over the peripheral direction, the radio wave shield member SM covers the tag T from an outer side. Thus, a radio wave emitted by the tag T can be shielded more effectively. However, there is no limitation to this. The radio wave shield member SM may be attached to the outer peripheral surface 362 of the container main body 36, and the tag T may be attached to the outer peripheral surface 42 of the slide member 46. Also in this case, the similar operation can be made.

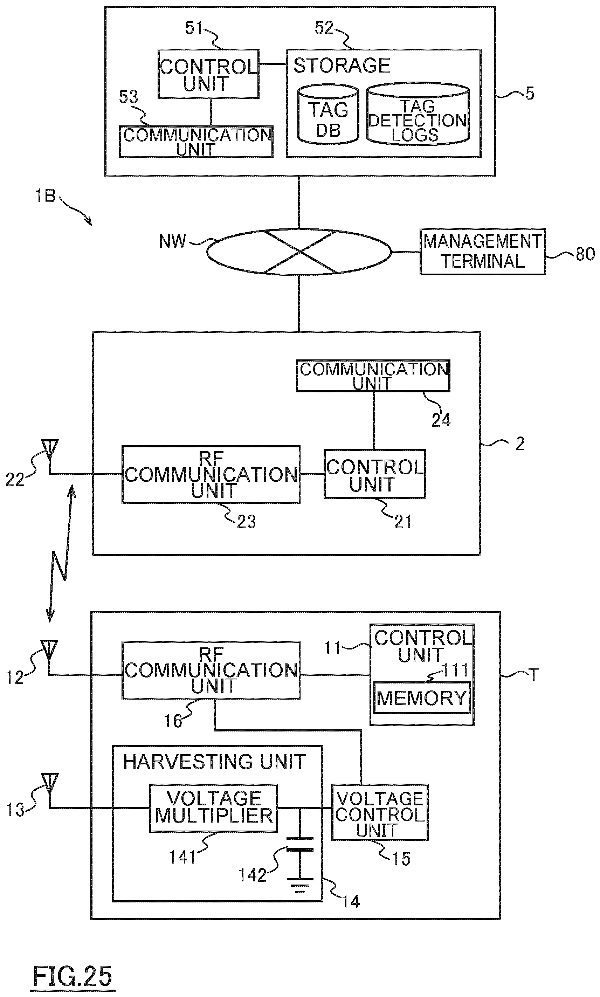

Next, a configuration of each device of the product management system 1B according to the one embodiment will be described with reference to FIG. 25.

FIG. 25 is a block diagram illustrating an internal configuration of each device in the product management system 1 of the present embodiment.

As illustrated in FIG. 25, the product management system 1B includes the tag T, the wireless device 2, the tag management server 5 (one example of the control device), and a management terminal 80. The wireless device 2 and the tag management server 5 can communicate with each other via the network NW. The tag management server 5 and the management terminal 80 can communicate with each other via the network NW. The network NW is, but not limited to, a local area network (LAN), a wide area network (WAN), a mobile communication network, the Internet, or the like, for example.

The wireless device 2 functions as a BLE wireless terminal that receives a packet from the tag T by the BLE communication. When the wireless device 2 receives a packet from each of the tags, the wireless device 2 transmits the tag ID included in the received packet to the tag management server 5.

When the tag T is in a state of being able to normally transmit a packet, the tag T transmits a packet at a predetermined interval. In response to this, the wireless device 2 also transmits the tag ID to the tag management server 5 at the predetermined interval.

The management terminal 80 is a terminal that acquires and displays information concerning consumed timings of each product P detected by the tag management server 5. However, the management terminal 80 is not essential in this system.

Referring to FIG. 25, the tag T includes a control unit 11, a communication antenna 12, a harvesting antenna 13, a harvesting unit 14, a voltage control unit 15, and an RF communication unit 16. The control unit 11, the harvesting unit 14, the voltage control unit 15, and the RF communication unit 16 are mounted in an IC chip.

The control unit 11 includes a microprocessor and a memory 111. The control unit 11 controls the entire tag T. The memory 111 is constituted by one or both of a random-access memory (RAM) and a read-only memory (ROM). The memory 111 stores programs executed by the microprocessor, and stores the tag ID that is identification information unique to the tag T.

The harvesting unit 14 harvests electric power from a radio wave (e.g., a radio wave generated by the surrounding wireless communication) that the harvesting antenna 13 receives from the surrounding environment. The harvesting unit 14 stores the harvested electric power in an internal capacitor 142. In the present embodiment, for example, the harvesting unit 14 includes a voltage multiplier 141 converting, into a DC voltage, a radio signal received by the harvesting antenna 13, and includes the capacitor 142 storing the DC voltage. The voltage multiplier 141 may be, but not limited to, a Dickson voltage multiplier circuit (charge pump), for example. The capacitor 142 may be one (i.e., an on-die capacitor) configured on the semiconductor chip, or may be one formed separately from the semiconductor chip.

Radio waves received by the harvesting antenna 13 for electric power generation are radio waves in a plurality of different frequency bands within a wide frequency band. Examples of such radio waves include radio waves generated by the wireless communication in the frequency bands used in mobile communication systems of what are called 3G to 5G and the like, radio waves generated by the wireless communication in the frequency bands used in the communication standards such as Bluetooth (registered trademark) and Wi-Fi (registered trademark), radio waves generated by the wireless communication in the 2.4-GHz band represented by the communication protocols such as ZigBee (registered trademark) and Thread, and radio waves generated by the wireless communication in the frequency bands (e.g., the 900-MHz band and the 13.56-MHz band) used in the RFID.

The harvesting antenna 13 is not limited to a single antenna. For example, the harvesting antenna 13 may be a dual antenna compatible with two frequency bands (e.g., the 900-MHz band (UHF band) and the 2.4-GHz band).

The voltage control unit 15 supplies an operation voltage to the control unit 11 and the RF communication unit 16. Preferably, the voltage control unit 15 monitors a voltage of the capacitor 142, and switches a power mode, depending on the monitored result.

For example, when a voltage of the capacitor 142 is lower than a predetermined value, the voltage control unit 15 sets the power mode to be a first mode of operating only the minimum circuitry. In this case, the control unit 11 and the RF communication unit 16 cease generation of a packet, transmission of a radio signal, and the like. When a voltage of the capacitor 142 becomes equal to or higher than the predetermined value by charging of the capacitor 142, the voltage control unit 15 sets the power mode to be a second mode of executing a normal processing routine. In this case, the control unit 11 and the RF communication unit 16 perform various pieces of processing including generation of a packet and transmission of a radio signal.

The RF communication unit 16 applies predetermined digital modulation (e.g., the Gaussian frequency shift keying (GFSK)) to a transmission-target packet (baseband signal). Then, the RF communication unit 16 applies orthogonal modulation to the digital-modulated packet, and sends the high-frequency signal (a signal in the 2.4-GHz frequency band in a case of BLE) to the communication antenna 12.

The communication antenna 12 transmits the high-frequency radio signal (packet) sent by the RF communication unit 16.

As illustrated in FIG. 25, the wireless device 2 includes a control unit 21, an antenna 22, an RF communication unit 23, and a communication unit 24.

The control unit 21 is constituted mainly by a microprocessor. The control unit 21 controls the entire wireless device 2. For example, when the control unit 21 acquires the tag ID from the packet received from the tag T, the control unit 21 controls the communication unit 24 to transmit the acquired tag ID to the tag management server 5.

The RF communication unit 23 demodulates the radio signal received by the antenna 22 from the tag T to convert the radio signal into the baseband signal. Then, the RF communication unit 23 applies predetermined digital demodulation to the baseband signal to receive the packet. In order to transmit a beacon signal from the antenna 22, the RF communication unit 23 applies orthogonal modulation to a baseband signal of a predetermined pattern, for example, and sends the orthogonal-modulated signal to the antenna 22.

The communication unit 24 functions as a communication interface for communicating with the tag management server 5.

As illustrated in FIG. 25, the tag management server 5 includes a control unit 51, a storage 52, and a communication unit 53, for example.

The control unit 51 is constituted mainly by a microprocessor. The control unit 51 controls the entire tag management server 5.

The storage 52 includes a large-scale storage device such as a hard disk drive (HDD). The storage 52 stores a tag database (tag DB). Although not specifically illustrated in the drawing, the tag database includes, in association with each other, the tag ID of the tag T, and a product code of the product P to which the tag T is attached.

The communication unit 53 functions as a communication interface for communicating with the wireless device 2 and the management terminal 80.

The control unit 51 executes a server program. Thereby, when the wireless device 2 receives packets transmitted by the respective tags T and including the tag IDs, the control unit 51 acquires, from the wireless device 2, the tag IDs included in the packets.

Each time the control unit 51 acquires the tag ID of any of the tags T from the wireless device 2, the control unit 51 refers to the tag database, thereby identifies the product code associated with the acquired tag ID, generates an image indicating the identified result, and transmits the generated image to the management terminal 80. The result that the tag ID has been acquired indicates that the product associated with the tag ID is being consumed.

The control unit 51 may determine whether the product is being consumed, based on a frequency at which the tag T transmits a signal (packet).

When the product is stored, so that the tag T is close to the radio wave shield member SM but does not sufficiently contact with the radio wave shield member SM, there is a case where radio waves emitted from the tag T are not completely shielded, and as a result, the wireless device 2 receives the signal from the tag T. In this case, the tag T emits a signal less frequently, and thus, the wireless device 2 also receives the signal from the tag T less frequently. In view of the above, when the tag T emits a signal less frequently, and as a result, a frequency at which the control unit 51 acquires the tag ID from the wireless device 2 is smaller than a predetermined threshold value, the control unit 51 determines that the associated product is stored.

The management terminal 80 is an information processing terminal used for observing consumed timings and a consumed frequency of each of the products. Examples of the management terminal 80 include a personal computer (PC), a tablet terminal, a smartphone, and the like.

The management terminal 80 displays the information (e.g., the information indicating that the wireless device 2 is malfunctioning) notified by the tag management server 5, and the image transmitted from the tag management server 5. The image transmitted from the tag management server 5 is, for example, an image including consumed timings and a consumed frequency of each of the products.

The management terminal 80 and the tag management server 5 communicate with each other by using the HTTPS, for example, but the communication protocol is not particularly limited. A web browser of the management terminal 80 displays a web page including the image transmitted from the tag management server 5.

As described above, the above-described product management system 1B is configured in such a way as to detect whether the slide member of the product including the container main body and the slide member has been rotated, based on whether communication is possible between the wireless device 2 and the tag T incorporated in the product. Thus, with a simple configuration, it can be detected that rotational operation has been performed on the product.

In one embodiment, when the slide member is located at the first position (the stored status in FIG. 23), the opening for taking out the contents of the container main body is closed, and when the slide member is located at the second position (the consumed status in FIG. 23) by being rotated, the opening for taking out the contents of the container main body is exposed. Accordingly, when the contents are accommodated in the container main body, a consumed state of the contents contained in the container main body can be recognized in real time, based on a detected result of whether the communication between the tag T and the wireless device 2 is possible. When a fixed amount of the contents is consumed at one time, a remaining amount of the contents can be predicted based on an actual record of the number of times (frequency) of consuming the contents. Since data of an actual consuming state of a consumer can be acquired, the data can be used for various purposes including a purpose for product marketing.

Although the embodiments of the item management system according to the present invention have been described above, the present invention is not limited to the above-described embodiments. The above-described embodiment can be variously improved or modified within a range that does not depart from the essence of the present invention.

In the above-described case of the example illustrated in FIG. 23, the tag T and the radio wave shield member SM are close to each other in the stored status of the product P (i.e., when the slide member 46 is located at the first position), and the tag ID and the radio wave shield member SM are separated from each other in the consumed status of the product P (i.e., when the slide member 46 is located at the second position). However, there is no limitation to this.

The product P may be configured in such a way that the tag T and the radio wave shield member SM are separated from each other in the stored status of the product P, and the tag ID and the radio wave shield member SM are close to each other in the consumed status of the product P.

The configuration illustrated in FIG. 23 has an advantage of being able to suppress a data amount of communication. In other words, generally, the product P is kept in a stored state for a long time. According to the configuration in FIG. 23, in the stored status, the tag T and the wireless device 2 are unable to communicate with each other. Thus, an entire data amount of communication between the tag T and the wireless device 2 can be suppressed.

### (5) Fifth Embodiment

Next, the fifth embodiment will be described.

A conventionally proposed item management system is one in which items are associated with wireless tags to manage stock of the items.

For example, Japanese Patent Application Laid-Open Publication No. 2009-242058 describes a stock management system that is constituted by IC tags, a reading device, and a movement device. The reading device reads signals from the IC tags attached to items placed on a shelf. Thereby, based on the read signals, the stock management system recognizes what items are placed on the shelf.

Incidentally, in a case of stock management and product supply at a store front in a retail store such as a supermarket, or in a case of supplying rolled paper for a large number of toilets in a commercial complex such as a shopping center, conventionally, a staff in charge visually checks the number of remaining items, and supplies items, depending on necessity. This work has a disadvantage in that a staff is needed and items are not supplied at an appropriate timing. In a case of attempting stock management by attaching an IC tag to each item as in the conventional stock management system, an IC tag needs to be attached to every product. As a result, the cost is undesirably increased.

In view of the above, an object of the present invention is to enable the number of remaining items to be recognized without attaching a communication device to the item.

The following will describe one embodiment of an item management system, an item management method, and an item detection instrument according to the present invention. Configurations described below are not limited to those in the drawings described by the brief description of the drawings.

A first aspect of the present invention provides an item management system in which when an item is removed from a plurality of items stacked in the vertical direction at a predetermined position, the item management system determines a quantity of the items remaining at the predetermined position. In the present disclosure, "item" means a tangible object such as a product, a manufactured item, a semi-manufactured item (an item at an intermediate stage in course of being manufactured), or a mock-up.

The item management system includes the following elements (E1) to (E5).
(E1) A detection tool that includes a movable member and a support member. The movable member is arranged in such a way as to move in the vertical direction each time the item at the predetermined position is removed. The support member supports the movable member in such a way as to be movable in the vertical direction.
(E2) At least one communication device that is attached to the support member.
(E3) A sheet-shaped radio wave shield member that is attached to the movable member. When the radio wave shield member is close to the communication device, the radio wave shield member shields a radio wave emitted by the communication device.
(E4) A wireless device that wirelessly communicates with the communication device.
(E5) A control device that acquires a result of whether the wireless device is able to communicate with the at least one communication device. The control device determines, based on the result, the number of the items remaining at the predetermined position.

In this system, each time the item arranged at the predetermined position is removed, the movable member of a detection tool moves downward in the vertical direction, accordingly resulting in a state where a radio wave emitted from each of at least one communication device is shielded or not shielded by the radio wave shield member.

For this reason, according to the first aspect of the present invention, the number of the items remaining at the predetermined position can be determined based on whether each communication device attached to the detection tool can communicate with the wireless device, without attaching communication devices to the items.

The radio wave shield member may be a member that changes a frequency of a radio wave emitted from the communication device to an unintended frequency at which the communication with the wireless device is impossible. The radio wave shield member may be a member that superimposes noise on a radio wave emitted from the communication device, in such a way as to inhibit communication with the wireless device.

According to a second aspect of the present invention, in the item management system of the first aspect, the at least one communication device is a plurality of communication devices arranged at the support member at an equal interval in the vertical direction. Each time the one item at the predetermined position is removed, the radio wave shield member moves. Thereby, the radio wave shield member becomes close to the plurality of communication devices one by one. The control device acquires a result of whether communication is possible between each of the plurality of communication devices and the wireless device.

According to the second aspect of the present invention, removal of one item can be detected.

According to a third aspect of the present invention, in the item management system of the first or second aspect, the detection tool includes an accommodation case that can accommodate the plurality of items. The accommodation case includes a taking-out opening formed for taking out the product present at the lowest position in the vertical direction, and a supply opening for supplying a new item.

According to a third aspect of the present invention, a first-in, first-out method (i.e., an item that is first put into the accommodation case is first taken out) for items can be implemented through the taking-out opening and the supply opening of the accommodation case.

According to a fourth aspect of the present invention, the item management system of any one of the first to third aspects further includes a reference communication device that is arranged at a position where a radio wave is not shielded by the radio wave shield member regardless of the number of the items remaining at the predetermined position. The wireless device communicates with the reference communication device. The control device acquires a result of whether the wireless device is able to communicate with the reference communication device.

According to the fourth aspect of the present invention, it can be determined whether the system is operating normally, by providing the reference communication device that can communicate with the wireless device regardless of whether the item has been removed from the predetermined position.

According to a fifth aspect of the present invention, in the item management system of any one of the first to fourth aspects, the communication device is a wireless tag that collects surrounding radio waves and converts the collected radio waves into electric power, and that includes a capacitor storing the electric power.

According to the fifth aspect of the present invention, the wireless tag is preferable from a standpoint of being usable for a long term without maintenance.

According to a sixth aspect of the present invention, in the item management system of any one of the first to fourth aspects, the communication device is a UHF-band wireless tag.

According to the sixth aspect of the present invention, the wireless tag is preferable from a standpoint of being widely available.

According to a seventh aspect of the present invention, in the item management system of any one of the first to fourth aspects, the communication device is an HF-band wireless tag. Such a wireless tag is preferable from a standpoint of being widely available.

According to an eighth aspect of the present invention, in the item management system of any one of the first to fourth aspects, the communication device is a microwave-band wireless tag. Such a wireless tag is preferable from a standpoint of being widely available.

According to a ninth aspect of the present invention, the item management system of any one of the first to eighth aspects includes an information processing device that can communicating with the control device. The information processing device displays the quantity of the items determined by the control device.

The ninth aspect of the present invention is preferable from a standpoint of enabling the number of the items remaining at the predetermined position to be visually recognized.

A different aspect of the present invention provides a method for determining a quantity of items remaining at a predetermined position by using a detection tool when an item is removed from a plurality of the items stacked in the vertical direction at the predetermined position. The detection tool includes a movable member and a support member. The movable member is arranged in such a way as to move in the vertical direction each time the item at the predetermined position is removed. The support member supports the movable member in such a way as to be movable in the vertical direction. A first communication device and a second communication device are attached to the support member in such a way as to be separated from each other in the vertical direction. A sheet-shaped radio wave shield member is attached to the movable member.

The item management method includes the following steps (S1) to (S3).
(S 1) The step of, when a quantity of the items remaining at the predetermined position is N (N ≥ 1), by the quantity, causing the first communication device and the radio wave shield member to be close to each other so that the radio wave shield member shields a radio wave emitted by the first communication device while the second communication device wirelessly communicates with a wireless device.
(S2) The step of, when a quantity of the items remaining at the predetermined position is N-1, by the quantity, causing the second communication device and the radio wave shield member to be close to each other so that the radio wave shield member shields a radio wave emitted by the second communication device while the first communication device wirelessly communicates with a wireless device.
(S3) The step of acquiring a result of whether communication with each of the first communication device and the second communication device by the wireless device is possible, and determining the quantity of the items remaining at the predetermined position, based on the result of whether the communication is possible.

According to the item management method of the different aspect of the present invention, a quantity of the items remaining at the predetermined position can be determined based on whether each of the communication devices attached to the detection tool can communicate with the wireless device, without attaching communication devices to the items.

A still different aspect of the present invention provides a detection tool for determining a quantity of items remaining at a predetermined position when an item is removed from a plurality of the items stacked in the vertical direction at the predetermined position.

The detection tool includes the following elements (E1) to (E4).
(E1) A movable member that is arranged in such a way as to move in the vertical direction each time the item at the predetermined position is removed.
(E2) A support member that supports the movable member in such a way as to be movable in the vertical direction.
(E3) At least one communication device that is attached to the support member.
(E4) A sheet-shaped radio wave shield member that is attached to the movable member. When the radio wave shield member is close to the communication device, the radio wave shield member shields a radio wave emitted by the communication device.

According to the still different aspect of the present invention, arranging the detection tool near the predetermined position where the items are arranged enables a quantity of the items remaining at the predetermined position to be determined without attaching communication devices to the items.

The following will describe an embodiment with reference to the drawings.

One example of items cited in the following description is products to be consumed one by one in a store. The products may be any products that can be stacked and arranged at a predetermined position. Examples cited as the products include a consumable product such as a rolled paper that is toilet paper arranged in a toilet of a store, and box-shaped products (e.g., for tea bags) stacked and displayed in a store.

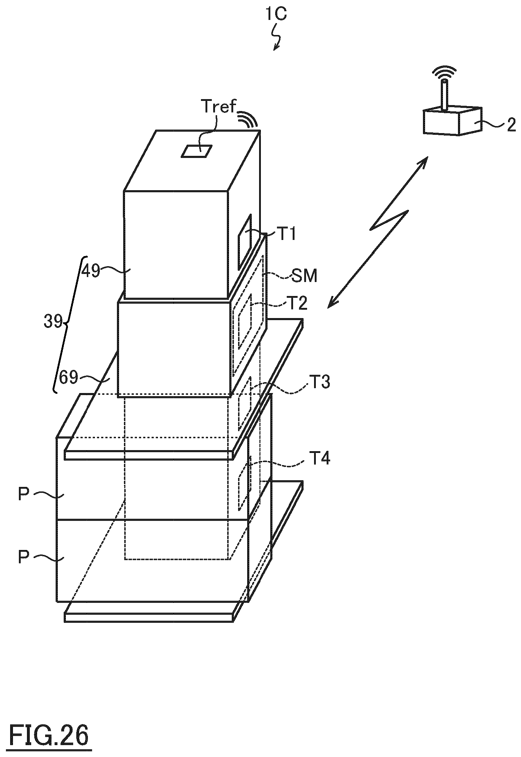

FIG. 26 illustrates an application example of a product management system 1C according to one embodiment. As illustrated in FIG. 26, the product management system 1C according to the one embodiment is configured in such a way that the products P are stacked at a predetermined position in a detection tool 39, and when the product P is removed, information concerning the removed (consumed) product P and a time point of the consuming can be automatically recorded.

Internet-of-things (IoT) tags T1 to T4 are attached to the detection tool 39. These IoT tags can wirelessly communicate with a wireless device 2 that is arranged near a location where the products P to be consumed are placed. The wireless device 2 is a gateway device that can communicate with a tag management server (described below) via a network. The wireless device 2 is arranged by taking into consideration radio wave outputs of the IoT tags T.

In the following description, the IoT tags are appropriately abbreviated to "tags", and are denoted as "tag T" when the tags T1 to T4 are commonly referred.

The maximum communication distance of the tag T is, but not limited to, a value in a range from 3 meters to 10 meters, for example. The tag T is configured to make wireless communication with low electric power consumption. Examples of a communication protocol for the tag T include Bluetooth (registered trademark) Low Energy (hereinafter, BLE), Bluetooth (registered trademark), and ZigBee (registered trademark). The following will describe an exemplified case where the communication is made by BLE.

When the tag T is based on the standard of BLE, the tag T broadcasts a packet at a predetermined interval (e.g., every short period in a range from approximately 1 second to approximately 10 seconds). The packet transmitted by the tag T includes the tag ID that is identification information of the tag. The wireless device 2 illustrated in FIG. 26 makes BLE communication with the tag T.

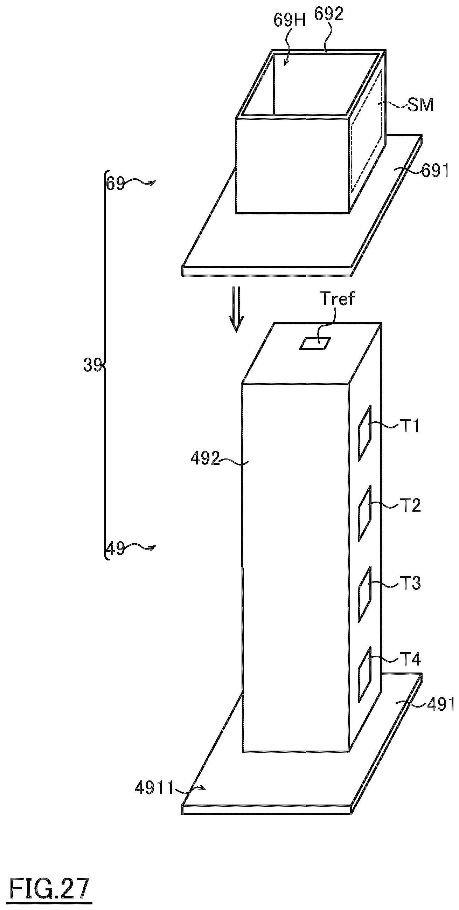

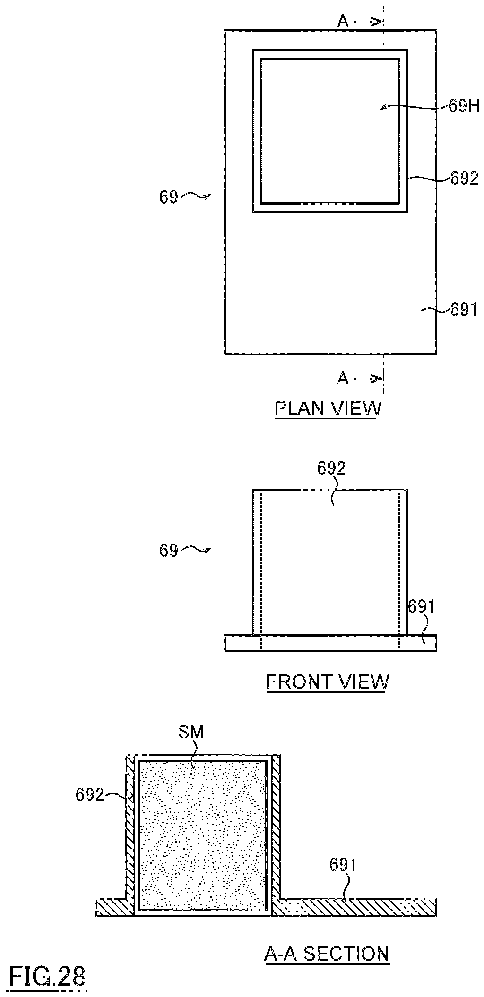

The following will describe a structure of the detection tool 39 with reference to FIG. 27 and FIG. 28.

FIG. 27 is an exploded perspective view of the detection tool 39. FIG. 28 includes a plan view, a front view, and an A-A sectional view of a movable member 69 of the detection tool 39.

As illustrated in FIG. 27, the detection tool 39 includes a pillar-shaped member 49 and the movable member 69.

The pillar-shaped member 49 includes a base 491 and a main body 492 that stands from the base 491. The base 491 includes an arrangement surface 4911 for arranging a plurality of the stacked products P. The arrangement surface 4911 corresponds to the predetermined position of the products P. The pillar-shaped member 49 is one example of the support member that supports the movable member 69 in such a way that the movable member 69 can move in the vertical direction.

The tags T1 to T4 are arranged on a side surface of the main body 492 at an equal interval in a standing direction of the pillar-shaped member 49. While a method for attaching the tags T1 to T4 to the pillar-shaped member 49 is not particularly limited, the tags T1 to T4 may be attached to the pillar-shaped member 49 by adhesives, for example. In one embodiment, a reference tag Tref (described below) is attached to a top surface of main body 492.

The movable member 69 includes a stopper 691 and a slide portion 692 that is attached to the stopper 691.

The slide portion 692 includes a hollow 69H. The movable member 69 is attached to the pillar-shaped member 49 in such a way that the main body 492 of the pillar-shaped member 49 is inserted into the hollow 69H. A shape of an opening of the hollow 69H is the same as a shape of a cross-section of the main body 492 taken along a horizontal plane. The opening of the hollow 69H is slightly larger than the cross-section of the main body 492 in such a way that the slide portion 692 of the movable member 69 can slide, in the vertical direction, on the main body 492 of the pillar-shaped member 49.

In the example illustrated in FIG. 27, the cross-section of the main body 492 taken along the horizontal plane is rectangular, and accordingly, a shape of the opening of the hollow 69H is also rectangular. However, there is no limitation to this. As long as the slide portion 692 can slide on the main body 492 in the vertical direction, a cross-section of the main body 492 taken along a horizontal plane and the opening of the hollow 69H can have any shape such as a circle, an ellipse, or an arbitrary polygon.

As illustrated in the A-A section in FIG. 28, a radio wave shield member SM is attached to an inner side surface of the slide portion 692. A position at which the radio wave shield member SM is attached is a position of facing the tag T on the pillar-shaped member 49 when the movable member 69 is attached to the pillar-shaped member 49.

The radio wave shield member SM is a sheet-shaped member. When close to the tag T, the radio wave shield member SM shields a radio wave emitted by the tag T. For example, a metal-deposited sheet can be used as the radio wave shield member SM. The metal-deposited sheet includes a transparent PET film, an aluminum vapor deposition layer (coating), and an adhesive that are layered on each other in this order. The metal-deposited sheet is attached to the inner side surface of the slide portion by the adhesive. A foil sheet may be used instead of the metal-deposited sheet. Instead of this, a metal plate, a radio wave absorbing sheet, or a sheet including a coating into which metal powder or magnetic powder is mixed can also be used.

In the illustrated example, the radio wave shield member SM has a rectangular shape. However, there is no limitation to this. The radio wave shield member SM may have any shape as long as the radio wave shield member SM can shield a radio wave from the tag T when the radio wave shield member SM overlaps with the tag T. When the tag T includes a communication antenna and a harvesting antenna as described below, the radio wave shield member SM preferably shields only the communication antenna.

The stopper 691 of the movable member 69 functions as a stopper for the movement of the movable member 69 in the vertical direction. The movable member 69 is positioned by the stopper 691 coming into contact with the product P at the highest position among the one or more products P stacked on the arrangement surface 4911. When no products P are present on the arrangement surface 4911, the stopper 691 comes in contact with the arrangement surface 4911. Thus, the movable member 69 is positioned in the vertical direction, depending on the number of the products P stacked on the arrangement surface 4911.

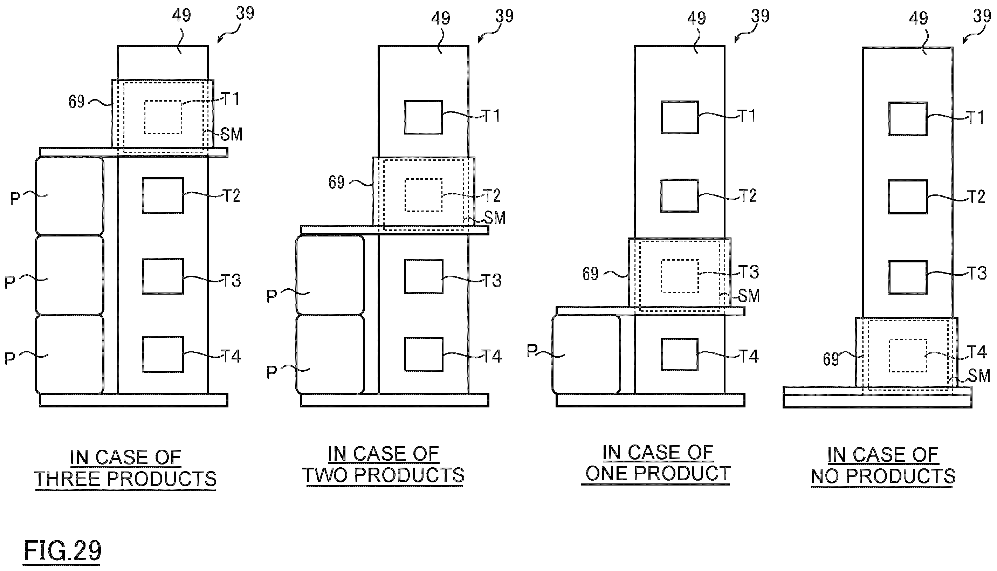

Next, operation of the product management system 1C will be described with reference to FIG. 29.

FIG. 29 illustrates the detection tool 39 viewed from a lateral side when the three products P are arranged on the arrangement surface 4911 of the pillar-shaped member 49, when the two products P are arranged on the arrangement surface 4911, when the one product P is arranged on the arrangement surface 4911, and when no products P are arranged on the arrangement surface 4911.

As illustrated in FIG. 29, as the number of the arranged products P decreases, the movable member 69 of the detection tool 39 slides along the pillar-shaped member 49 in the vertical direction.

Referring to FIG. 29, when the three products P are arranged on the arrangement surface 4911, the radio wave shield member SM of the movable member 69 is close to the tag T1, and thereby shields a radio wave from the tag T1 and does not shield radio waves emitted from the tags T2 to T4. Thus, the wireless device 2 cannot communicate with tag T1, but can communicate with tags T2 to T4.

When the one product P is consumed, and as a result, the two products P are arranged on the arrangement surface 4911, the radio wave shield member SM of the movable member 69 is close to the tag T2, and thereby shields a radio wave from the tag T2 and does not shield radio waves emitted from the tags T1, T3, and T4. Thus, the wireless device 2 cannot communicate with tag T2, but can communicate with tags T1, T3, and T4.

When the one product P is further consumed, and as a result, the one products P is arranged on the arrangement surface 4911, the radio wave shield member SM of the movable member 69 is close to the tag T3, and thereby shields a radio wave from the tag T3 and does not shield radio waves emitted from the tags T1, T2, and T4. Thus, the wireless device 2 cannot communicate with tag T3, but can communicate with tags T1, T2, and T4.

When the one product P is further consumed, and as a result, no products P are arranged on the arrangement surface 4911, the radio wave shield member SM of the movable member 69 is close to the tag T4, and thereby shields a radio wave from the tag T4 and does not shield radio waves emitted from the tags T1 to T3. Thus, the wireless device 2 cannot communicate with tag T4, but can communicate with tags T1 to T3.

A packet received by the wireless device 2 from the tag T includes a tag ID.

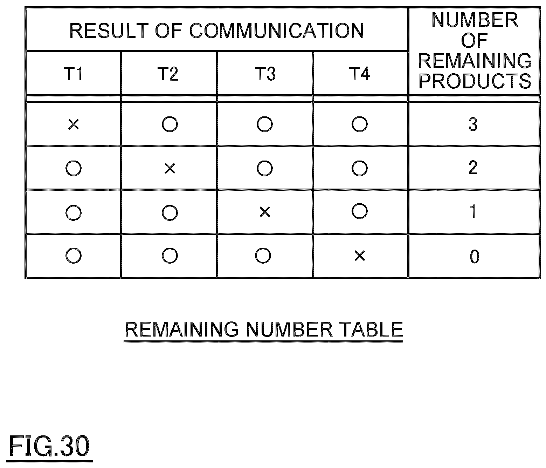

In a product management system 1C according to one embodiment, the wireless device 2 notifies a tag management server 5 (described later) of information that concerns a result of communication with each of the tags T by the wireless device 2. The information concerning the result of the communication with each of the tags T includes the tag IDs of the tags T with which the communication is possible. The tag management server 5 refers to a remaining number table illustrated in FIG. 30, and thereby determines the number (remaining number) of the products P remaining on the arrangement surface 4911.

Referring to FIG. 30, the remaining number table associates the remaining number of the products P with the result (communication is possible: "O"; communication is impossible: "X") of communication between each of the tags T1 to T4 and the wireless device 2.

As illustrated in FIG. 26 and FIG. 27, in one embodiment, the reference tag Tref is arranged at the pillar-shaped member 49 of the detection tool 39. The reference tag Tref is a tag for reference, and is a device having the same configuration as that of the tag T.

The reference tag Tref may be arranged at any location as long as the reference tag Tref can communicate with the wireless device 2 regardless of the number of the remaining products P. The reference tag Tref is provided for determining whether the wireless device 2 is operating normally.

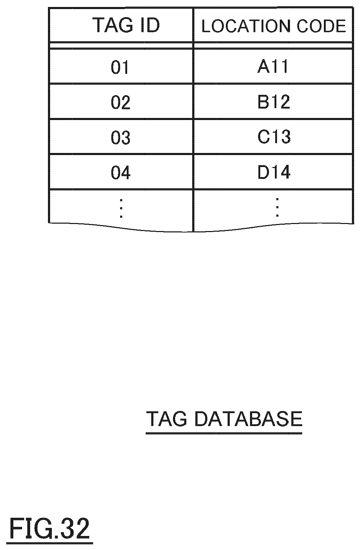

In one embodiment, as illustrated in a tag database (FIG. 32) described below, the tag ID of the reference tag Tref is associated with information of a location (i.e., a location where the detection tool 39 is arranged) where the products P are arranged. In other words, when the products P are arranged at a plurality of locations in a distributed manner, and in association with it, the detection tools 39 are arranged at a plurality of the locations in a distributed manner, the location of the detection tool 39 can be identified based on the tag ID of the reference tag Tref attached to the detection tool 39 at each of the locations. In this case, the wireless device 2 transmits, to the tag management server 5, the tag ID of the reference tag Tref and the tag IDs of the tags that are among the tags T1 to T4 and with which the wireless device 2 can communicate. Thereby, the tag management server 5 can determine the remaining number of the products P at each of a plurality of the locations.

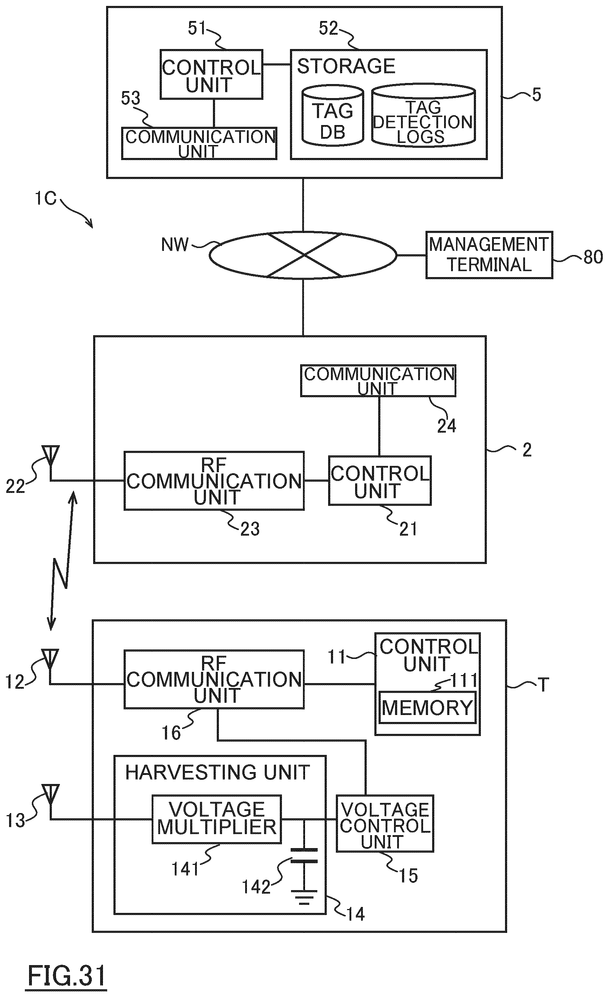

Next, a configuration of each device of the product management system 1C according to the one embodiment will be described with reference to FIG. 31.

FIG. 31 is a block diagram illustrating an internal configuration of each device in the product management system 1C of the present embodiment.

As illustrated in FIG. 31, the product management system 1C includes the tag T, the wireless device 2, the tag management server 5 (one example of the control device), and a management terminal 80. The wireless device 2 and the tag management server 5 can communicate with each other via the network NW. The tag management server 5 and the management terminal 80 can communicate with each other via the network NW. The network NW is, but not limited to, a local area network (LAN), a wide area network (WAN), a mobile communication network, the Internet, or the like, for example.

The wireless device 2 functions as a BLE wireless terminal that receives packets from the tags T and the reference tag Tref by the BLE communication. When the wireless device 2 receives a packet from each of the tags, the wireless device 2 transmits the tag ID included in the received packet to the tag management server 5.

When the tags T and the reference tag Tref are in a state of being able to normally transmit packets, the tags T and the reference tag Tref each transmit a packet at a predetermined interval. In response to this, the wireless device 2 also transmits the tag ID to the tag management server 5 at the predetermined interval.

The management terminal 80 is a terminal that acquires and displays information concerning consumed timings of each product P detected by the tag management server 5. However, the management terminal 80 is not essential in this system.

Referring to FIG. 31, the tag T includes a control unit 11, a communication antenna 12, a harvesting antenna 13, a harvesting unit 14, a voltage control unit 15, and an RF communication unit 16. The control unit 11, the harvesting unit 14, the voltage control unit 15, and the RF communication unit 16 are mounted in the IC chip. Although the following will describe the configuration of the tag T, the configuration of the reference tag Tref, which is not illustrated in FIG. 31, is the same as that of the tag T.

The control unit 11 includes a microprocessor and a memory 111. The control unit 11 controls the entire tag T. The memory 111 is constituted by one or both of a random-access memory (RAM) and a read-only memory (ROM). The memory 111 stores programs executed by the microprocessor, and stores the tag ID that is identification information unique to the tag T.

The harvesting unit 14 harvests electric power from a radio wave (e.g., a radio wave generated by the surrounding wireless communication) that the harvesting antenna 13 receives from the surrounding environment. The harvesting unit 14 stores the harvested electric power in an internal capacitor 142. In the present embodiment, for example, the harvesting unit 14 includes a voltage multiplier 141 converting, into a DC voltage, a radio signal received by the harvesting antenna 13, and includes the capacitor 142 storing the DC voltage. The voltage multiplier 141 may be, but not limited to, a Dickson voltage multiplier circuit (charge pump), for example. The capacitor 142 may be one (i.e., an on-die capacitor) configured on the semiconductor chip, or may be one formed separately from the semiconductor chip.

Radio waves received by the harvesting antenna 13 for electric power generation are radio waves in a plurality of different frequency bands within a wide frequency band. Examples of such radio waves include radio waves generated by the wireless communication in the frequency bands used in mobile communication systems of what are called 3G to 5G and the like, radio waves generated by the wireless communication in the frequency bands used in the communication standards such as Bluetooth (registered trademark) and Wi-Fi (registered trademark), radio waves generated by the wireless communication in the 2.4-GHz band represented by the communication protocols such as ZigBee (registered trademark) and Thread, and radio waves generated by the wireless communication in the frequency bands (e.g., the 900-MHz band and the 13.56-MHz band) used in the RFID.

The harvesting antenna 13 is not limited to a single antenna. For example, the harvesting antenna 13 may be a dual antenna compatible with two frequency bands (e.g., the 900-MHz band (UHF band) and the 2.4-GHz band).

The voltage control unit 15 supplies an operation voltage to the control unit 11 and the RF communication unit 16. Preferably, the voltage control unit 15 monitors a voltage of the capacitor 142, and switches a power mode, depending on the monitored result.

For example, when a voltage of the capacitor 142 is lower than a predetermined value, the voltage control unit 15 sets the power mode to be a first mode of operating only the minimum circuitry. In this case, the control unit 11 and the RF communication unit 16 cease generation of a packet, transmission of a radio signal, and the like. When a voltage of the capacitor 142 becomes equal to or higher than the predetermined value by charging of the capacitor 142, the voltage control unit 15 sets the power mode to be a second mode of executing a normal processing routine. In this case, the control unit 11 and the RF communication unit 16 perform various pieces of processing including generation of a packet and transmission of a radio signal.

The RF communication unit 16 applies predetermined digital modulation (e.g., the Gaussian frequency shift keying (GFSK)) to a transmission-target packet (baseband signal). Then, the RF communication unit 16 applies orthogonal modulation to the digital-modulated packet, and sends the high-frequency signal (a signal in the 2.4-GHz frequency band in a case of BLE) to the communication antenna 12.

The communication antenna 12 transmits the high-frequency radio signal (packet) sent by the RF communication unit 16.

As illustrated in FIG. 31, the wireless device 2 includes a control unit 21, an antenna 22, an RF communication unit 23, and a communication unit 24.

The control unit 21 is constituted mainly by a microprocessor. The control unit 21 controls the entire wireless device 2. For example, when the control unit 21 acquires the tag ID from the packet received from the tag T, the control unit 21 controls the communication unit 24 to transmit the acquired tag ID to the tag management server 5.

The RF communication unit 23 demodulates the radio signal received by the antenna 22 from the tag T to convert the radio signal into the baseband signal. Then, the RF communication unit 23 applies predetermined digital demodulation to the baseband signal to receive the packet. In order to transmit a beacon signal from the antenna 22, the RF communication unit 23 applies orthogonal modulation to a baseband signal of a predetermined pattern, for example, and sends the orthogonal-modulated signal to the antenna 22.

The communication unit 24 functions as a communication interface for communicating with the tag management server 5.

As illustrated in FIG. 31, the tag management server 5 includes a control unit 51, a storage 52, and a communication unit 53, for example.

The control unit 51 is constituted mainly by a microprocessor. The control unit 51 controls the entire tag management server 5.

The storage 52 includes a large-scale storage device such as a hard disk drive (HDD). The storage 52 stores the tag database (tag DB) and the remaining number table (refer to FIG. 30). As illustrated in FIG. 32, the tag database includes, in association with each other, the tag ID of the reference tag Tref, and a location code indicating the location where the detection tool 39 is arranged.

The communication unit 53 functions as a communication interface for communicating with the wireless device 2 and the management terminal 80.

The control unit 51 executes a server program. Thereby, when the wireless device 2 receives packets transmitted by the respective tags T and the reference tags Tref and including the tag IDs, the control unit 51 acquires, from the wireless device 2, the tag IDs included in the packets.

As illustrated in FIG. 26, the reference tag Tref is not shielded. Thus, unless the wireless device 2 is malfunctioning, the control unit 51 can acquire the tag ID of the reference tag Tref at the predetermined interval at which the reference tag Tref transmits a packet. When the control unit 51 cannot acquire the tag ID of the reference tag Tref at the predetermined interval, the control unit 51 determines that the wireless device 2 is malfunctioning, and notifies the management terminal 80 of the determined result.

The control unit 51 sequentially acquires, from the wireless device 2, information concerning a result of communication between the wireless device 2 and each of the tags T. The information concerning the result of the communication with each of the tags T includes the tag ID of the tag T with which the communication is possible. The control unit 51 refers to the remaining number table (FIG. 30), and thereby determines the remaining number of the products associated with a combination of the tags that are among the tags T1 to T4 and with which the communication is possible. In one embodiment, the control unit 51 associates, with the remaining number of the products, the location code identified from the tag ID of the reference tag Tref.

The control unit 51 generates an image that represents information of the remaining number of the products or information of the remaining number of the products at each of the locations. The control unit 51 transmits the generated image to the management terminal 80.

The management terminal 80 is an information processing terminal used for observing the remaining number of the respective products. Examples of the management terminal 80 include a personal computer (PC), a tablet terminal, a smartphone, and the like.

The management terminal 80 displays the image transmitted from the tag management server 5. This image includes the information of the remaining number of the products, or the information of the remaining number of the products at each of the locations.

The management terminal 80 and the tag management server 5 communicate with each other by using the HTTPS, for example, but the communication protocol is not particularly limited. A web browser of the management terminal 80 displays a web page including the image transmitted from the tag management server 5.

As described above, in the above-described product management system 1C, each time the product P arranged at the predetermined position is removed, the movable member 69 of the detection tool 39 moves downward in the vertical direction, accordingly resulting in a state where a radio wave emitted from each of a plurality of the tags T is shielded or not shielded by the radio wave shield member SM.

Thus, a quantity of the products P remaining at the predetermined position can be determined based on whether communication is possible between the wireless device 2 and each of the tags T attached to the detection tool 39, without attaching tags to the products P.

In the example illustrated in FIG. 26, the four tags T are arranged. However, the number of the tags is arbitrary. When a larger number of the products are stacked at the predetermined position, a larger number of the tags T may be accordingly arranged.

Meanwhile, even when a larger number of the products are stacked at the predetermined position, a larger number of the tags T do not necessarily need to be arranged. In a case where it is preferred to receive a notification when the number of the remaining products becomes a predetermined value regardless of the maximum number of the stacked products, one tag T may be arranged at a position associated with the predetermined value. For example, in a case where the maximum number of the products that can be stacked is 10, the remaining number table may be set in such a way as to enable a notification to be made when the remaining number of the products becomes 10, when the remaining number becomes 5, and when the remaining number becomes 1. In a case where the maximum number of the products that can be stacked is 10, and a timing of supplying the products is intended to be made recognizable, the remaining number table may be set in such a way as to enable a notification to be made when the remaining number of the products becomes equal to or smaller than 3 (i.e., when the remaining number is 3, when the remaining number is 2, when the remaining number is 1, and when the remaining number is 0).

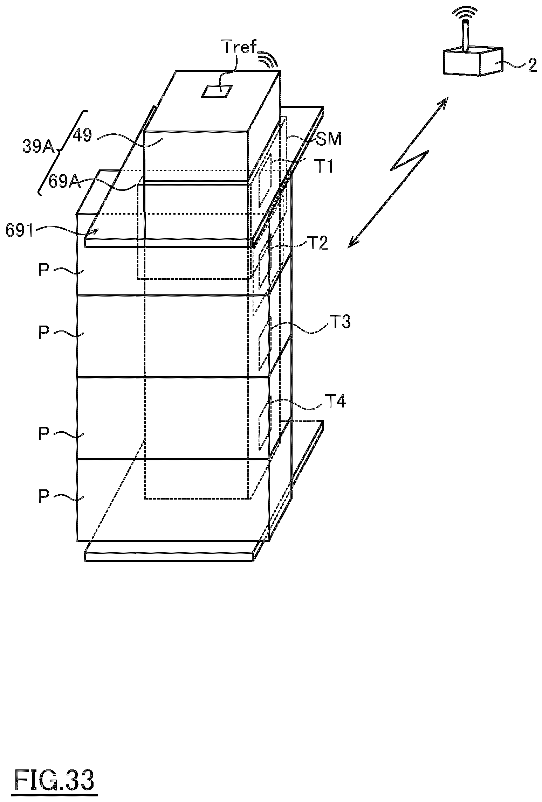

Next, a detection tool 39A according to one embodiment will be described with reference to FIG. 33.

FIG. 33 illustrates the detection tool 39A viewed in the same direction as that in FIG. 26. The detection tool 39A includes a movable member 69A. The movable member 69A has a shape that is roughly the same as that of the movable member 69 turned upside down from the posture illustrated in FIG. 26.

The movable member 69A differs from the movable member 69 in that the stopper 691 is provided at the uppermost end of the movable member 69A. However, the movable member 69A includes the radio wave shield member SM at the same position as that in the movable member 69.

The movable member 69A can slide along the pillar-shaped member 49 in the vertical direction. At this time, the stopper 691 of the movable member 69A is at the higher position. Thus, the detection tool 39A enables more products P to be arranged than the detection tool 39. The maximum number of the products P that can be arranged at the detection tool 39 illustrated in FIG. 26 is three, and meanwhile, the maximum number of the products P that can be arranged at the detection tool 39A is four as illustrated in FIG. 33.

When the detection tool 39Aillustrated in FIG. 33 is applied, the remaining number table (FIG. 30) needs to be changed to one suitable for the detection tool 39A. For example, in the remaining number table associated with the detection tool 39A, when respective results of communication of the tags T1, T2, T3, and T4 with the wireless device 2 are "X", "O", "O", and "O", the remaining number of the products is "4."

In one embodiment, the detection tool 39 and 39A each include an accommodation case 391.

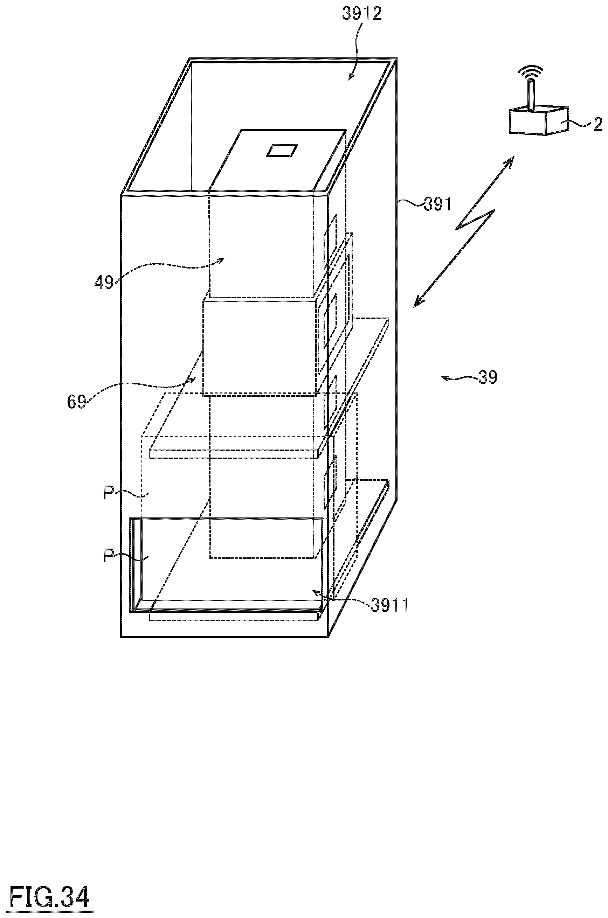

FIG. 34 illustrates, as one example, the detection tool 39 that includes the accommodation case 391. The accommodation case 391 illustrated in FIG. 34 has a shape of a hollow rectangular parallelepiped. A taking-out opening 3911 and a supply opening 3912 are formed on the accommodation case 391.

The pillar-shaped member 49, the movable member 69, and the products P illustrated in FIG. 26 are arranged inside the accommodation case 391.

The taking-out opening 3911 is an opening for taking out the product P that are among the one or more stacked products P and that is at the lowest position. A size of the taking-out opening 3911 is set in such a way as to enable the one product to be taken out.

The supply opening 3912 is an opening for supplying the new product P. In order to supply the new products P, the movable member 69 is slid upward along the pillar-shaped member 49 to be taken out from the supply opening 3912, and the product P is then inserted through the supply opening 3912. After all the products P are thus inserted, the movable member 69 is again connected to the pillar-shaped member 49 through the supply opening 3912.

Providing such an accommodation case 391 can implement a first-in, first-out method for the products P. In other words, the product P that is first inserted into the accommodation case 391 is first taken out from the taking-out opening 3911. For this reason, when the product P has a consuming time limit, the configuration can be made in such a way that the product P having an earlier consuming time limit is consumed earlier.

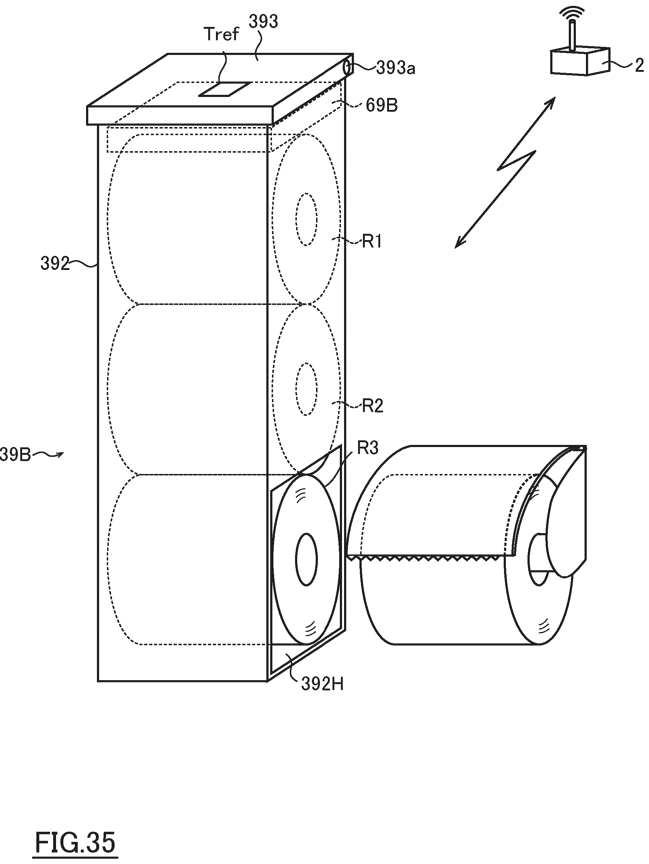

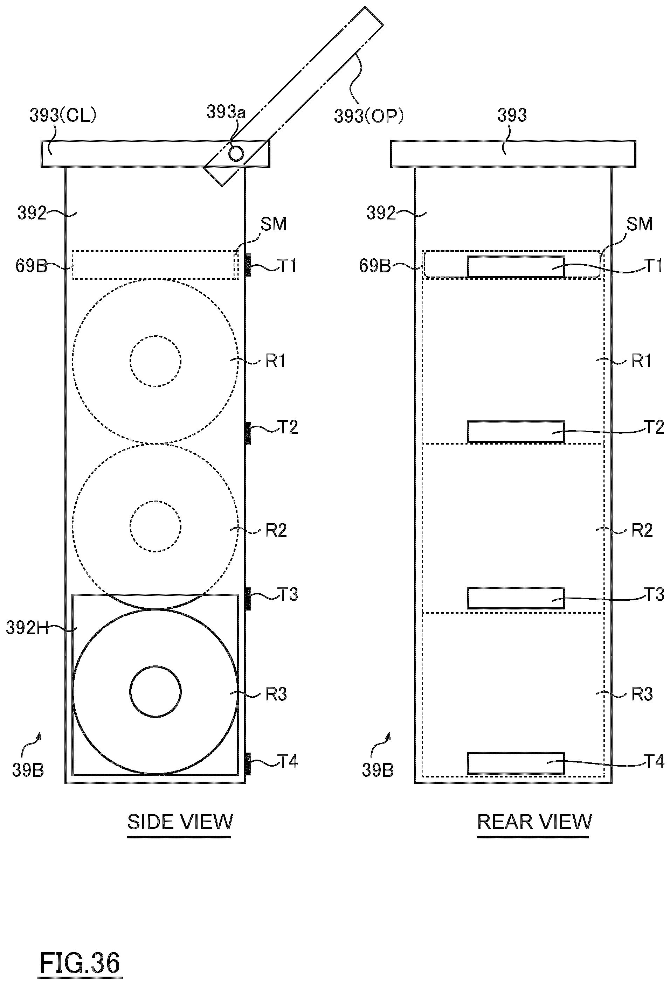

Next, an embodiment of a detection tool that does not use the pillar-shaped member will be described with reference to FIG. 35 and FIG. 36.

FIG. 35 illustrates an application example of a product management system including a detection tool 39B that does not include the pillar-shaped member. FIG. 36 includes a side view and a rear view of the detection tool 39B illustrated in FIG. 35.

In the product management system illustrated in FIG. 35, the product P is assumed to be rolled paper as toilet paper. The detection tool 39B and the wireless device 2 are arranged in a toilet. The product management system determines the number of pieces of the remaining rolled paper in the toilet.

As illustrated in FIG. 35, the detection tool 39B includes an accommodation case 392 and a cover 393. The accommodation case 392 can accommodate a predetermined number (three in the illustrated example) of pieces of the rolled paper. The cover 393 is coupled to the accommodation case 392 in such a way as to be swingable around an axis 393a. As illustrated in FIG. 36, the cover 393 is swingable between a closing position ("393 (CL)" in FIG. 36) and an opening position ("393 (OP)" in FIG. 36). When the cover 393 is located at the opening position, the rolled paper can be supplied into the accommodation case 392. In one example, the accommodation case 392 is made of resin.

A taking-out opening 392H is formed on a side surface of the detection tool 39B. The taking-out opening 392H is provided for taking out the rolled paper R3 that is among three pieces of the rolled paper R1 to R3 accommodated in the accommodation case 392 and that is at the lowest position

A movable member 69B is arranged on the rolled paper (the rolled paper R1 in FIG. 36) that is among pieces of the rolled paper accommodated in the accommodation case 392 and that is at the highest position. The movable member 69B is a member having a roughly rectangular parallelepiped shape. The movable member 69B has a section that is taken along a horizontal plane and that is slightly smaller than an opening of the accommodation case 392 when the cover 393 is located at the opening position. Each time one piece of the rolled paper is taken out from the taking-out opening 392H, the movable member 69B moves downward in the vertical direction, together with the rolled paper inside the accommodation case 392.

Here, the movable member 69B moves downward in the vertical direction while being supported by an inner surface of the accommodation case 392. In other words, the accommodation case 392 is one example of the support member that supports the movable member 69B in such a way that the movable member 69B can move in the vertical direction.

As illustrated in FIG. 36, the rectangular radio wave shield member SM is attached to a rear surface of the movable member 69B. The tags T1 to T4 are attached to a rear surface of the accommodation case 392 at an equal interval, depending on a height of the rolled paper.

As illustrated in FIG. 36, when the three pieces of the rolled paper R1 to R3 are accommodated in the accommodation case 392, the movable member 69B is arranged in such a way that the radio wave shield member SM is located to be close to the tag T1. Thus, a radio wave from the tag T1 is shielded, but radio waves emitted from the tags T2 to T4 are not shielded. For this reason, the wireless device 2 cannot communicate with the tag T1, but can communicate with the tags T2 to T4.

When the rolled paper R3 is taken out from the accommodation case 392 and the two pieces of the rolled paper R1 and R2 are accommodated in the accommodation case 392, the movable member 69B moves in such a way that the radio wave shield member SM is located to be close to the tag T2, which is not illustrated in the drawing. Thus, a radio wave from the tag T2 is shielded, but radio waves emitted from the tags T1, T3, and T4 are not shielded. For this reason, the wireless device 2 cannot communicate with the tag T2, but can communicate with the tags T1, T3, and T4.

When the rolled paper R2 is further taken out from the accommodation case 392 and the one piece of the rolled paper R1 is accommodated in the accommodation case 392, the movable member 69B moves in such a way that the radio wave shield member SM is located to be close to the tag T3. Thus, a radio wave from the tag T3 is shielded, but radio waves emitted from the tags T1, T2, and T4 are not shielded. For this reason, the wireless device 2 cannot communicate with the tag T3, but can communicate with the tags T1, T2, and T4.

When the rolled paper R1 is further taken out from the accommodation case 392 and no pieces of the rolled paper are accommodated in the accommodation case 392, the movable member 69B moves in such a way that the radio wave shield member SM is located to be close to the tag T4. Thus, a radio wave from the tag T4 is shielded, but radio waves emitted from the tags T1 to T3 are not shielded. For this reason, the wireless device 2 cannot communicate with the tag T4, but can communicate with the tags T1 to T3.

Also in the case of the detection tool 39B, similarly to the detection tool 39, an unillustrated tag management server refers to the remaining number table, and thereby determines the number of the remaining pieces of the rolled paper in the accommodation case 392. In the configuration example illustrated in FIG. 36, the same remaining number table as that in FIG. 30 can be applied.

Preferably, a groove-shaped guide portion is provided in the accommodation case 392, and the movable member arranged in a state of engaging with the guide portion in such a way that the movable member stably moves inside the accommodation case 392 (i.e., the movable member 69B moves in a state of being substantially parallel to a horizontal plane)

A product management method (one example of an item management method) according to one embodiment is a method for determining a quantity of the products P remaining on the arrangement surface 4911 by using the detection tool 39 when the product P is removed from a plurality of the products P stacked in the vertical direction at the predetermined position.

The product management method includes the following steps (S1) to (S3). At the respective steps, a combination of the tags T1 and T2, a combination of tags T2 and T3, and a combination of tags T3 and T4 in FIG. 27 are respective examples of a combination of a first communication device and a second communication device.
(S1) The step of, when a quantity of the products P remaining at the predetermined position is N (N ≥ 1), by the quantity, causing the first communication device and the radio wave shield member SM to be close to each other so that the radio wave shield member SM shields a radio wave emitted by the first communication device while the second communication device wirelessly communicates with the wireless device 2.
(S2) The step of, when a quantity of the products P remaining at the predetermined position is N-1, by the quantity, causing the second communication device and the radio wave shield member SM to be close to each other so that the radio wave shield member SM shields a radio wave emitted by the second communication device while the first communication device wirelessly communicates with the wireless device 2.
(S3) The step of acquiring a result of whether communication with each of the first communication device and the second communication device by the wireless device 2 is possible, and determining a quantity of the products P remaining at the predetermined position, based on the result of whether the communication is possible.

Although the embodiments of the item management system, the item management method, and the detection tool according to the present invention are described above, the present invention is not limited to the above-described embodiments. The above-described embodiments can be variously improved or modified within a range that does not depart from the essence of the present invention.

In the above-described case of each of the above-described embodiments, the communication device is the IoT tag that collects surrounding radio waves and converts the collected radio waves into electric power, and that includes the capacitor storing the electric power. However, there is no limitation to this. The communication device may be an RFID tag that operates in the UHF band, the HF band, or the microwave band. In each of these cases, the RFID tag may be a passive type (one that does not include an incorporated battery) or an active type (one that includes an incorporated battery).

In each of the above-described embodiments, a radio wave absorbing body that absorbs a radio wave emitted from the tag T can also be used as the above-described radio wave shield member SM.

The radio wave absorbing body is not particularly limited. Examples of the radio wave absorbing body include a body (that includes foaming polystyrene as a base material and uses ohmic loss of carbon) formed of a combination of carbon and foaming polystyrene, a body (that uses magnetic loss of ferrite) formed of a combination of ferrite and an inorganic material, a body formed of a combination of carbon and foaming polyethylene, a body (e.g., formed of a mixture of synthetic rubber and ferrite powder, or a mixture of synthetic rubber and carbonyl iron powder) formed of a combination of a magnetic material and synthetic rubber, a ferrite sintered body, a body formed of a combination of glass cloth reinforced aluminum foil and an electrically conductive adhesive layer, and a body including a layer of a dielectric material.

## Claims

1. An item management system that detects presence or absence of an item, comprising:
a swing member that is swingable, around a predetermined axis, between a first position and a second position, the swing member being located at the first position when the item is absent on a reference surface, the swing member being located at the second position when the item is present on the reference surface;
a torque generation member that generates torque of swinging the swing member from the second position toward the first position;
a communication device;
a sheet-shaped radio wave shield member configured to shield a radio wave emitted from the communication device when the radio wave shield member is close to the communication device;
a wireless device that wirelessly communicates with the communication device; and
a control device that acquires a result of whether the wireless device is able to communicate with the communication device, and determines, based on the result, whether the item is present on the reference surface, wherein
one of the communication device and the radio wave shield member is attached to the swing member, and
when the swing member is located at the first position, the communication device and the radio wave shield member are not close to each other, and when the swing member is located at the second position, the communication device and the radio wave shield member are close to each other.

2. The item management system according to claim 1, wherein
the swing member includes:
an elongated main body to which the axis is coupled; and
a protrusion attached to the main body, the protrusion protruding from the reference surface upward in a vertical direction when the swing member is located at the first position, and
when the item is placed on the reference surface, the protrusion is pushed down to the reference surface so that the swing member swings up to the second position.

3. The item management system according to claim 2, wherein
one of the communication device and the radio wave shield member is attached to the main body of the swing member.

4. The item management system according to claim 2, wherein
one of the communication device and the radio wave shield member is attached to the protrusion of the swing member.

5. The item management system according to claim 2, wherein
the protrusion includes a curved surface that is convex upward in the vertical direction.

6. The item management system according to claim 1, further comprising:
an item placement member that is formed so that the reference surface is inclined relative to a horizontal plane or a vertical plane, wherein
the item placement member includes a restriction plate standing and extending from the reference surface, the restriction plate restricts the item from moving due to an own weight of the item when the item is present on the reference surface,
another of the communication device and the radio wave shield member is attached to the restriction plate, and
when the item is present on the reference surface, the swing member swings up to the second position, with movement of the item toward the restriction plate, so that a part of the swing member becomes close to the restriction plate.

7. The item management system according to any one of claims 1 to 6, wherein
the torque generation member includes a weight provided at the swing member.

8. The item management system according to any one of claims 1 to 6, wherein
the torque generation member includes a torsion spring provided between the axis and the swing member.

9. The item management system according to any one of claims 1 to 6, further comprising:
a reference communication device that is arranged at a position where a radio wave is not shielded by the radio wave shield member regardless of whether the item is present on the reference surface, wherein
the wireless device communicates with the reference communication device, and
the control device acquires a result of whether the wireless device is able to communicate with the reference communication device.

10. The item management system according to any one of claims 1 to 6, wherein
the communication device is a wireless tag that collects surrounding radio waves and converts the collected radio waves into electric power, the wireless tag including a capacitor storing the electric power.

11. The item management system according to any one of claims 1 to 6, wherein
the communication device is a UHF-band wireless tag.

12. The item management system according to any one of claims 1 to 6, wherein
the communication device is an HF-band wireless tag.

13. The item management system according to any one of claims 1 to 6, wherein
the communication device is a microwave-band wireless tag.

14. An item management method comprising:
arranging an item detection instrument that includes a swing member and a torque generation member, the swing member being swingable, around a predetermined axis, between a first position and a second position, wherein one of a communication device and a radio wave shield member is attached to the swing member, and the torque generation member generates torque of swinging the swing member from the second position toward the first position;
causing the item to be present on a reference surface, so that the swing member is located on the second position, the communication device and the radio wave shield member are close to each other, and thereby a radio wave emitted from the communication device is shielded;
removing the item from the reference surface, so that the swing member swings from the second position to the first position, the communication device and the radio wave shield member are separated from each other, and thereby a radio wave emitted from the communication device is not shielded;
acquiring a result of whether the wireless device is able to communicate with the communication device; and
determining, based on the result, whether the item is present on the reference surface.

15. An item detection instrument for detecting an item, comprising:
a swing member that is swingable, around a predetermined axis, between a first position and a second position, the swing member being located at the first position when the item is absent on a reference surface, the swing member being located at the second position when the item is present on the reference surface;
a torque generation member that generates torque of swinging the swing member from the second position toward the first position;
a communication device; and
a sheet-shaped radio wave shield member configured to shield a radio wave emitted from the communication device when the radio wave shield member is close to the communication device, wherein
one of the communication device and the radio wave shield member is attached to the swing member, and
when the swing member is located at the first position, the communication device and the radio wave shield member are not close to each other, and when the swing member is located at the second position, the communication device and the radio wave shield member are close to each other.
